(19) Europäisches Patentamt
European Patent Office
Office européen des brevets

(11) **EP 3 739 944 B1**

(12) **EUROPEAN PATENT SPECIFICATION**

(45) Date of publication and mention
of the grant of the patent:
**24.05.2023 Bulletin 2023/21**

(21) Application number: **18906579.0**

(22) Date of filing: **13.02.2018**

(51) International Patent Classification (IPC):
**H04W 28/00** (2009.01)      **H04W 72/04** (2023.01)
**H04L 5/00** (2006.01)

(52) Cooperative Patent Classification (CPC):
**H04L 5/0094; H04L 5/003; H04W 8/04;**
H04W 72/23

(86) International application number:
**PCT/CN2018/076773**

(87) International publication number:
**WO 2019/157679 (22.08.2019 Gazette 2019/34)**

(54) **INFORMATION INDICATION METHOD AND RELATED DEVICE**

INFORMATIONSANZEIGEVERFAHREN UND ZUGEHÖRIGE VORRICHTUNG

PROCÉDÉ D'INDICATION D'INFORMATIONS ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.11.2020 Bulletin 2020/47**

(73) Proprietor: **HUAWEI TECHNOLOGIES CO., LTD.**
**Shenzhen, Guangdong 518129 (CN)**

(72) Inventors:
• **ZHAO, Yue**
**Shenzhen, Guangdong 518129 (CN)**
• **YU, Zheng**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2018/000712    CN-A- 106 911 999**
**CN-A- 107 196 735**

• **QUALCOMM INCORPORATED: "Increased
PUSCH spectral efficiency", 3GPP DRAFT;
R1-1720420, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE , vol. RAN
WG1, no. Reno, USA; 20171127 - 20171201 18
November 2017 (2017-11-18), XP051369983,
Retrieved from the Internet:
URL:http://www.3gpp.org/ftp/tsg%5Fran/WG1%
5FRL1/TSGR1%5F91/Docs/ [retrieved on
2017-11-18]**
• **"3 Generation Partnership Project; Technical
Specification Group Radio Access Network;
Evolved Universal Terrestrial Radio Access
(E-UTRA); Multiplexing and channel coding
(Release 15)", 3GPP STANDARD; TECHNICAL
SPECIFICATION; 3GPP TS 36.212, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. V15.0.1, 16
January 2018 (2018-01-16), pages 1-214,
XP051392692, [retrieved on 2018-01-16]**

EP 3 739 944 B1

- QUALCOMM INCORPORATED: "Increased PUSCH spectral efficiency", 3GPP DRAFT; R1-1718138 INCREASED PUSCH SPECTRAL EFFICIENCY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czechia ;20171009 - 20171013 8 October 2017 (2017-10-08), XP051341320, Retrieved from the Internet: URL:http://www.3gpp.org/ftp/Meetings_3GPP_ SYNC/RAN1/Docs/ [retrieved on 2017-10-08]
- SAMSUNG: "Discussion on sub-PRB allocation for eFeMTC", 3GPP DRAFT; R1-1720263, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051369894, Retrieved from the Internet: URL:http://www.3gpp.org/ftp/tsg%5Fran/WG1% 5FRL1/TSGR1%5F91/Docs/ [retrieved on 2017-11-18]

## Description

### TECHNICAL FIELD

This application relates to the field of communications technologies, and in particular, to a resource allocation method and a related device.

### BACKGROUND

Machine type communication (machine type communication, MTC) means that various devices having specific sensing, computing, execution, and communication capabilities are deployed to obtain information about a physical world, and information transmission, coordination, and processing are implemented through a network, to implement interconnection between people and things and interconnection between things and things. Currently, Rel (release)-12, Rel-13, Rel-14, and Rel-15 of long term evolution (long term evolution, LTE) can support MTC services.

In an LTE system, a resource is divided into subcarriers in frequency domain, and is divided into subframes in time domain. One subframe includes two slots. When a subcarrier spacing is 15 kHz, one physical resource block (physical resource block, PRB) includes 12 subcarriers in frequency domain, and includes one slot in time domain.

In LTE Rel-13, user equipment (user equipment, UE) that can support an MTC service is bandwidth-reduced low-complexity UE (bandwidth-reduced low-complexity UE, BL UE) or coverage enhancement UE (coverage enhancement UE, CE UE). The UE can support a maximum of 1.4 MHz transmit/receive bandwidth, including a narrowband. One narrowband includes a frequency width of six consecutive PRBs in frequency domain.

In LTE Rel-13, two coverage enhancement modes are provided for the coverage enhancement UE: a coverage enhancement mode A (CE mode A) used for a relatively small coverage enhancement degree and a coverage enhancement mode B (CE mode B) used for a relatively large coverage enhancement degree. To enable the MTC to support a higher data rate, in LTE Rel-14, a bandwidth that is used to transmit service data and that can be supported by the UE performing the MTC service is extended. In the CE mode A, a bandwidth of a physical uplink shared channel (physical uplink shared channel, PUSCH) supported by the UE is extended to 5 MHz. The PUSCH is used to carry uplink data of the UE.

In the LTE system, a frequency domain resource used by the PUSCH is allocated by using downlink control information (downlink control Information, DCI). The DCI is sent by a base station to the UE. For the BL/CE UE, the DCI is carried on a machine type communication physical downlink control channel (MTC physical downlink control channel, MPDCCH). In Rel-14 and earlier releases, a minimum of one resource block is allocated to the PUSCH during resource allocation. To improve spectral efficiency of the PUSCH, allocating a resource fewer than 12 subcarriers to the PUSCH is one of effective technical means that may be used.

In Rel-14 and the earlier releases, resource allocation information in the DCI carried on the MPDCCH can only indicate that a granularity of resource allocation is one PRB. To enable the DCI carried on the MPDCCH to indicate resource allocation of fewer than 12 subcarriers, a new resource allocation method needs to be designed. The 3GPP draft R1-1720420 "Increased PUSCH spectral efficiency" by Qualcomm Inc., 18 November 2017 describes techniques for supporting sub-PRB allocation for PUSCH by focusing on CE ModeB. A joint resource block and subcarrier indication field having five bits is defined, wherein the definition supports 16 states comprising three subcarriers, eight states comprising six subcarriers, six states comprising one resource block, and two states comprising two resource blocks. The 3GPP standard TS 36.212 of the Technical Specification Group Radio Access Network; Evolved Universal Terrestrial Radio Access (E-UTRA); Multiplexing and channel coding (Release 15)," vol. RAN WG1, no. V15.0.1, 16 January 2018, specifies the coding, multiplexing, and mapping to physical channels for E-EUTRA.
The 3GPP draft R1-1718138 "Increased PUSCH spectral efficiency" by Qualcomm Inc., RAN WG1, 8 October 2017, describes techniques for supporting sub-PRB allocation for PUSCH in eMTC. A joint resource block and subcarrier indication field having six bits is defined, wherein the definition supports 24 states comprising three subcarriers, 12 states comprising six subcarriers, six states comprising one resource block, and five states comprising two resource blocks, four states comprising three resource blocks, three states comprising four resource blocks, two states comprising five resource blocks, and one state comprising six resource blocks.
The 3GPP draft R1-1720263 "Discussion on sub-PRB allocation for eFeMTC" by Samsung, RAN WG1, 18 November 2017 describes techniques for supporting sub-PRB allocation for eFeMTC. A joint resource block and subcarrier indication field having six bits is defined, wherein the definition supports 24 states comprising three subcarriers, 12 states comprising six subcarriers, six states comprising one resource block, and three states comprising two resource blocks.

### SUMMARY

Embodiments of the present invention disclose a resource allocation method and a related device, so that resource allocation information in DCI can support resource allocation of fewer than 12 subcarriers.

The invention is defined by the independent claims. Advantageous embodiments of the invention are given in the dependent claims.

**BRIEF DESCRIPTION OF DRAWINGS**

FIG. 1 is a schematic structural diagram of a communications system according to an embodiment of the present invention;

FIG. 2 is a schematic flowchart of a resource allocation method according to an embodiment of the present invention;

FIG. 3 is a schematic flowchart of a resource allocation method according to an embodiment of the present invention;

FIG. 4 is a schematic structural diagram of a network device according to an embodiment of the present invention; and

FIG. 5 is a schematic structural diagram of a terminal device according to an embodiment of the present invention.

**DESCRIPTION OF EMBODIMENTS**

The following describes technical solutions in embodiments of the present invention with reference to accompanying drawings. The invention is defined by the independent claims. Advantageous embodiments of the invention are given in the dependent claims.

For a terminal device in a coverage enhancement mode B, in the existing LTE, a DCI format 6-0B is used to schedule a PUSCH. To be specific, in the LTE, the DCI format 6-0B is used to indicate information of the PUSCH such as resource allocation and a modulation and coding scheme. A resource block allocation field in the existing DCI format

6-0B includes $\left\lceil \log_2 \left\lfloor \dfrac{N_{\text{RB}}^{\text{UL}}}{6} \right\rfloor \right\rceil + 3$ bits, where $N_{\text{RB}}^{\text{UL}}$ represents a quantity of uplink PRBs included in a system bandwidth, $\lfloor \ \rfloor$ represents a rounding down operation, and $\lceil \ \rceil$ represents a rounding up operation.

For a terminal device in a coverage enhancement mode A, in the existing LTE, a DCI format 6-0A is used to schedule a PUSCH. To be specific, in the LTE, the DCI format 6-0A is used to indicate information of the PUSCH such as resource allocation and a modulation and coding scheme. A resource block allocation field in the existing DCI format

6-0A includes $\left\lceil \log_2 \left\lfloor \dfrac{N_{\text{RB}}^{\text{UL}}}{6} \right\rfloor \right\rceil + 5$ bits, where $N_{\text{RB}}^{\text{UL}}$ represents a quantity of uplink PRBs included in a system bandwidth, $\lfloor \ \rfloor$ represents a rounding down operation, and $\lceil \ \rceil$ represents a rounding up operation.

In the existing DCI format 6-0B/A, a bit used for resource block allocation indicates that an allocated frequency resource of the PUSCH includes one or more resource blocks. The resource block described in this specification is a physical resource block, namely, a PRB. To improve spectral efficiency of the PUSCH, a frequency resource that is of the PUSCH and that is fewer than 12 subcarriers needs to be allocated to the terminal device, in other words, a frequency resource of the PUSCH is allocated in a minimum unit of one subcarrier. One resource block includes 12 subcarriers in frequency domain. To enable the DCI to indicate resource allocation of fewer than 12 subcarriers, a new resource allocation method needs to be designed.

Therefore, embodiments of this application provide a resource allocation method and a related device, so that the DCI can indicate the resource allocation of fewer than 12 subcarriers.

To better understand the embodiments of this application, the following describes a communications system to which the embodiments of this application can be applied.

This application may be applied to an LTE system or an evolved system of the LTE system. The present invention may also be applied to another communications system, provided that the communications system includes that an entity (that is, a network device) needs to send DCI to indicate resource allocation for communication with another entity (that is, a terminal device), and the another entity (that is, the terminal device) needs to analyze the DCI in a specific manner.

Optionally, the network device in the embodiments of this application is an entity that is on a network side and that is configured to send or receive a signal. For example, the network device may be an evolved NodeB (evolutional node B, eNB, or eNodeB) in the LTE system or a radio network controller in a cloud radio access network (cloud radio access network, CRAN), or may be an access network device in a 5G network, for example, a gNB, or may be a small cell, a micro base station, or a transmission reception point (transmission reception point, TRP), or may be a relay station, an access point, an access network device in a future evolved public land mobile network (public land mobile network, PLMN), or the like.

Alternatively, the network device may be a terminal device. To be specific, this application may be applied to a communications system. The communications system includes that a terminal device needs to send DCI to indicate resource allocation for communication with another terminal device, and the another terminal device needs to analyze the DCI in a specific manner. For example, the terminal device in this application may be an access terminal, user equipment (user equipment, UE), a subscriber unit, a subscriber station, a mobile station, a mobile console, a remote station, a remote terminal, a mobile terminal, a user terminal, a terminal, a wireless network device, a user agent, or a user apparatus. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in an internet of things, a virtual reality device, a terminal device in a future 5G network, a terminal device in a future evolved public land mobile network (public land mobile network, PLMN), UE performing an MTC service, BL UE, CE UE, or the like.

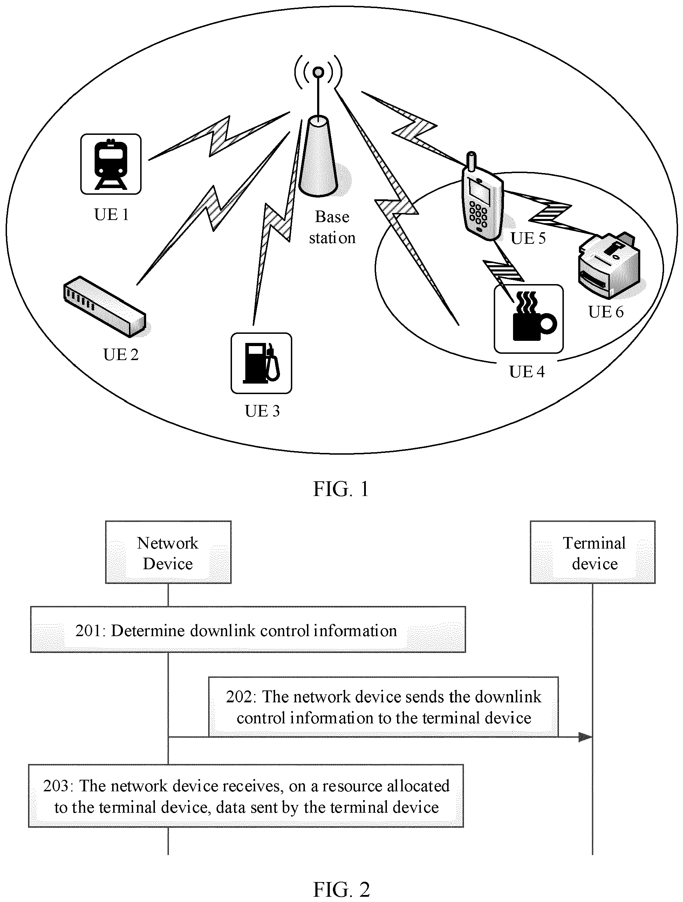

For example, FIG. 1 is a schematic diagram of a communications system according to an embodiment of this application. As shown in FIG. 1, the communications system may include seven network devices: a base station (Base station) and UE 1 to UE 6. In the communications system, the base station sends DCI to one or more of the UE 1 to the UE 6. The DCI is used to indicate resource allocation of a PUSCH of one or more of the UE 1 to the UE 6. Therefore, the network device in the embodiments of this application may be the base station, and the terminal device may be any one of the UE 1 to the UE 6.

For another example, as shown in FIG. 1, the UE 4 to the UE 6 may also form a communications system. In the communications system, the UE 5 may send DCI to one of or both the UE 4 and the UE 6. The DCI is used to indicate resource allocation of a PUSCH of one of or both the UE 4 and the UE 6. Therefore, the network device in the embodiments of this application may be the UE 5, and the terminal device may be either the UE 4 or the UE 6.

The following describes in detail the information indication method and the related device that are provided in this application.

FIG. 2 is a schematic flowchart of a resource allocation method according to an embodiment of this application. As shown in FIG. 2, the resource allocation method includes the following steps 201 to 203.

201: A network device determines downlink control information to be sent to a terminal device.

The network device may be a base station or a terminal device. For example, as shown in FIG. 1, when the network device is the base station, the terminal device is any one of the UE 1 to the UE 6. When the network device is the UE 5, the terminal device is either the UE 4 or the UE 6. A PUSCH is used to carry uplink data of the terminal device.

That the network device determines the downlink control information is that the network device determines the downlink control information that needs to be sent to the terminal device.

202: The network device sends the downlink control information to the terminal device.

203: The network device receives, on a resource allocated to the terminal device, data sent by the terminal device.

It should be noted that in this embodiment of this application, because the downlink control information includes indication information and resource allocation information, before sending the downlink control information to the terminal device, the network device may determine, in the following at least two possible implementations, the indication information and the resource allocation information included in the downlink control information.

In a first possible implementation, for a terminal device in a coverage enhancement mode B, an example in which the resource allocation information includes

$$\left\lceil \log_2 \left\lfloor \frac{N_{\mathrm{RB}}^{\mathrm{UL}}}{6} \right\rfloor \right\rceil + 5$$

bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information includes $\left\lceil \log_2 \left\lfloor \frac{N_{\mathrm{RB}}^{\mathrm{UL}}}{6} \right\rfloor \right\rceil$ bits, the $\left\lceil \log_2 \left\lfloor \frac{N_{\mathrm{RB}}^{\mathrm{UL}}}{6} \right\rfloor \right\rceil$ bits indicate a narrowband, $N_{\mathrm{RB}}^{\mathrm{UL}}$ represents a quantity of uplink RBs corresponding to a system bandwidth, $\lceil\ \rceil$ represents rounding up, and $\lfloor\ \rfloor$ represents rounding down. The resource allocation information further includes five bits, and the five bits have 32 bit states, where the 32 bit states include six bit states, and each of the six bit states indicates that one resource block in the narrowband is allocated to the terminal device; and/or the 32 bit states further include two bit states, and each of the two bit states indicates that two resource blocks in the narrowband are allocated to the terminal device; and/or the 32 bit states further include eight bit states, each of the eight bit states indicates that six subcarriers in a physical resource block m are allocated to the terminal device, and the physical resource block m is one of four physical resource blocks configured by using higher layer signaling; and/or the 32 bit states further include 16 bit states, each of the 16 bit states indicates that three subcarriers in a physical resource block x are allocated to the terminal device, and the physical resource block x is one of the four physical resource blocks configured by using the higher layer signaling.

Optionally, the four physical resource blocks configured by using the higher layer signaling are four physical resource blocks in the narrowband.

It can be learned that the network device indicates, by using the $\left\lceil \log_2 \left\lfloor \frac{N_{RB}^{UL}}{6} \right\rfloor \right\rceil$ bits, a location that is of the allocated resource and that is in the narrowband, and then indicates the 32 bit states by using the other five bits. The 32 bit states correspond to six states about allocating one resource block, two states about allocating two resource blocks, eight states about allocating six subcarriers, and 16 states about allocating three subcarriers.

For example, a mapping relationship between the 32 bit states and specific resource allocation may meet Table 1. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are four resource blocks that are configured by using the higher layer signaling and that are in the PRB n, the PRB n+1, the PRB n+2, the PRB n+3, the PRB n+4, and the PRB n+5. Herein, n is an integer greater than or equal to 0; n, n+1, n+2, n+3, n+4, and n+5 represent indexes of PRBs; m1 to m4 are integers greater than or equal to 0; and m1, m2, m3, and m4 represent indexes of PRBs.

**Table 1**

| States indicated by five bits | Allocated resource | States indicated by five bits | Allocated resource |
|---|---|---|---|
| 00000 | PRB n | 10000 | Subcarriers 6, 7, and 8 in the PRB m2 |
| 00001 | PRB n+1 | 10001 | Subcarriers 9, 10, and 11 in the PRB m2 |
| 00010 | PRB n+2 | 10010 | Subcarriers 0, 1, 2, 3, 4, and 5 in the PRB m2 |
| 00011 | PRB n+3 | 10011 | Subcarriers 6, 7, 8, 9, 10, and 11 in the PRB m2 |
| 00100 | PRB n+4 | 10100 | Subcarriers 0, 1, and 2 in the PRB m3 |
| 00101 | PRB n+5 | 10101 | Subcarriers 3, 4, and 5 in the PRB m3 |
| 00110 | PRB n and PRB n+1 | 10110 | Subcarriers 6, 7, and 8 in the PRB m3 |
| 00111 | PRB n+2 and PRB n+3 | 10111 | Subcarriers 9, 10, and 11 in the PRB m3 |
| 01000 | Subcarriers 0, 1, and 2 in the PRB m1 | 11000 | Subcarriers 0, 1, 2, 3, 4, and 5 in the PRB m3 |
| 01001 | Subcarriers 3, 4, and 5 in the PRB m1 | 11001 | Subcarriers 6, 7, 8, 9, 10, and 11 in the PRB m3 |
| 01010 | Subcarriers 6, 7, and 8 in the PRB m1 | 11010 | Subcarriers 0, 1, and 2 in the PRB m4 |
| 01011 | Subcarriers 9, 10, and 11 in the PRB m1 | 11011 | Subcarriers 3, 4, and 5 in the PRB m4 |
| 01100 | Subcarriers 0, 1, 2, 3, 4, and 5 in the PRB m1 | 11100 | Subcarriers 6, 7, and 8 in the PRB m4 |

(continued)

| States indicated by five bits | Allocated resource | States indicated by five bits | Allocated resource |
| --- | --- | --- | --- |
| 01101 | Subcarriers 6, 7, 8, 9, 10, and 11 in the PRB m1 | 11101 | Subcarriers 9, 10, and 11 in the PRB m4 |
| 01110 | Subcarriers 0, 1, and 2 in the PRB m2 | 11110 | Subcarriers 0, 1, 2, 3, 4, and 5 in the PRB m4 |
| 01111 | Subcarriers 3, 4, and 5 in the PRB m2 | 11111 | Subcarriers 6, 7, 8, 9, 10, and 11 in the PRB m4 |

For example, a mapping relationship between the 32 bit states and specific resource allocation may alternatively meet Table 2. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are four resource blocks that are configured by using the higher layer signaling and that are in the PRB n, the PRB n+1, the PRB n+2, the PRB n+3, the PRB n+4, and the PRB n+5. Herein, n is an integer greater than or equal to 0; n, n+1, n+2, n+3, n+4, and n+5 represent indexes of PRBs; m1 to m4 are integers greater than or equal to 0; and m1, m2, m3, and m4 represent indexes of PRBs.

**Table 2**

| States indicated by five bits | Allocated resource | States indicated by five bits | Allocated resource |
| --- | --- | --- | --- |
| 00000 | Subcarriers 0, 1, and 2 in the PRB m1 | 10000 | Subcarriers 0, 1, 2, 3, 4, and 5 in the PRB m3 |
| 00001 | Subcarriers 3, 4, and 5 in the PRB m1 | 10001 | Subcarriers 6, 7, 8, 9, 10, and 11 in the PRB m3 |
| 00010 | Subcarriers 6, 7, and 8 in the PRB m1 | 10010 | Subcarriers 0, 1, and 2 in the PRB m4 |
| 00011 | Subcarriers 9, 10, and 11 in the PRB m1 | 10011 | Subcarriers 3, 4, and 5 in the PRB m4 |
| 00100 | Subcarriers 0, 1, 2, 3, 4, and 5 in the PRB m1 | 10100 | Subcarriers 6, 7, and 8 in the PRB m4 |
| 00101 | Subcarriers 6, 7, 8, 9, 10, and 11 in the PRB m 1 | 10101 | Subcarriers 9, 10, and 11 in the PRB m4 |
| 00110 | Subcarriers 0, 1, and 2 in the PRB m2 | 10110 | Subcarriers 0, 1, 2, 3, 4, and 5 in the PRB m4 |
| 00111 | Subcarriers 3, 4, and 5 in the PRB m2 | 10111 | Subcarriers 6, 7, 8, 9, 10, and 11 in the PRB m4 |
| 01000 | Subcarriers 6, 7, and 8 in the PRB m2 | 11000 | PRB n |
| 01001 | Subcarriers 9, 10, and 11 in the PRB m2 | 11001 | PRB n+1 |
| 01010 | Subcarriers 0, 1, 2, 3, 4, and 5 in the PRB m2 | 11010 | PRB n+2 |
| 01011 | Subcarriers 6, 7, 8, 9, 10, and 11 in the PRB m2 | 11011 | PRB n+3 |
| 01100 | Subcarriers 0, 1, and 2 in the PRB m3 | 11100 | PRB n+4 |
| 01101 | Subcarriers 3, 4, and 5 in the PRB m3 | 11101 | PRB n+5 |

(continued)

| States indicated by five bits | Allocated resource | States indicated by five bits | Allocated resource |
|---|---|---|---|
| 01110 | Subcarriers 6, 7, and 8 in the PRB m3 | 11110 | PRB n and PRB n+1 |
| 01111 | Subcarriers 9, 10, and 11 in the PRB m3 | 11111 | PRB n+2 and PRB n+3 |

For example, a mapping relationship between the 32 bit states and specific resource allocation may alternatively meet Table 3. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are four resource blocks that are configured by using the higher layer signaling and that are in the PRB n, the PRB n+1, the PRB n+2, the PRB n+3, the PRB n+4, and the PRB n+5. Herein, n is an integer greater than or equal to 0; n, n+1, n+2, n+3, n+4, and n+5 represent indexes of PRBs; m1 to m4 are integers greater than or equal to 0; and m1, m2, m3, and m4 represent indexes of PRBs.

**Table 3**

| States indicated by five bits | Allocated resource | States indicated by five bits | Allocated resource |
|---|---|---|---|
| 00000 | PRB n | 10000 | Subcarriers 0, 1, and 2 in the PRB m1 |
| 00001 | PRB n+1 | 10001 | Subcarriers 3, 4, and 5 in the PRB m1 |
| 00010 | PRB n+2 | 10010 | Subcarriers 6, 7, and 8 in the PRB m1 |
| 00011 | PRB n+3 | 10011 | Subcarriers 9, 10, and 11 in the PRB m1 |
| 00100 | PRB n+4 | 10100 | Subcarriers 0, 1, and 2 in the PRB m2 |
| 00101 | PRB n+5 | 10101 | Subcarriers 3, 4, and 5 in the PRB m2 |
| 00110 | PRB n and PRB n+1 | 10110 | Subcarriers 6, 7, and 8 in the PRB m2 |
| 00111 | PRB n+2 and PRB n+3 | 10111 | Subcarriers 9, 10, and 11 in the PRB m2 |
| 01000 | Subcarriers 0, 1, 2, 3, 4, and 5 in the PRB m1 | 11000 | Subcarriers 0, 1, and 2 in the PRB m3 |
| 01001 | Subcarriers 6, 7, 8, 9, 10, and 11 in the PRB m 1 | 11001 | Subcarriers 3, 4, and 5 in the PRB m3 |
| 01010 | Subcarriers 0, 1, 2, 3, 4, and 5 in the PRB m2 | 11010 | Subcarriers 6, 7, and 8 in the PRB m3 |
| 01011 | Subcarriers 6, 7, 8, 9, 10, and 11 in the PRB m2 | 11011 | Subcarriers 9, 10, and 11 in the PRB m3 |
| 01100 | Subcarriers 0, 1, 2, 3, 4, and 5 in the PRB m3 | 11100 | Subcarriers 0, 1, and 2 in the PRB m4 |
| 01101 | Subcarriers 6, 7, 8, 9, 10, and 11 in the PRB m3 | 11101 | Subcarriers 3, 4, and 5 in the PRB m4 |
| 01110 | Subcarriers 0, 1, 2, 3, 4, and 5 in the PRB m4 | 11110 | Subcarriers 6, 7, and 8 in the PRB m4 |

(continued)

| States indicated by five bits | Allocated resource | States indicated by five bits | Allocated resource |
|---|---|---|---|
| 01111 | Subcarriers 6, 7, 8, 9, 10, and 11 in the PRB m4 | 11111 | Subcarriers 9, 10, and 11 in the PRB m4 |

For example, a mapping relationship between the 32 bit states and specific resource allocation may alternatively meet Table 4. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are four resource blocks that are configured by using the higher layer signaling and that are in the PRB n, the PRB n+1, the PRB n+2, the PRB n+3, the PRB n+4, and the PRB n+5. Herein, n is an integer greater than or equal to 0; n, n+1, n+2, n+3, n+4, and n+5 represent indexes of PRBs; m1 to m4 are integers greater than or equal to 0; and m1, m2, m3, and m4 represent indexes of PRBs.

**Table 4**

| States indicated by five bits | Allocated resource | States indicated by five bits | Allocated resource |
|---|---|---|---|
| 00000 | Subcarriers 0, 1, 2, 3, 4, and 5 in the PRB m1 | 10000 | Subcarriers 0, 1, and 2 in the PRB m3 |
| 00001 | Subcarriers 6, 7, 8, 9, 10, and 11 in the PRB m1 | 10001 | Subcarriers 3, 4, and 5 in the PRB m3 |
| 00010 | Subcarriers 0, 1, 2, 3, 4, and 5 in the PRB m2 | 10010 | Subcarriers 6, 7, and 8 in the PRB m3 |
| 00011 | Subcarriers 6, 7, 8, 9, 10, and 11 in the PRB m2 | 10011 | Subcarriers 9, 10, and 11 in the PRB m3 |
| 00100 | Subcarriers 0, 1, 2, 3, 4, and 5 in the PRB m3 | 10100 | Subcarriers 0, 1, and 2 in the PRB m4 |
| 00101 | Subcarriers 6, 7, 8, 9, 10, and 11 in the PRB m3 | 10101 | Subcarriers 3, 4, and 5 in the PRB m4 |
| 00110 | Subcarriers 0, 1, 2, 3, 4, and 5 in the PRB m4 | 10110 | Subcarriers 6, 7, and 8 in the PRB m4 |
| 00111 | Subcarriers 6, 7, 8, 9, 10, and 11 in the PRB m4 | 10111 | Subcarriers 9, 10, and 11 in the PRB m4 |
| 01000 | Subcarriers 0, 1, and 2 in the PRB m1 | 11000 | PRB n |
| 01001 | Subcarriers 3, 4, and 5 in the PRB m1 | 11001 | PRB n+1 |
| 01010 | Subcarriers 6, 7, and 8 in the PRB m1 | 11010 | PRB n+2 |
| 01011 | Subcarriers 9, 10, and 11 in the PRB m1 | 11011 | PRB n+3 |
| 01100 | Subcarriers 0, 1, and 2 in the PRB m2 | 11100 | PRB n+4 |
| 01101 | Subcarriers 3, 4, and 5 in the PRB m2 | 11101 | PRB n+5 |
| 01110 | Subcarriers 6, 7, and 8 in the PRB m2 | 11110 | PRB n and PRB n+1 |
| 01111 | Subcarriers 9, 10, and 11 in the PRB m2 | 11111 | PRB n+2 and PRB n+3 |

It should be noted that Table 1 to Table 4 are merely examples for description, the six types indicate resource allocation of one PRB in the narrowband, the two types indicate resource allocation of two PRBs in the narrowband, the eight types indicate resource allocation of six subcarriers in one of four PRBs configured by using the higher layer signaling, and the 16 types indicate resource allocation of three subcarriers in one of the four PRBs configured by using the higher layer signaling. The resource allocation may be alternatively indicated based on another mapping relationship.

In a second possible implementation, for a terminal device in a coverage enhancement mode B, an example in which the resource allocation information includes $\left\lceil \log_2 \left\lfloor \dfrac{N_{\mathrm{RB}}^{\mathrm{UL}}}{6} \right\rfloor \right\rceil + 5$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information includes five bits, and the five bits have 32 bit states, where the 32 bit states include six bit states, the resource allocation information further includes $\left\lceil \log_2 \left\lfloor \dfrac{N_{\mathrm{RB}}^{\mathrm{UL}}}{6} \right\rfloor \right\rceil$ bits, the $\left\lceil \log_2 \left\lfloor \dfrac{N_{\mathrm{RB}}^{\mathrm{UL}}}{6} \right\rfloor \right\rceil$ bits indicate a narrowband, and each of the six bit states indicates that one resource block in the narrowband is allocated to user equipment; and/or the 32 bit states further include two bit states, the resource allocation information further includes $\left\lceil \log_2 \left\lfloor \dfrac{N_{\mathrm{RB}}^{\mathrm{UL}}}{6} \right\rfloor \right\rceil$ bits, the $\left\lceil \log_2 \left\lfloor \dfrac{N_{\mathrm{RB}}^{\mathrm{UL}}}{6} \right\rfloor \right\rceil$ bits indicate a narrowband, and each of the two bit states indicates that two resource blocks in the narrowband are allocated to the user equipment; and/or the 32 bit states further include eight bit states, each of the eight bit states indicates that six subcarriers in a physical resource block m are allocated to the user equipment, the physical resource block m is one of four physical resource blocks configured by using higher layer signaling, the resource allocation information further includes $\left\lceil \log_2 \left\lfloor \dfrac{N_{\mathrm{RB}}^{\mathrm{UL}}}{6} \right\rfloor \right\rceil$ bits, and states of the $\left\lceil \log_2 \left\lfloor \dfrac{N_{\mathrm{RB}}^{\mathrm{UL}}}{6} \right\rfloor \right\rceil$ bits are set to all ones or all zeros; and/or the 32 bit states further include 16 bit states, each of the 16 bit states indicates that three subcarriers in a physical resource block x are allocated to the user equipment, the physical resource block x is one of the four physical resource blocks configured by using the higher layer signaling, the resource allocation information further includes $\left\lceil \log_2 \left\lfloor \dfrac{N_{\mathrm{RB}}^{\mathrm{UL}}}{6} \right\rfloor \right\rceil$ bits, and states of the $\left\lceil \log_2 \left\lfloor \dfrac{N_{\mathrm{RB}}^{\mathrm{UL}}}{6} \right\rfloor \right\rceil$ bits are set to all ones or all zeros. Herein, $N_{\mathrm{RB}}^{\mathrm{UL}}$ represents a quantity of uplink RBs corresponding to a system bandwidth, $\lceil\ \rceil$ represents rounding up, and $\lfloor\ \rfloor$ represents rounding down.

The four physical resource blocks configured by using the higher layer signaling are any four physical resource blocks configured in the system bandwidth.

A mapping relationship between the 32 bit states and specific resource allocation meets Table 5. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are any four resource blocks in the system bandwidth that are configured by using the higher layer signaling. Herein, n is an integer greater than or equal to 0; n, n+1, n+2, n+3, n+4, and n+5 represent indexes of PRBs; m1 to m4 are integers greater than or equal to 0; and m1, m2, m3, and m4 represent indexes of PRBs.

**Table 5**

| States indicated by five bits | Allocated resource | States indicated by five bits | Allocated resource |
|---|---|---|---|
| 00000 | PRB n | 10000 | Subcarriers 6, 7, and 8 in the PRB m2 |
| 00001 | PRB n+1 | 10001 | Subcarriers 9, 10, and 11 in the PRB m2 |
| 00010 | PRB n+2 | 10010 | Subcarriers 0, 1, 2, 3, 4, and 5 in the PRB m2 |
| 00011 | PRB n+3 | 10011 | Subcarriers 6, 7, 8, 9, 10, and 11 in the PRB m2 |
| 00100 | PRB n+4 | 10100 | Subcarriers 0, 1, and 2 in the PRB m3 |
| 00101 | PRB n+5 | 10101 | Subcarriers 3, 4, and 5 in the PRB m3 |
| 00110 | PRB n and PRB n+1 | 10110 | Subcarriers 6, 7, and 8 in the PRB m3 |
| 00111 | PRB n+2 and PRB n+3 | 10111 | Subcarriers 9, 10, and 11 in the PRB m3 |
| 01000 | Subcarriers 0, 1, and 2 in the PRB m1 | 11000 | Subcarriers 0, 1, 2, 3, 4, and 5 in the PRB m3 |
| 01001 | Subcarriers 3, 4, and 5 in the PRB m1 | 11001 | Subcarriers 6, 7, 8, 9, 10, and 11 in the PRB m3 |
| 01010 | Subcarriers 6, 7, and 8 in the PRB m1 | 11010 | Subcarriers 0, 1, and 2 in the PRB m4 |
| 01011 | Subcarriers 9, 10, and 11 in the PRB m1 | 11011 | Subcarriers 3, 4, and 5 in the PRB m4 |
| 01100 | Subcarriers 0, 1, 2, 3, 4, and 5 in the PRB m1 | 11100 | Subcarriers 6, 7, and 8 in the PRB m4 |
| 01101 | Subcarriers 6, 7, 8, 9, 10, and 11 in the PRB m 1 | 11101 | Subcarriers 9, 10, and 11 in the PRB m4 |
| 01110 | Subcarriers 0, 1, and 2 in the PRB m2 | 11110 | Subcarriers 0, 1, 2, 3, 4, and 5 in the PRB m4 |
| 01111 | Subcarriers 3, 4, and 5 in the PRB m2 | 11111 | Subcarriers 6, 7, 8, 9, 10, and 11 in the PRB m4 |

A mapping relationship between the 32 bit states and specific resource allocation meets Table 6. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are any four resource blocks in the system bandwidth that are configured by using the higher layer signaling. Herein, n is an integer greater than or equal to 0; n, n+1, n+2, n+3, n+4, and n+5 represent indexes of PRBs; m1 to m4 are integers greater than or equal to 0; and m1, m2, m3, and m4 represent indexes of PRBs.

**Table 6**

| States indicated by five bits | Allocated resource | Index | Allocated resource |
|---|---|---|---|
| 00000 | Subcarriers 0, 1, and 2 in the PRB m1 | 10000 | Subcarriers 0, 1, 2, 3, 4, and 5 in the PRB m3 |

(continued)

| States indicated by five bits | Allocated resource | Index | Allocated resource |
|---|---|---|---|
| 00001 | Subcarriers 3, 4, and 5 in the PRB m1 | 10001 | Subcarriers 6, 7, 8, 9, 10, and 11 in the PRB m3 |
| 00010 | Subcarriers 6, 7, and 8 in the PRB m1 | 10010 | Subcarriers 0, 1, and 2 in the PRB m4 |
| 00011 | Subcarriers 9, 10, and 11 in the PRB m1 | 10011 | Subcarriers 3, 4, and 5 in the PRB m4 |
| 00100 | Subcarriers 0, 1, 2, 3, 4, and 5 in the PRB m1 | 10100 | Subcarriers 6, 7, and 8 in the PRB m4 |
| 00101 | Subcarriers 6, 7, 8, 9, 10, and 11 in the PRB m1 | 10101 | Subcarriers 9, 10, and 11 in the PRB m4 |
| 00110 | Subcarriers 0, 1, and 2 in the PRB m2 | 10110 | Subcarriers 0, 1, 2, 3, 4, and 5 in the PRB m4 |
| 00111 | Subcarriers 3, 4, and 5 in the PRB m2 | 10111 | Subcarriers 6, 7, 8, 9, 10, and 11 in the PRB m4 |
| 01000 | Subcarriers 6, 7, and 8 in the PRB m2 | 11000 | PRB n |
| 01001 | Subcarriers 9, 10, and 11 in the PRB m2 | 11001 | PRB n+1 |
| 01010 | Subcarriers 0, 1, 2, 3, 4, and 5 in the PRB m2 | 11010 | PRB n+2 |
| 01011 | Subcarriers 6, 7, 8, 9, 10, and 11 in the PRB m2 | 11011 | PRB n+3 |
| 01100 | Subcarriers 0, 1, and 2 in the PRB m3 | 11100 | PRB n+4 |
| 01101 | Subcarriers 3, 4, and 5 in the PRB m3 | 11101 | PRB n+5 |
| 01110 | Subcarriers 6, 7, and 8 in the PRB m3 | 11110 | PRB n and PRB n+1 |
| 01111 | Subcarriers 9, 10, and 11 in the PRB m3 | 11111 | PRB n+2 and PRB n+3 |

For example, a mapping relationship between the 32 bit states and specific resource allocation may alternatively meet Table 7. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are any four resource blocks in the system bandwidth that are configured by using the higher layer signaling. Herein, n is an integer greater than or equal to 0; n, n+1, n+2, n+3, n+4, and n+5 represent indexes of PRBs; m1 to m4 are integers greater than or equal to 0; and m1, m2, m3, and m4 represent indexes of PRBs.

**Table 7**

| States indicated by five bits | Allocated resource | Index | Allocated resource |
|---|---|---|---|
| 00000 | PRB n | 10000 | Subcarriers 0, 1, and 2 in the PRB m1 |
| 00001 | PRB n+1 | 10001 | Subcarriers 3, 4, and 5 in the PRB m1 |
| 00010 | PRB n+2 | 10010 | Subcarriers 6, 7, and 8 in the PRB m1 |
| 00011 | PRB n+3 | 10011 | Subcarriers 9, 10, and 11 in the PRB m1 |
| 00100 | PRB n+4 | 10100 | Subcarriers 0, 1, and 2 in the PRB m2 |

(continued)

| States indicated by five bits | Allocated resource | Index | Allocated resource |
|---|---|---|---|
| 00101 | PRB n+5 | 10101 | Subcarriers 3, 4, and 5 in the PRB m2 |
| 00110 | PRB n and PRB n+1 | 10110 | Subcarriers 6, 7, and 8 in the PRB m2 |
| 00111 | PRB n+2 and PRB n+3 | 10111 | Subcarriers 9, 10, and 11 in the PRB m2 |
| 01000 | Subcarriers 0, 1, 2, 3, 4, and 5 in the PRB m1 | 11000 | Subcarriers 0, 1, and 2 in the PRB m3 |
| 01001 | Subcarriers 6, 7, 8, 9, 10, and 11 in the PRB m1 | 11001 | Subcarriers 3, 4, and 5 in the PRB m3 |
| 01010 | Subcarriers 0, 1, 2, 3, 4, and 5 in the PRB m2 | 11010 | Subcarriers 6, 7, and 8 in the PRB m3 |
| 01011 | Subcarriers 6, 7, 8, 9, 10, and 11 in the PRB m2 | 11011 | Subcarriers 9, 10, and 11 in the PRB m3 |
| 01100 | Subcarriers 0, 1, 2, 3, 4, and 5 in the PRB m3 | 11100 | Subcarriers 0, 1, and 2 in the PRB m4 |
| 01101 | Subcarriers 6, 7, 8, 9, 10, and 11 in the PRB m3 | 11101 | Subcarriers 3, 4, and 5 in the PRB m4 |
| 01110 | Subcarriers 0, 1, 2, 3, 4, and 5 in the PRB m4 | 11110 | Subcarriers 6, 7, and 8 in the PRB m4 |
| 01111 | Subcarriers 6, 7, 8, 9, 10, and 11 in the PRB m4 | 11111 | Subcarriers 9, 10, and 11 in the PRB m4 |

For example, a mapping relationship between the 32 bit states and specific resource allocation may alternatively meet Table 8. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are any four resource blocks in the system bandwidth that are configured by using the higher layer signaling. Herein, n is an integer greater than or equal to 0; n, n+1, n+2, n+3, n+4, and n+5 represent indexes of PRBs; m1 to m4 are integers greater than or equal to 0; and m1, m2, m3, and m4 represent indexes of PRBs.

**Table 8**

| States indicated by five bits | Allocated resource | Index | Allocated resource |
|---|---|---|---|
| 00000 | Subcarriers 0, 1, 2, 3, 4, and 5 in the PRB m1 | 10000 | Subcarriers 0, 1, and 2 in the PRB m3 |
| 00001 | Subcarriers 6, 7, 8, 9, 10, and 11 in the PRB m1 | 10001 | Subcarriers 3, 4, and 5 in the PRB m3 |
| 00010 | Subcarriers 0, 1, 2, 3, 4, and 5 in the PRB m2 | 10010 | Subcarriers 6, 7, and 8 in the PRB m3 |
| 00011 | Subcarriers 6, 7, 8, 9, 10, and 11 in the PRB m2 | 10011 | Subcarriers 9, 10, and 11 in the PRB m3 |
| 00100 | Subcarriers 0, 1, 2, 3, 4, and 5 in the PRB m3 | 10100 | Subcarriers 0, 1, and 2 in the PRB m4 |
| 00101 | Subcarriers 6, 7, 8, 9, 10, and 11 in the PRB m3 | 10101 | Subcarriers 3, 4, and 5 in the PRB m4 |

(continued)

| States indicated by five bits | Allocated resource | Index | Allocated resource |
|---|---|---|---|
| 00110 | Subcarriers 0, 1, 2, 3, 4, and 5 in the PRB m4 | 10110 | Subcarriers 6, 7, and 8 in the PRB m4 |
| 00111 | Subcarriers 6, 7, 8, 9, 10, and 11 in the PRB m4 | 10111 | Subcarriers 9, 10, and 11 in the PRB m4 |
| 01000 | Subcarriers 0, 1, and 2 in the PRB m1 | 11000 | PRB n |
| 01001 | Subcarriers 3, 4, and 5 in the PRB m1 | 11001 | PRB n+1 |
| 01010 | Subcarriers 6, 7, and 8 in the PRB m1 | 11010 | PRB n+2 |
| 01011 | Subcarriers 9, 10, and 11 in the PRB m1 | 11011 | PRB n+3 |
| 01100 | Subcarriers 0, 1, and 2 in the PRB m2 | 11100 | PRB n+4 |
| 01101 | Subcarriers 3, 4, and 5 in the PRB m2 | 11101 | PRB n+5 |
| 01110 | Subcarriers 6, 7, and 8 in the PRB m2 | 11110 | PRB n and PRB n+1 |
| 01111 | Subcarriers 9, 10, and 11 in the PRB m2 | 11111 | PRB n+2 and PRB n+3 |

It should be noted that Table 5 to Table 8 are merely examples for description, the six types indicate resource allocation of one PRB in the narrowband, the two types indicate resource allocation of two PRBs in the narrowband, the eight types indicate resource allocation of six subcarriers in one of four PRBs configured by using the higher layer signaling, and the 16 types indicate resource allocation of three subcarriers in one of the four PRBs configured by using the higher layer signaling. The resource allocation may be alternatively indicated based on another mapping relationship.

In a third possible implementation, for a terminal device in a coverage enhancement mode B, an example in which the resource allocation information includes $\left\lceil \log_2 \left\lfloor \dfrac{N_{\text{RB}}^{\text{UL}}}{6} \right\rfloor \right\rceil + 6$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information includes $\left\lceil \log_2 \left\lfloor \dfrac{N_{\text{RB}}^{\text{UL}}}{6} \right\rfloor \right\rceil$ bits, the $\left\lceil \log_2 \left\lfloor \dfrac{N_{\text{RB}}^{\text{UL}}}{6} \right\rfloor \right\rceil$ bits indicate a narrowband, $N_{\text{RB}}^{\text{UL}}$ represents a quantity of uplink RBs corresponding to a system bandwidth, $\lceil \ \rceil$ represents rounding up, and $\lfloor \ \rfloor$ represents rounding down. The resource allocation information further includes six bits, and the six bits have 64 bit states, where the 64 bit states include six bit states, and each of the six bit states indicates that one resource block in the narrowband is allocated to user equipment; and/or the 64 bit states further include two bit states, and each of the two bit states indicates that two resource blocks in the narrowband are allocated to the user equipment; and/or the 64 bit states further include 12 bit states, each of the 12 bit states indicates that six subcarriers in a physical resource block k are allocated to the user equipment, and the physical resource block k is a resource block in the narrowband; and/or the 64 bit states further include 24 bit states, each of the 24 bit states indicates that three subcarriers in a physical resource block p are allocated to the user equipment, and the physical resource block p is a resource block in the narrowband.

For example, a mapping relationship between the 32 bit states and specific resource allocation may alternatively meet Table 9. A PRB n, a PRB n+1, a PRB n+2, a PRB n+3, a PRB n+4, and a PRB n+5 are six consecutive PRBs in the narrowband. Herein, n is an integer greater than or equal to 0; and n, n+1, n+2, n+3, n+4, and n+5 represent indexes of PRBs.

**Table 9**

| States indicated by five bits | Allocated resource | Index | Allocated resource |
|---|---|---|---|
| 000000 | PRB n | 010110 | Subcarriers 6, 7, and 8 in the PRB n+2 |
| 000001 | PRB n+1 | 010111 | Subcarriers 9, 10, and 11 in the PRB n+2 |
| 000010 | PRB n+2 | 011000 | Subcarriers 0, 1, 2, 3, 4, and 5 in the PRB n+2 |
| 000011 | PRB n+3 | 011001 | Subcarriers 6, 7, 8, 9, 10, and 11 in the PRB n+2 |
| 000100 | PRB n+4 | 011010 | Subcarriers 0, 1, and 2 in the PRB n+3 |
| 000101 | PRB n+5 | 011011 | Subcarriers 3, 4, and 5 in the PRB n+3 |
| 000110 | PRB n and PRB n+1 | 011100 | Subcarriers 6, 7, and 8 in the PRB n+3 |
| 000111 | PRB n+2 and PRB n+3 | 011101 | Subcarriers 9, 10, and 11 in the PRB n+3 |
| 001000 | Subcarriers 0, 1, and 2 in the PRB n | 011110 | Subcarriers 0, 1, 2, 3, 4, and 5 in the PRB n+3 |
| 001001 | Subcarriers 3, 4, and 5 in the PRB n | 011111 | Subcarriers 6, 7, 8, 9, 10, and 11 in the PRB n+3 |
| 001010 | Subcarriers 6, 7, and 8 in the PRB n | 100000 | Subcarriers 0, 1, and 2 in the PRB n+4 |
| 001011 | Subcarriers 9, 10, and 11 in the PRB n | 100001 | Subcarriers 3, 4, and 5 in the PRB n+4 |
| 001100 | Subcarriers 0, 1, 2, 3, 4, and 5 in the PRB n | 100010 | Subcarriers 6, 7, and 8 in the PRB n+4 |
| 001101 | Subcarriers 6, 7, 8, 9, 10, and 11 in the PRB n | 100011 | Subcarriers 9, 10, and 11 in the PRB n+4 |
| 001110 | Subcarriers 0, 1, and 2 in the PRB n+1 | 100100 | Subcarriers 0, 1, 2, 3, 4, and 5 in the PRB n+4 |
| 001111 | Subcarriers 3, 4, and 5 in the PRB n+1 | 100101 | Subcarriers 6, 7, 8, 9, 10, and 11 in the PRB n+4 |
| 010000 | Subcarriers 6, 7, and 8 in the PRB n+1 | 100110 | Subcarriers 0, 1, and 2 in the PRB n+5 |
| 010001 | Subcarriers 9, 10, and 11 in the PRB n+1 | 100111 | Subcarriers 3, 4, and 5 in the PRB n+5 |
| 010010 | Subcarriers 0, 1, 2, 3, 4, and 5 in the PRB n+1 | 101000 | Subcarriers 6, 7, and 8 in the PRB n+5 |
| 010011 | Subcarriers 6, 7, 8, 9, 10, and 11 in the PRB n+ 1 | 101001 | Subcarriers 9, 10, and 11 in the PRB n+5 |
| 010100 | Subcarriers 0, 1, and 2 in the PRB n+2 | 101010 | Subcarriers 0, 1, 2, 3, 4, and 5 in the PRB n+5 |
| 010101 | Subcarriers 3, 4, and 5 in the PRB n+2 | 101011 | Subcarriers 6, 7, 8, 9, 10, and 11 in the PRB n+5 |

For example, a mapping relationship between the 32 bit states and specific resource allocation may alternatively meet Table 10. A PRB n, a PRB n+1, a PRB n+2, a PRB n+3, a PRB n+4, and a PRB n+5 are six consecutive PRBs in the narrowband. Herein, n is an integer greater than or equal to 0; and n, n+1, n+2, n+3, n+4, and n+5 represent indexes of PRBs.

**Table 10**

| States indicated by five bits | Allocated resource | Index | Allocated resource |
|---|---|---|---|
| 000000 | Subcarriers 0, 1, and 2 in the PRB n | 010110 | Subcarriers 0, 1, 2, 3, 4, and 5 in the PRB n+3 |
| 000001 | Subcarriers 3, 4, and 5 in the PRB n | 010111 | Subcarriers 6, 7, 8, 9, 10, and 11 in the PRB n+3 |
| 000010 | Subcarriers 6, 7, and 8 in the PRB n | 011000 | Subcarriers 0, 1, and 2 in the PRB n+4 |
| 000011 | Subcarriers 9, 10, and 11 in the PRB n | 011001 | Subcarriers 3, 4, and 5 in the PRB n+4 |
| 000100 | Subcarriers 0, 1, 2, 3, 4, and 5 in the PRB n | 011010 | Subcarriers 6, 7, and 8 in the PRB n+4 |
| 000101 | Subcarriers 6, 7, 8, 9, 10, and 11 in the PRB n | 011011 | Subcarriers 9, 10, and 11 in the PRB n+4 |
| 000110 | Subcarriers 0, 1, and 2 in the PRB n+1 | 011100 | Subcarriers 0, 1, 2, 3, 4, and 5 in the PRB n+4 |
| 000111 | Subcarriers 3, 4, and 5 in the PRB n+1 | 011101 | Subcarriers 6, 7, 8, 9, 10, and 11 in the PRB n+4 |
| 001000 | Subcarriers 6, 7, and 8 in the PRB n+1 | 011110 | Subcarriers 0, 1, and 2 in the PRB n+5 |
| 001001 | Subcarriers 9, 10, and 11 in the PRB n+1 | 011111 | Subcarriers 3, 4, and 5 in the PRB n+5 |
| 001010 | Subcarriers 0, 1, 2, 3, 4, and 5 in the PRB n+1 | 100000 | Subcarriers 6, 7, and 8 in the PRB n+5 |
| 001011 | Subcarriers 6, 7, 8, 9, 10, and 11 in the PRB n+ 1 | 100001 | Subcarriers 9, 10, and 11 in the PRB n+5 |
| 001100 | Subcarriers 0, 1, and 2 in the PRB n+2 | 100010 | Subcarriers 0, 1, 2, 3, 4, and 5 in the PRB n+5 |
| 001101 | Subcarriers 3, 4, and 5 in the PRB n+2 | 100011 | Subcarriers 6, 7, 8, 9, 10, and 11 in the PRB n+5 |
| 001110 | Subcarriers 6, 7, and 8 in the PRB n+2 | 100100 | PRB n |
| 001111 | Subcarriers 9, 10, and 11 in the PRB n+2 | 100101 | PRB n+1 |
| 010000 | Subcarriers 0, 1, 2, 3, 4, and 5 in the PRB n+2 | 100110 | PRB n+2 |
| 010001 | Subcarriers 6, 7, 8, 9, 10, and 11 in the PRB n+2 | 100111 | PRB n+3 |
| 010010 | Subcarriers 0, 1, and 2 in the PRB n+3 | 101000 | PRB n+4 |
| 010011 | Subcarriers 3, 4, and 5 in the PRB n+3 | 101001 | PRB n+5 |
| 010100 | Subcarriers 6, 7, and 8 in the PRB n+3 | 101010 | PRB n and PRB n+1 |
| 010101 | Subcarriers 9, 10, and 11 in the PRB n+3 | 101011 | PRB n+2 and PRB n+3 |

For example, a mapping relationship between the 32 bit states and specific resource allocation may alternatively meet Table 11. A PRB n, a PRB n+1, a PRB n+2, a PRB n+3, a PRB n+4, and a PRB n+5 are six consecutive PRBs in the narrowband. Herein, n is an integer greater than or equal to 0; and n, n+1, n+2, n+3, n+4, and n+5 represent indexes of PRBs.

**Table 11**

| States indicated by five bits | Allocated resource | Index | Allocated resource |
|---|---|---|---|
| 000000 | PRB n | 010110 | Subcarriers 6, 7, and 8 in the PRB n |
| 000001 | PRB n+1 | 010111 | Subcarriers 9, 10, and 11 in the PRB n |
| 000010 | PRB n+2 | 011000 | Subcarriers 0, 1, and 2 in the PRB n+1 |
| 000011 | PRB n+3 | 011001 | Subcarriers 3, 4, and 5 in the PRB n+1 |
| 000100 | PRB n+4 | 011010 | Subcarriers 6, 7, and 8 in the PRB n+1 |
| 000101 | PRB n+5 | 011011 | Subcarriers 9, 10, and 11 in the PRB n+1 |
| 000110 | PRB n and PRB n+1 | 011100 | Subcarriers 0, 1, and 2 in the PRB n+2 |
| 000111 | PRB n+2 and PRB n+3 | 011101 | Subcarriers 3, 4, and 5 in the PRB n+2 |
| 001000 | Subcarriers 0, 1, 2, 3, 4, and 5 in the PRB n | 011110 | Subcarriers 6, 7, and 8 in the PRB n+2 |
| 001001 | Subcarriers 6, 7, 8, 9, 10, and 11 in the PRB n | 011111 | Subcarriers 9, 10, and 11 in the PRB n+2 |
| 001010 | Subcarriers 0, 1, 2, 3, 4, and 5 in the PRB n+1 | 100000 | Subcarriers 0, 1, and 2 in the PRB n+3 |
| 001011 | Subcarriers 6, 7, 8, 9, 10, and 11 in the PRB n+ 1 | 100001 | Subcarriers 3, 4, and 5 in the PRB n+3 |
| 001100 | Subcarriers 0, 1, 2, 3, 4, and 5 in the PRB n+2 | 100010 | Subcarriers 6, 7, and 8 in the PRB n+3 |
| 001101 | Subcarriers 6, 7, 8, 9, 10, and 11 in the PRB n+2 | 100011 | Subcarriers 9, 10, and 11 in the PRB n+3 |
| 001110 | Subcarriers 0, 1, 2, 3, 4, and 5 in the PRB n+3 | 100100 | Subcarriers 0, 1, and 2 in the PRB n+4 |
| 001111 | Subcarriers 6, 7, 8, 9, 10, and 11 in the PRB n+3 | 100101 | Subcarriers 3, 4, and 5 in the PRB n+4 |
| 010000 | Subcarriers 0, 1, 2, 3, 4, and 5 in the PRB n+4 | 100110 | Subcarriers 6, 7, and 8 in the PRB n+4 |
| 010001 | Subcarriers 6, 7, 8, 9, 10, and 11 in the PRB n+4 | 100111 | Subcarriers 9, 10, and 11 in the PRB n+4 |
| 010010 | Subcarriers 0, 1, 2, 3, 4, and 5 in the PRB n+5 | 101000 | Subcarriers 0, 1, and 2 in the PRB n+5 |
| 010011 | Subcarriers 6, 7, 8, 9, 10, and 11 in the PRB n+5 | 101001 | Subcarriers 3, 4, and 5 in the PRB n+5 |
| 010100 | Subcarriers 0, 1, and 2 in the PRB n | 101010 | Subcarriers 6, 7, and 8 in the PRB n+5 |
| 010101 | Subcarriers 3, 4, and 5 in the PRB n | 101011 | Subcarriers 9, 10, and 11 in the PRB n+5 |

For example, a mapping relationship between the 32 bit states and specific resource allocation may alternatively meet Table 12. For example, a mapping relationship between the 32 bit states and specific resource allocation may alternatively meet Table 11. A PRB n, a PRB n+1, a PRB n+2, a PRB n+3, a PRB n+4, and a PRB n+5 are six consecutive PRBs in the narrowband. Herein, n is an integer greater than or equal to 0; and n, n+1, n+2, n+3, n+4, and n+5 represent indexes of PRBs.

**Table 12**

| States indicated by five bits | Allocated resource | Index | Allocated resource |
|---|---|---|---|
| 000000 | Subcarriers 0, 1, 2, 3, 4, and 5 in the PRB n | 010110 | Subcarriers 6, 7, and 8 in the PRB n+2 |
| 000001 | Subcarriers 6, 7, 8, 9, 10, and 11 in the PRB n | 010111 | Subcarriers 9, 10, and 11 in the PRB n+2 |
| 000010 | Subcarriers 0, 1, 2, 3, 4, and 5 in the PRB n+1 | 011000 | Subcarriers 0, 1, and 2 in the PRB n+3 |
| 000011 | Subcarriers 6, 7, 8, 9, 10, and 11 in the PRB n+ 1 | 011001 | Subcarriers 3, 4, and 5 in the PRB n+3 |
| 000100 | Subcarriers 0, 1, 2, 3, 4, and 5 in the PRB n+2 | 011010 | Subcarriers 6, 7, and 8 in the PRB n+3 |
| 000101 | Subcarriers 6, 7, 8, 9, 10, and 11 in the PRB n+2 | 011011 | Subcarriers 9, 10, and 11 in the PRB n+3 |
| 000110 | Subcarriers 0, 1, 2, 3, 4, and 5 in the PRB n+3 | 011100 | Subcarriers 0, 1, and 2 in the PRB n+4 |
| 000111 | Subcarriers 6, 7, 8, 9, 10, and 11 in the PRB n+3 | 011101 | Subcarriers 3, 4, and 5 in the PRB n+4 |
| 001000 | Subcarriers 0, 1, 2, 3, 4, and 5 in the PRB n+4 | 011110 | Subcarriers 6, 7, and 8 in the PRB n+4 |
| 001001 | Subcarriers 6, 7, 8, 9, 10, and 11 in the PRB n+4 | 011111 | Subcarriers 9, 10, and 11 in the PRB n+4 |
| 001010 | Subcarriers 0, 1, 2, 3, 4, and 5 in the PRB n+5 | 100000 | Subcarriers 0, 1, and 2 in the PRB n+5 |
| 001011 | Subcarriers 6, 7, 8, 9, 10, and 11 in the PRB n+5 | 100001 | Subcarriers 3, 4, and 5 in the PRB n+5 |
| 001100 | Subcarriers 0, 1, and 2 in the PRB n | 100010 | Subcarriers 6, 7, and 8 in the PRB n+5 |
| 001101 | Subcarriers 3, 4, and 5 in the PRB n | 100011 | Subcarriers 9, 10, and 11 in the PRB n+5 |
| 001110 | Subcarriers 6, 7, and 8 in the PRB n | 100100 | PRB n |
| 001111 | Subcarriers 9, 10, and 11 in the PRB n | 100101 | PRB n+1 |
| 010000 | Subcarriers 0, 1, and 2 in the PRB n+1 | 100110 | PRB n+2 |
| 010001 | Subcarriers 3, 4, and 5 in the PRB n+1 | 100111 | PRB n+3 |
| 010010 | Subcarriers 6, 7, and 8 in the PRB n+1 | 101000 | PRB n+4 |
| 010011 | Subcarriers 9, 10, and 11 in the PRB n+1 | 101001 | PRB n+5 |
| 010100 | Subcarriers 0, 1, and 2 in the PRB n+2 | 101010 | PRB n and PRB n+1 |
| 010101 | Subcarriers 3, 4, and 5 in the PRB n+2 | 101011 | PRB n+2 and PRB n+3 |

It should be noted that Table 9 to Table 12 are merely examples for description, the six types indicate resource allocation of one PRB in the narrowband, the two types indicate resource allocation of two PRBs in the narrowband, the eight types indicate resource allocation of six subcarriers in one of four PRBs configured by using the higher layer signaling, and the 16 types indicate resource allocation of three subcarriers in one of the four PRBs configured by using the higher layer signaling. The resource allocation may be alternatively indicated based on another mapping relationship.

In a fourth possible implementation, for a terminal device in a coverage enhancement mode B, an example in which the resource allocation information includes $\left\lceil \log_2 \left\lfloor \frac{N_{RB}^{UL}}{6} \right\rfloor \right\rceil + 6$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information further includes six bits, and the six bits have 64 bit states, where the 64 bit states include six bit states, the resource allocation information further includes $\left\lceil \log_2 \left\lfloor \frac{N_{RB}^{UL}}{6} \right\rfloor \right\rceil$ bits, the $\left\lceil \log_2 \left\lfloor \frac{N_{RB}^{UL}}{6} \right\rfloor \right\rceil$ bits indicate a narrowband, and each of the six bit states indicates that one resource block in the narrowband is allocated to user equipment; and/or the 64 bit states further include two bit states, the resource allocation information further includes $\left\lceil \log_2 \left\lfloor \frac{N_{RB}^{UL}}{6} \right\rfloor \right\rceil$ bits, the $\left\lceil \log_2 \left\lfloor \frac{N_{RB}^{UL}}{6} \right\rfloor \right\rceil$ bits indicate a narrowband, and each of the two bit states indicates that two resource blocks in the narrowband are allocated to the user equipment; and/or the 64 bit states further include 12 bit states, each of the 12 bit states indicates that six subcarriers in a physical resource block k are allocated to the user equipment, the physical resource block k is one of six physical resource blocks configured by using higher layer signaling, the resource allocation information further includes $\left\lceil \log_2 \left\lfloor \frac{N_{RB}^{UL}}{6} \right\rfloor \right\rceil$ bits, and states of the $\left\lceil \log_2 \left\lfloor \frac{N_{RB}^{UL}}{6} \right\rfloor \right\rceil$ bits are set to all ones or all zeros; and/or the 32 bit states further include 24 bit states, each of the 24 bit states indicates that three subcarriers in a physical resource block y are allocated to the user equipment, the physical resource block y is one of the six physical resource blocks configured by using the higher layer signaling, the resource allocation information further includes $\left\lceil \log_2 \left\lfloor \frac{N_{RB}^{UL}}{6} \right\rfloor \right\rceil$ bits, and states of the $\left\lceil \log_2 \left\lfloor \frac{N_{RB}^{UL}}{6} \right\rfloor \right\rceil$ bits are set to all ones or all zeros. Herein, $N_{RB}^{UL}$ represents a quantity of uplink RBs corresponding to a system bandwidth, ⌈ ⌉ represents rounding up, and ⌊ ⌋ represents rounding down.

The six physical resource blocks configured by using the higher layer signaling are any six physical resource blocks configured in the system bandwidth.

A mapping relationship between the 32 bit states and specific resource allocation meets Table 13. APRB n, a PRB n+1, a PRB n+2, a PRB n+3, a PRB n+4, and a PRB n+5 are six consecutive PRBs in the narrowband. A PRB m1, a PRB m2, a PRB m3, a PRB m4, a PRB m5, and a PRB m6 are any six physical resource blocks in the system bandwidth that are configured by using the higher layer signaling. Herein, n is an integer greater than or equal to 0; n, n+1, n+2, n+3, n+4, and n+5 represent indexes of PRBs; m1 to m6 are integers greater than or equal to 0; and m1, m2, m3, m4, m5, and m6 represent indexes of PRBs.

**Table 13**

| States indicated by six bits | Allocated resource | States indicated by six bits | Allocated resource |
|---|---|---|---|
| 000000 | PRB n | 010110 | Subcarriers 6, 7, and 8 in the PRB n+2 |
| 000001 | PRB n+1 | 010111 | Subcarriers 9, 10, and 11 in the PRB m3 |
| 000010 | PRB n+2 | 011000 | Subcarriers 0, 1, 2, 3, 4, and 5 in the PRB m3 |
| 000011 | PRB n+3 | 011001 | Subcarriers 6, 7, 8, 9, 10, and 11 in the PRB m3 |
| 000100 | PRB n+4 | 011010 | Subcarriers 0, 1, and 2 in the PRB m4 |
| 000101 | PRB n+5 | 011011 | Subcarriers 3, 4, and 5 in the PRB m4 |
| 000110 | PRB n and PRB n+1 | 011100 | Subcarriers 6, 7, and 8 in the PRB m4 |
| 000111 | PRB n+2 and PRB n+3 | 011101 | Subcarriers 9, 10, and 11 in the PRB m4 |
| 001000 | Subcarriers 0, 1, and 2 in the PRB m1 | 011110 | Subcarriers 0, 1, 2, 3, 4, and 5 in the PRB m4 |
| 001001 | Subcarriers 3, 4, and 5 in the PRB m1 | 011111 | Subcarriers 6, 7, 8, 9, 10, and 11 in the PRB m4 |
| 001010 | Subcarriers 6, 7, and 8 in the PRB m1 | 100000 | Subcarriers 0, 1, and 2 in the PRB m5 |
| 001011 | Subcarriers 9, 10, and 11 in the PRB m1 | 100001 | Subcarriers 3, 4, and 5 in the PRB m5 |
| 001100 | Subcarriers 0, 1, 2, 3, 4, and 5 in the PRB m1 | 100010 | Subcarriers 6, 7, and 8 in the PRB m5 |
| 001101 | Subcarriers 6, 7, 8, 9, 10, and 11 in the PRB m 1 | 100011 | Subcarriers 9, 10, and 11 in the PRB m5 |
| 001110 | Subcarriers 0, 1, and 2 in the PRB m2 | 100100 | Subcarriers 0, 1, 2, 3, 4, and 5 in the PRB m5 |
| 001111 | Subcarriers 3, 4, and 5 in the PRB m2 | 100101 | Subcarriers 6, 7, 8, 9, 10, and 11 in the PRB m5 |
| 010000 | Subcarriers 6, 7, and 8 in the PRB m2 | 100110 | Subcarriers 0, 1, and 2 in the PRB m6 |
| 010001 | Subcarriers 9, 10, and 11 in the PRB m2 | 100111 | Subcarriers 3, 4, and 5 in the PRB m6 |
| 010010 | Subcarriers 0, 1, 2, 3, 4, and 5 in the PRB m2 | 101000 | Subcarriers 6, 7, and 8 in the PRB m6 |
| 010011 | Subcarriers 6, 7, 8, 9, 10, and 11 in the PRB m2 | 101001 | Subcarriers 9, 10, and 11 in the PRB m6 |
| 010100 | Subcarriers 0, 1, and 2 in the PRB m3 | 101010 | Subcarriers 0, 1, 2, 3, 4, and 5 in the PRB m6 |
| 010101 | Subcarriers 3, 4, and 5 in the PRB m3 | 101011 | Subcarriers 6, 7, 8, 9, 10, and 11 in the PRB m6 |

A mapping relationship between the 32 bit states and specific resource allocation meets Table 14. APRB n, a PRB n+1, a PRB n+2, a PRB n+3, a PRB n+4, and a PRB n+5 are six consecutive PRBs in the narrowband. A PRB m1, a PRB m2, a PRB m3, a PRB m4, a PRB m5, and a PRB m6 are any six physical resource blocks in the system bandwidth that are configured by using the higher layer signaling. Herein, n is an integer greater than or equal to 0; n, n+1, n+2, n+3, n+4, and n+5 represent indexes of PRBs; m1 to m6 are integers greater than or equal to 0; and m1, m2, m3, m4, m5, and m6 represent indexes of PRBs.

**Table 14**

| States indicated by six bits | Allocated resource | States indicated by six bits | Allocated resource |
|---|---|---|---|
| 000000 | Subcarriers 0, 1, and 2 in the PRB m1 | 010110 | Subcarriers 0, 1, 2, 3, 4, and 5 in the PRB m4 |
| 000001 | Subcarriers 3, 4, and 5 in the PRB m1 | 010111 | Subcarriers 6, 7, 8, 9, 10, and 11 in the PRB m4 |
| 000010 | Subcarriers 6, 7, and 8 in the PRB m1 | 011000 | Subcarriers 0, 1, and 2 in the PRB m5 |
| 000011 | Subcarriers 9, 10, and 11 in the PRB m1 | 011001 | Subcarriers 3, 4, and 5 in the PRB m5 |
| 000100 | Subcarriers 0, 1, 2, 3, 4, and 5 in the PRB m1 | 011010 | Subcarriers 6, 7, and 8 in the PRB m5 |
| 000101 | Subcarriers 6, 7, 8, 9, 10, and 11 in the PRB m 1 | 011011 | Subcarriers 9, 10, and 11 in the PRB m5 |
| 000110 | Subcarriers 0, 1, and 2 in the PRB m2 | 011100 | Subcarriers 0, 1, 2, 3, 4, and 5 in the PRB m5 |
| 000111 | Subcarriers 3, 4, and 5 in the PRB m2 | 011101 | Subcarriers 6, 7, 8, 9, 10, and 11 in the PRB m5 |
| 001000 | Subcarriers 6, 7, and 8 in the PRB m2 | 011110 | Subcarriers 0, 1, and 2 in the PRB m6 |
| 001001 | Subcarriers 9, 10, and 11 in the PRB m2 | 011111 | Subcarriers 3, 4, and 5 in the PRB m6 |
| 001010 | Subcarriers 0, 1, 2, 3, 4, and 5 in the PRB m2 | 100000 | Subcarriers 6, 7, and 8 in the PRB m6 |
| 001011 | Subcarriers 6, 7, 8, 9, 10, and 11 in the PRB m2 | 100001 | Subcarriers 9, 10, and 11 in the PRB m6 |
| 001100 | Subcarriers 0, 1, and 2 in the PRB m3 | 100010 | Subcarriers 0, 1, 2, 3, 4, and 5 in the PRB m6 |
| 001101 | Subcarriers 3, 4, and 5 in the PRB m3 | 100011 | Subcarriers 6, 7, 8, 9, 10, and 11 in the PRB m6 |
| 001110 | Subcarriers 6, 7, and 8 in the PRB m3 | 100100 | PRB n |
| 001111 | Subcarriers 9, 10, and 11 in the PRB m3 | 100101 | PRB n+1 |
| 010000 | Subcarriers 0, 1, 2, 3, 4, and 5 in the PRB m3 | 100110 | PRB n+2 |
| 010001 | Subcarriers 6, 7, 8, 9, 10, and 11 in the PRB m3 | 100111 | PRB n+3 |
| 010010 | Subcarriers 0, 1, and 2 in the PRB m4 | 101000 | PRB n+4 |
| 010011 | Subcarriers 3, 4, and 5 in the PRB m4 | 101001 | PRB n+5 |
| 010100 | Subcarriers 6, 7, and 8 in the PRB m4 | 101010 | PRB n and PRB n+1 |
| 010101 | Subcarriers 9, 10, and 11 in the PRB m4 | 101011 | PRB n+2 and PRB n+3 |

For example, a mapping relationship between the 32 bit states and specific resource allocation may alternatively meet Table 15. A PRB n, a PRB n+1, a PRB n+2, a PRB n+3, a PRB n+4, and a PRB n+5 are six consecutive PRBs in the narrowband. A PRB m1, a PRB m2, a PRB m3, a PRB m4, a PRB m5, and a PRB m6 are any six physical resource blocks in the system bandwidth that are configured by using the higher layer signaling. Herein, n is an integer greater than or equal to 0; n, n+1, n+2, n+3, n+4, and n+5 represent indexes of PRBs; m1 to m6 are integers greater than or equal to 0; and m1, m2, m3, m4, m5, and m6 represent indexes of PRBs.

**Table 15**

| States indicated by six bits | Allocated resource | States indicated by six bits | Allocated resource |
|---|---|---|---|
| 000000 | PRB n | 010110 | Subcarriers 6, 7, and 8 in the PRB m1 |
| 000001 | PRB n+1 | 010111 | Subcarriers 9, 10, and 11 in the PRB m1 |
| 000010 | PRB n+2 | 011000 | Subcarriers 0, 1, and 2 in the PRB m2 |
| 000011 | PRB n+3 | 011001 | Subcarriers 3, 4, and 5 in the PRB m2 |
| 000100 | PRB n+4 | 011010 | Subcarriers 6, 7, and 8 in the PRB m2 |
| 000101 | PRB n+5 | 011011 | Subcarriers 9, 10, and 11 in the PRB m2 |
| 000110 | PRB n and PRB n+1 | 011100 | Subcarriers 0, 1, and 2 in the PRB m3 |
| 000111 | PRB n+2 and PRB n+3 | 011101 | Subcarriers 3, 4, and 5 in the PRB m3 |
| 001000 | Subcarriers 0, 1, 2, 3, 4, and 5 in the PRB m1 | 011110 | Subcarriers 6, 7, and 8 in the PRB m3 |
| 001001 | Subcarriers 6, 7, 8, 9, 10, and 11 in the PRB m1 | 011111 | Subcarriers 9, 10, and 11 in the PRB m3 |
| 001010 | Subcarriers 0, 1, 2, 3, 4, and 5 in the PRB m2 | 100000 | Subcarriers 0, 1, and 2 in the PRB m4 |
| 001011 | Subcarriers 6, 7, 8, 9, 10, and 11 in the PRB m2 | 100001 | Subcarriers 3, 4, and 5 in the PRB m4 |
| 001100 | Subcarriers 0, 1, 2, 3, 4, and 5 in the PRB m3 | 100010 | Subcarriers 6, 7, and 8 in the PRB m4 |
| 001101 | Subcarriers 6, 7, 8, 9, 10, and 11 in the PRB m3 | 100011 | Subcarriers 9, 10, and 11 in the PRB m4 |
| 001110 | Subcarriers 0, 1, 2, 3, 4, and 5 in the PRB m4 | 100100 | Subcarriers 0, 1, and 2 in the PRB m5 |
| 001111 | Subcarriers 6, 7, 8, 9, 10, and 11 in the PRB m4 | 100101 | Subcarriers 3, 4, and 5 in the PRB m5 |
| 010000 | Subcarriers 0, 1, 2, 3, 4, and 5 in the PRB m5 | 100110 | Subcarriers 6, 7, and 8 in the PRB m5 |
| 010001 | Subcarriers 6, 7, 8, 9, 10, and 11 in the PRB m5 | 100111 | Subcarriers 9, 10, and 11 in the PRB m5 |
| 010010 | Subcarriers 0, 1, 2, 3, 4, and 5 in the PRB m6 | 101000 | Subcarriers 0, 1, and 2 in the PRB m6 |
| 010011 | Subcarriers 6, 7, 8, 9, 10, and 11 in the PRB m6 | 101001 | Subcarriers 3, 4, and 5 in the PRB m6 |

(continued)

| States indicated by six bits | Allocated resource | States indicated by six bits | Allocated resource |
|---|---|---|---|
| 010100 | Subcarriers 0, 1, and 2 in the PRB m1 | 101010 | Subcarriers 6, 7, and 8 in the PRB m6 |
| 010101 | Subcarriers 3, 4, and 5 in the PRB m1 | 101011 | Subcarriers 9, 10, and 11 in the PRB m6 |

For example, a mapping relationship between the 32 bit states and specific resource allocation may alternatively meet Table 16. A PRB n, a PRB n+1, a PRB n+2, a PRB n+3, a PRB n+4, and a PRB n+5 are six consecutive PRBs in the narrowband. A PRB m1, a PRB m2, a PRB m3, a PRB m4, a PRB m5, and a PRB m6 are any six physical resource blocks in the system bandwidth that are configured by using the higher layer signaling. Herein, n is an integer greater than or equal to 0; n, n+1, n+2, n+3, n+4, and n+5 represent indexes of PRBs; m1 to m6 are integers greater than or equal to 0; and m1, m2, m3, m4, m5, and m6 represent indexes of PRBs.

**Table 16**

| States indicated by six bits | Allocated resource | States indicated by six bits | Allocated resource |
|---|---|---|---|
| 000000 | Subcarriers 0, 1, 2, 3, 4, and 5 in the PRB m1 | 010110 | Subcarriers 6, 7, and 8 in the PRB m3 |
| 000001 | Subcarriers 6, 7, 8, 9, 10, and 11 in the PRB m 1 | 010111 | Subcarriers 9, 10, and 11 in the PRB m3 |
| 000010 | Subcarriers 0, 1, 2, 3, 4, and 5 in the PRB m2 | 011000 | Subcarriers 0, 1, and 2 in the PRB m4 |
| 000011 | Subcarriers 6, 7, 8, 9, 10, and 11 in the PRB m2 | 011001 | Subcarriers 3, 4, and 5 in the PRB m4 |
| 000100 | Subcarriers 0, 1, 2, 3, 4, and 5 in the PRB m3 | 011010 | Subcarriers 6, 7, and 8 in the PRB m4 |
| 000101 | Subcarriers 6, 7, 8, 9, 10, and 11 in the PRB m3 | 011011 | Subcarriers 9, 10, and 11 in the PRB m4 |
| 000110 | Subcarriers 0, 1, 2, 3, 4, and 5 in the PRB m4 | 011100 | Subcarriers 0, 1, and 2 in the PRB m5 |
| 000111 | Subcarriers 6, 7, 8, 9, 10, and 11 in the PRB m4 | 011101 | Subcarriers 3, 4, and 5 in the PRB m5 |
| 001000 | Subcarriers 0, 1, 2, 3, 4, and 5 in the PRB m5 | 011110 | Subcarriers 6, 7, and 8 in the PRB m5 |
| 001001 | Subcarriers 6, 7, 8, 9, 10, and 11 in the PRB m5 | 011111 | Subcarriers 9, 10, and 11 in the PRB m5 |
| 001010 | Subcarriers 0, 1, 2, 3, 4, and 5 in the PRB m6 | 100000 | Subcarriers 0, 1, and 2 in the PRB m6 |
| 001011 | Subcarriers 6, 7, 8, 9, 10, and 11 in the PRB m6 | 100001 | Subcarriers 3, 4, and 5 in the PRB m6 |
| 001100 | Subcarriers 0, 1, and 2 in the PRB m1 | 100010 | Subcarriers 6, 7, and 8 in the PRB m6 |
| 001101 | Subcarriers 3, 4, and 5 in the PRB m1 | 100011 | Subcarriers 9, 10, and 11 in the PRB m6 |
| 001110 | Subcarriers 6, 7, and 8 in the PRB m1 | 100100 | PRB n |

(continued)

| States indicated by six bits | Allocated resource | States indicated by six bits | Allocated resource |
|---|---|---|---|
| 001111 | Subcarriers 9, 10, and 11 in the PRB m1 | 100101 | PRB n+1 |
| 010000 | Subcarriers 0, 1, and 2 in the PRB m2 | 100110 | PRB n+2 |
| 010001 | Subcarriers 3, 4, and 5 in the PRB m2 | 100111 | PRB n+3 |
| 010010 | Subcarriers 6, 7, and 8 in the PRB m2 | 101000 | PRB n+4 |
| 010011 | Subcarriers 9, 10, and 11 in the PRB m2 | 101001 | PRB n+5 |
| 010100 | Subcarriers 0, 1, and 2 in the PRB m3 | 101010 | PRB n and PRB n+1 |
| 010101 | Subcarriers 3, 4, and 5 in the PRB m3 | 101011 | PRB n+2 and PRB n+3 |

It should be noted that Table 13 to Table 16 are merely examples for description, the six types indicate resource allocation of one PRB in the narrowband, the two types indicate resource allocation of two PRBs in the narrowband, the eight types indicate resource allocation of six subcarriers in one of four PRBs configured by using the higher layer signaling, and the 16 types indicate resource allocation of three subcarriers in one of the four PRBs configured by using the higher layer signaling. The resource allocation may be alternatively indicated based on another mapping relationship.

In a fifth possible implementation, for a terminal device in a coverage enhancement mode A, an example in which the resource allocation information includes $\left\lceil \log_2 \left\lfloor \frac{N_{RB}^{UL}}{6} \right\rfloor \right\rceil + 6$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information includes $\left\lceil \log_2 \left\lfloor \frac{N_{RB}^{UL}}{6} \right\rfloor \right\rceil$ bits, the $\left\lceil \log_2 \left\lfloor \frac{N_{RB}^{UL}}{6} \right\rfloor \right\rceil$ bits indicate a narrowband, $N_{RB}^{UL}$ represents a quantity of uplink RBs corresponding to a system bandwidth, ⌈ ⌉ represents rounding up, and ⌊ ⌋ represents rounding down. The resource allocation information further includes six bits, and the six bits have 64 bit states, where the 64 bit states include 21 bit states, and the 21 bit states indicate, to user equipment, a resource allocation granularity of one resource block and resource allocation in the narrowband; and/or the 64 bit states further include 12 bit states, each of the 12 bit states indicates that six subcarriers in a physical resource block m are allocated to the user equipment, and the physical resource block m is a resource block in the narrowband; and/or the 64 bit states further include 24 bit states, each of the 24 bit states indicates that three subcarriers in a physical resource block x are allocated to the user equipment, and the physical resource block x is a resource block in the narrowband.

For example, a mapping relationship between the 32 bit states and specific resource allocation may alternatively meet Table 17. In Table 17, a PRB n, a PRB n+1, a PRB n+2, a PRB n+3, a PRB n+4, and a PRB n+5 are six consecutive PRBs in the narrowband. Herein, n is an integer greater than or equal to 0; and n, n+1, n+2, n+3, n+4, and n+5 represent indexes of PRBs. In Table 17, an RIV value corresponds to a start resource block $RB_{START}$ included in a PUSCH frequency resource and a quantity $L_{CRBs}$ of consecutive resource blocks. The RIV is defined as follows: if

$(L_{CRBs} - 1) \le \left\lfloor N_{RB}^{UL} / 2 \right\rfloor$ , $RIV = N_{RB}^{UL} (L_{CRBs} - 1) + RB_{START}$ ; or otherwise,

$$RIV = N_{RB}^{UL} (N_{RB}^{UL} - L_{CRBs} + 1) + (N_{RB}^{UL} - 1 - RB_{START})$$ , where $N_{RB}^{UL}$ is fixed to 6, and the PUSCH frequency resource corresponding to the RIV value is a resource in the narrowband. In Table 17, n is an integer greater than or equal to 0; and n, n+1, n+2, n+3, n+4, and n+5 represent indexes of PRBs.

**Table 17**

| States indicated by six bits | Allocated resource | States indicated by six bits | Allocated resource |
|---|---|---|---|
| 000000 | RIV=0 | 011101 | Subcarriers 6, 7, and 8 in the PRB n+1 |
| 000001 | RIV=1 | 011110 | Subcarriers 9, 10, and 11 in the PRB n+1 |
| 000010 | RIV=2 | 011111 | Subcarriers 0, 1, 2, 3, 4, and 5 in the PRB n+1 |
| 000011 | RIV=3 | 100000 | Subcarriers 6, 7, 8, 9, 10, and 11 in the PRB n+1 |
| 000100 | RIV=4 | 100001 | Subcarriers 0, 1, and 2 in the PRB n+2 |
| 000101 | RIV=5 | 100010 | Subcarriers 3, 4, and 5 in the PRB n+2 |
| 000110 | RIV=6 | 100011 | Subcarriers 6, 7, and 8 in the PRB n+2 |
| 000111 | RIV=7 | 100100 | Subcarriers 9, 10, and 11 in the PRB n+2 |
| 001000 | RIV=8 | 100101 | Subcarriers 0, 1, 2, 3, 4, and 5 in the PRB n+2 |
| 001001 | RIV=9 | 100110 | Subcarriers 6, 7, 8, 9, 10, and 11 in the PRB n+2 |
| 001010 | RIV=10 | 100111 | Subcarriers 0, 1, and 2 in the PRB n+3 |
| 001011 | RIV=11 | 101000 | Subcarriers 3, 4, and 5 in the PRB n+3 |
| 001100 | RIV=12 | 101001 | Subcarriers 6, 7, and 8 in the PRB n+3 |
| 001101 | RIV=13 | 101010 | Subcarriers 9, 10, and 11 in the PRB n+3 |
| 001110 | RIV=14 | 101011 | Subcarriers 0, 1, 2, 3, 4, and 5 in the PRB n+3 |
| 001111 | RIV=15 | 101100 | Subcarriers 6, 7, 8, 9, 10, and 11 in the PRB n+3 |
| 010000 | RIV=16 | 101101 | Subcarriers 0, 1, and 2 in the PRB n+4 |
| 010001 | RIV=17 | 101110 | Subcarriers 3, 4, and 5 in the PRB n+4 |
| 010010 | RIV=18 | 101111 | Subcarriers 6, 7, and 8 in the PRB n+4 |
| 010011 | RIV=19 | 110000 | Subcarriers 9, 10, and 11 in the PRB n+4 |

(continued)

| States indicated by six bits | Allocated resource | States indicated by six bits | Allocated resource |
|---|---|---|---|
| 010100 | RIV=20 | 110001 | Subcarriers 0, 1, 2, 3, 4, and 5 in the PRB n+4 |
| 010101 | Subcarriers 0, 1, and 2 in the PRB n | 110010 | Subcarriers 6, 7, 8, 9, 10, and 11 in the PRB n+4 |
| 010110 | Subcarriers 3, 4, and 5 in the PRB n | 110011 | Subcarriers 0, 1, and 2 in the PRB n+5 |
| 010111 | Subcarriers 6, 7, and 8 in the PRB n | 110100 | Subcarriers 3, 4, and 5 in the PRB n+5 |
| 011000 | Subcarriers 9, 10, and 11 in the PRB n | 110101 | Subcarriers 6, 7, and 8 in the PRB n+5 |
| 011001 | Subcarriers 0, 1, 2, 3, 4, and 5 in the PRB n | 110110 | Subcarriers 9, 10, and 11 in the PRB n+5 |
| 011010 | Subcarriers 6, 7, 8, 9, 10, and 11 in the PRB n | 110111 | Subcarriers 0, 1, 2, 3, 4, and 5 in the PRB n+5 |
| 011011 | Subcarriers 0, 1, and 2 in the PRB n+1 | 111000 | Subcarriers 6, 7, 8, 9, 10, and 11 in the PRB n+5 |
| 011100 | Subcarriers 3, 4, and 5 in the PRB n+1 | | |

For example, a mapping relationship between the 32 bit states and specific resource allocation may alternatively meet Table 18. A PRB n, a PRB n+1, a PRB n+2, a PRB n+3, a PRB n+4, and a PRB n+5 are six consecutive PRBs in the narrowband. Herein, n is an integer greater than or equal to 0; and n, n+1, n+2, n+3, n+4, and n+5 represent indexes of PRBs. In Table 18, an RIV value corresponds to a start resource block $RB_{START}$ included in a PUSCH frequency resource and a quantity $L_{CRBs}$ of consecutive resource blocks. The RIV is defined as follows: if $(L_{CRBs}-1) \leq \lfloor N_{RB}^{UL}/2 \rfloor$,

$$RIV = N_{RB}^{UL}(L_{CRBs}-1) + RB_{START}$$

; or otherwise,

$$RIV = N_{RB}^{UL}(N_{RB}^{UL} - L_{CRBs} + 1) + (N_{RB}^{UL} - 1 - RB_{START})$$

, where $N_{RB}^{UL}$ is fixed to 6, and the PUSCH frequency resource corresponding to the RIV value is a resource in the narrowband. In Table 18, n is an integer greater than or equal to 0; and n, n+1, n+2, n+3, n+4, and n+5 represent indexes of PRBs.

**Table 18**

| States indicated by six bits | Allocated resource | States indicated by six bits | Allocated resource |
|---|---|---|---|
| 000000 | Subcarriers 0, 1, and 2 in the PRB n | 011101 | Subcarriers 6, 7, 8, 9, 10, and 11 in the PRB n+4 |
| 000001 | Subcarriers 3, 4, and 5 in the PRB n | 011110 | Subcarriers 0, 1, and 2 in the PRB n+5 |
| 000010 | Subcarriers 6, 7, and 8 in the PRB n | 011111 | Subcarriers 3, 4, and 5 in the PRB n+5 |
| 000011 | Subcarriers 9, 10, and 11 in the PRB n | 100000 | Subcarriers 6, 7, and 8 in the PRB n+5 |

(continued)

| States indicated by six bits | Allocated resource | States indicated by six bits | Allocated resource |
|---|---|---|---|
| 000100 | Subcarriers 0, 1, 2, 3, 4, and 5 in the PRB n | 100001 | Subcarriers 9, 10, and 11 in the PRB n+5 |
| 000101 | Subcarriers 6, 7, 8, 9, 10, and 11 in the PRB n | 100010 | Subcarriers 0, 1, 2, 3, 4, and 5 in the PRB n+5 |
| 000110 | Subcarriers 0, 1, and 2 in the PRB n+1 | 100011 | Subcarriers 6, 7, 8, 9, 10, and 11 in the PRB n+5 |
| 000111 | Subcarriers 3, 4, and 5 in the PRB n+1 | 100100 | RIV=0 |
| 001000 | Subcarriers 6, 7, and 8 in the PRB n+1 | 100101 | RIV=1 |
| 001001 | Subcarriers 9, 10, and 11 in the PRB n+1 | 100110 | RIV=2 |
| 001010 | Subcarriers 0, 1, 2, 3, 4, and 5 in the PRB n+1 | 100111 | RIV=3 |
| 001011 | Subcarriers 6, 7, 8, 9, 10, and 11 in the PRB n+1 | 101000 | RIV=4 |
| 001100 | Subcarriers 0, 1, and 2 in the PRB n+2 | 101001 | RIV=5 |
| 001101 | Subcarriers 3, 4, and 5 in the PRB n+2 | 101010 | RIV=6 |
| 001110 | Subcarriers 6, 7, and 8 in the PRB n+2 | 101011 | RIV=7 |
| 001111 | Subcarriers 9, 10, and 11 in the PRB n+2 | 101100 | RIV=8 |
| 010000 | Subcarriers 0, 1, 2, 3, 4, and 5 in the PRB n+2 | 101101 | RIV=9 |
| 010001 | Subcarriers 6, 7, 8, 9, 10, and 11 in the PRB n+2 | 101110 | RIV=10 |
| 010010 | Subcarriers 0, 1, and 2 in the PRB n+3 | 101111 | RIV=11 |
| 010011 | Subcarriers 3, 4, and 5 in the PRB n+3 | 110000 | RIV=12 |
| 010100 | Subcarriers 6, 7, and 8 in the PRB n+3 | 110001 | RIV=13 |
| 010101 | Subcarriers 9, 10, and 11 in the PRB n+3 | 110010 | RIV=14 |
| 010110 | Subcarriers 0, 1, 2, 3, 4, and 5 in the PRB n+3 | 110011 | RIV=15 |
| 010111 | Subcarriers 6, 7, 8, 9, 10, and 11 in the PRB n+3 | 110100 | RIV=16 |
| 011000 | Subcarriers 0, 1, and 2 in the PRB n+4 | 110101 | RIV=17 |
| 011001 | Subcarriers 3, 4, and 5 in the PRB n+4 | 110110 | RIV=18 |

(continued)

| States indicated by six bits | Allocated resource | States indicated by six bits | Allocated resource |
|---|---|---|---|
| 011010 | Subcarriers 6, 7, and 8 in the PRB n+4 | 110111 | RIV=19 |
| 011011 | Subcarriers 9, 10, and 11 in the PRB n+4 | 111000 | RIV=20 |
| 011100 | Subcarriers 0, 1, 2, 3, 4, and 5 in the PRB n+4 | | |

For example, a mapping relationship between the 32 bit states and specific resource allocation may alternatively meet Table 19. A PRB n, a PRB n+1, a PRB n+2, a PRB n+3, a PRB n+4, and a PRB n+5 are six consecutive PRBs in the narrowband. Herein, n is an integer greater than or equal to 0; and n, n+1, n+2, n+3, n+4, and n+5 represent indexes of PRBs. In Table 19, an RIV value corresponds to a start resource block $RB_{START}$ included in a PUSCH frequency resource and a quantity $L_{CRBs}$ of consecutive resource blocks. The RIV is defined as follows: if $(L_{CRBs} - 1) \leq \left\lfloor N_{RB}^{UL} / 2 \right\rfloor$,

$$RIV = N_{RB}^{UL}(L_{CRBs} - 1) + RB_{START}$$ ; or otherwise,

$$RIV = N_{RB}^{UL}(N_{RB}^{UL} - L_{CRBs} + 1) + (N_{RB}^{UL} - 1 - RB_{START})$$ , where $N_{RB}^{UL}$ is fixed to 6, and the PUSCH frequency resource corresponding to the RIV value is a resource in the narrowband. In Table 19, n is an integer greater than or equal to 0; and n, n+1, n+2, n+3, n+4, and n+5 represent indexes of PRBs.

**Table 19**

| States indicated by six bits | Allocated resource | States indicated by six bits | Allocated resource |
|---|---|---|---|
| 000000 | RIV=0 | 011101 | Subcarriers 0, 1, 2, 3, 4, and 5 in the PRB n+4 |
| 000001 | RIV=1 | 011110 | Subcarriers 6, 7, 8, 9, 10, and 11 in the PRB n+4 |
| 000010 | RIV=2 | 011111 | Subcarriers 0, 1, 2, 3, 4, and 5 in the PRB n+5 |
| 000011 | RIV=3 | 100000 | Subcarriers 6, 7, 8, 9, 10, and 11 in the PRB n+5 |
| 000100 | RIV=4 | 100001 | Subcarriers 0, 1, and 2 in the PRB n |
| 000101 | RIV=5 | 100010 | Subcarriers 3, 4, and 5 in the PRB n |
| 000110 | RIV=6 | 100011 | Subcarriers 6, 7, and 8 in the PRB n |
| 000111 | RIV=7 | 100100 | Subcarriers 9, 10, and 11 in the PRB n |
| 001000 | RIV=8 | 100101 | Subcarriers 0, 1, and 2 in the PRB n+1 |
| 001001 | RIV=9 | 100110 | Subcarriers 3, 4, and 5 in the PRB n+1 |
| 001010 | RIV=10 | 100111 | Subcarriers 6, 7, and 8 in the PRB n+1 |

(continued)

| States indicated by six bits | Allocated resource | States indicated by six bits | Allocated resource |
|---|---|---|---|
| 001011 | RIV=11 | 101000 | Subcarriers 9, 10, and 11 in the PRB n+1 |
| 001100 | RIV=12 | 101001 | Subcarriers 0, 1, and 2 in the PRB n+2 |
| 001101 | RIV=13 | 101010 | Subcarriers 3, 4, and 5 in the PRB n+2 |
| 001110 | RIV=14 | 101011 | Subcarriers 6, 7, and 8 in the PRB n+2 |
| 001111 | RIV=15 | 101100 | Subcarriers 9, 10, and 11 in the PRB n+2 |
| 010000 | RIV=16 | 101101 | Subcarriers 0, 1, and 2 in the PRB n+3 |
| 010001 | RIV=17 | 101110 | Subcarriers 3, 4, and 5 in the PRB n+3 |
| 010010 | RIV=18 | 101111 | Subcarriers 6, 7, and 8 in the PRB n+3 |
| 010011 | RIV=19 | 110000 | Subcarriers 9, 10, and 11 in the PRB n+3 |
| 010100 | RIV=20 | 110001 | Subcarriers 0, 1, and 2 in the PRB n+4 |
| 010101 | Subcarriers 0, 1, 2, 3, 4, and 5 in the PRB n | 110010 | Subcarriers 3, 4, and 5 in the PRB n+4 |
| 010110 | Subcarriers 6, 7, 8, 9, 10, and 11 in the PRB n | 110011 | Subcarriers 6, 7, and 8 in the PRB n+4 |
| 010111 | Subcarriers 0, 1, 2, 3, 4, and 5 in the PRB n+1 | 110100 | Subcarriers 9, 10, and 11 in the PRB n+4 |
| 011000 | Subcarriers 6, 7, 8, 9, 10, and 11 in the PRB n+1 | 110101 | Subcarriers 0, 1, and 2 in the PRB n+5 |
| 011001 | Subcarriers 0, 1, 2, 3, 4, and 5 in the PRB n+2 | 110110 | Subcarriers 3, 4, and 5 in the PRB n+5 |
| 011010 | Subcarriers 6, 7, 8, 9, 10, and 11 in the PRB n+2 | 110111 | Subcarriers 6, 7, and 8 in the PRB n+5 |
| 011011 | Subcarriers 0, 1, 2, 3, 4, and 5 in the PRB n+3 | 111000 | Subcarriers 9, 10, and 11 in the PRB n+5 |
| 011100 | Subcarriers 6, 7, 8, 9, 10, and 11 in the PRB n+3 | 100100 | |

For example, a mapping relationship between the 32 bit states and specific resource allocation may alternatively meet Table 20. A PRB n, a PRB n+1, a PRB n+2, a PRB n+3, a PRB n+4, and a PRB n+5 are six consecutive PRBs in the narrowband. Herein, n is an integer greater than or equal to 0; and n, n+1, n+2, n+3, n+4, and n+5 represent indexes of PRBs. In Table 20, an RIV value corresponds to a start resource block $RB_{START}$ included in a PUSCH frequency resource and a quantity $L_{CRBs}$ of consecutive resource blocks. The RIV is defined as follows: if $(L_{CRBs} - 1) \leq \left\lfloor N_{RB}^{UL} / 2 \right\rfloor$

$$RIV = N_{RB}^{UL} (L_{CRBs} - 1) + RB_{START}$$

;    or    otherwise,

$$RIV = N_{RB}^{UL} (N_{RB}^{UL} - L_{CRBs} + 1) + (N_{RB}^{UL} - 1 - RB_{START})$$ , where $N_{RB}^{UL}$ is fixed to 6, and the PUSCH frequency resource corresponding to the RIV value is a resource in the narrowband. In Table 20, n is an integer greater than or equal to 0; and n, n+1, n+2, n+3, n+4, and n+5 represent indexes of PRBs.

**Table 20**

| States indicated by six bits | Allocated resource | States indicated by six bits | Allocated resource |
|---|---|---|---|
| 000000 | Subcarriers 0, 1, 2, 3, 4, and 5 in the PRB n | 011101 | Subcarriers 3, 4, and 5 in the PRB n+4 |
| 000001 | Subcarriers 6, 7, 8, 9, 10, and 11 in the PRB n | 011110 | Subcarriers 6, 7, and 8 in the PRB n+4 |
| 000010 | Subcarriers 0, 1, 2, 3, 4, and 5 in the PRB n+1 | 011111 | Subcarriers 9, 10, and 11 in the PRB n+4 |
| 000011 | Subcarriers 6, 7, 8, 9, 10, and 11 in the PRB n+1 | 100000 | Subcarriers 0, 1, and 2 in the PRB n+5 |
| 000100 | Subcarriers 0, 1, 2, 3, 4, and 5 in the PRB n+2 | 100001 | Subcarriers 3, 4, and 5 in the PRB n+5 |
| 000101 | Subcarriers 6, 7, 8, 9, 10, and 11 in the PRB n+2 | 100010 | Subcarriers 6, 7, and 8 in the PRB n+5 |
| 000110 | Subcarriers 0, 1, 2, 3, 4, and 5 in the PRB n+3 | 100011 | Subcarriers 9, 10, and 11 in the PRB n+5 |
| 000111 | Subcarriers 6, 7, 8, 9, 10, and 11 in the PRB n+3 | 100100 | RIV=0 |
| 001000 | Subcarriers 0, 1, 2, 3, 4, and 5 in the PRB n+4 | 100101 | RIV=1 |
| 001001 | Subcarriers 6, 7, 8, 9, 10, and 11 in the PRB n+4 | 100110 | RIV=2 |
| 001010 | Subcarriers 0, 1, 2, 3, 4, and 5 in the PRB n+5 | 100111 | RIV=3 |
| 001011 | Subcarriers 6, 7, 8, 9, 10, and 11 in the PRB n+5 | 101000 | RIV=4 |
| 001100 | Subcarriers 0, 1, and 2 in the PRB n | 101001 | RIV=5 |
| 001101 | Subcarriers 3, 4, and 5 in the PRB n | 101010 | RIV=6 |
| 001110 | Subcarriers 6, 7, and 8 in the PRB n | 101011 | RIV=7 |
| 001111 | Subcarriers 9, 10, and 11 in the PRB n | 101100 | RIV=8 |
| 010000 | Subcarriers 0, 1, and 2 in the PRB n+1 | 101101 | RIV=9 |
| 010001 | Subcarriers 3, 4, and 5 in the PRB n+1 | 101110 | RIV=10 |
| 010010 | Subcarriers 6, 7, and 8 in the PRB n+1 | 101111 | RIV=11 |

(continued)

| States indicated by six bits | Allocated resource | States indicated by six bits | Allocated resource |
|---|---|---|---|
| 010011 | Subcarriers 9, 10, and 11 in the PRB n+1 | 110000 | RIV=12 |
| 010100 | Subcarriers 0, 1, and 2 in the PRB n+2 | 110001 | RIV=13 |
| 010101 | Subcarriers 3, 4, and 5 in the PRB n+2 | 110010 | RIV=14 |
| 010110 | Subcarriers 6, 7, and 8 in the PRB n+2 | 110011 | RIV=15 |
| 010111 | Subcarriers 9, 10, and 11 in the PRB n+2 | 110100 | RIV=16 |
| 011000 | Subcarriers 0, 1, and 2 in the PRB n+3 | 110101 | RIV=17 |
| 011001 | Subcarriers 3, 4, and 5 in the PRB n+3 | 110110 | RIV=18 |
| 011010 | Subcarriers 6, 7, and 8 in the PRB n+3 | 110111 | RIV=19 |
| 011011 | Subcarriers 9, 10, and 11 in the PRB n+3 | 111000 | RIV=20 |
| 011100 | Subcarriers 0, 1, and 2 in the PRB n+4 | 100100 | |

It should be noted that Table 17 to Table 20 are merely examples for description, the six types indicate resource allocation of one PRB in the narrowband, the two types indicate resource allocation of two PRBs in the narrowband, the eight types indicate resource allocation of six subcarriers in one of four PRBs configured by using the higher layer signaling, and the 16 types indicate resource allocation of three subcarriers in one of the four PRBs configured by using the higher layer signaling. The resource allocation may be alternatively indicated based on another mapping relationship.

In a sixth possible implementation, for a terminal device in a coverage enhancement mode A, an example in which the resource allocation information includes $\left\lceil \log_2 \left\lfloor \dfrac{N_{\mathrm{RB}}^{\mathrm{UL}}}{6} \right\rfloor \right\rceil + 6$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information includes six bits, and the six bits have 64 bit states, where the 64 bit states include 21 bit states, the resource allocation information further includes $\left\lceil \log_2 \left\lfloor \dfrac{N_{\mathrm{RB}}^{\mathrm{UL}}}{6} \right\rfloor \right\rceil$ bits, the $\left\lceil \log_2 \left\lfloor \dfrac{N_{\mathrm{RB}}^{\mathrm{UL}}}{6} \right\rfloor \right\rceil$ bits indicate a narrowband, and the 21 bit states indicate, to user equipment, a resource allocation granularity of one resource block and resource allocation in the narrowband; and/or the 64 bit states further include 12 bit states, each of the 12 bit states indicates that six subcarriers in a physical resource block k are allocated to the user equipment, the physical resource block k is one of six physical resource blocks configured by using higher layer signaling, the resource allocation information further includes $\left\lceil \log_2 \left\lfloor \dfrac{N_{\mathrm{RB}}^{\mathrm{UL}}}{6} \right\rfloor \right\rceil$ bits, and states of the $\left\lceil \log_2 \left\lfloor \dfrac{N_{\mathrm{RB}}^{\mathrm{UL}}}{6} \right\rfloor \right\rceil$ bits are set

to all ones or all zeros; and/or the 32 bit states further include 24 bit states, each of the 24 bit states indicates that three subcarriers in a physical resource block y are allocated to the user equipment, the physical resource block y is one of the six physical resource blocks configured by using the higher layer signaling, the resource allocation information further includes $\left\lceil \log_2 \left\lfloor \frac{N_{RB}^{UL}}{6} \right\rfloor \right\rceil$ bits, and states of the $\left\lceil \log_2 \left\lfloor \frac{N_{RB}^{UL}}{6} \right\rfloor \right\rceil$ bits are set to all ones or all zeros. Herein, $N_{RB}^{UL}$ represents a quantity of uplink RBs corresponding to a system bandwidth, $\lceil \ \rceil$ represents rounding up, and $\lfloor \ \rfloor$ represents rounding down.

For example, a mapping relationship between the 32 bit states and specific resource allocation may alternatively meet Table 17 to Table 20. A PRB n, a PRB n+1, a PRB n+2, a PRB n+3, a PRB n+4, and a PRB n+5 are any six PRBs in the system bandwidth that are configured by using the higher layer signaling.

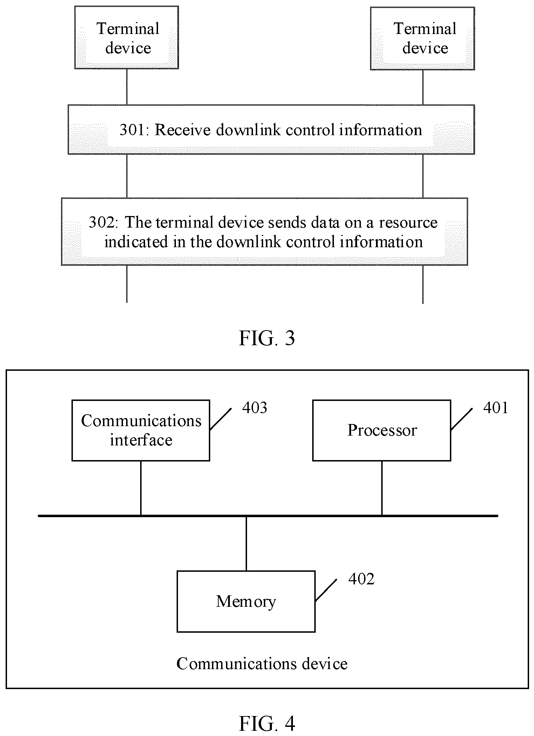

FIG. 3 is a schematic flowchart of a resource allocation method according to an embodiment of this application. As shown in FIG. 3, the resource allocation method includes the following steps 301 to 302.

301: A terminal device receives downlink control information.

302: The terminal device sends data on a resource indicated in the downlink control information.

It should be noted that in this embodiment of this application, because the downlink control information includes indication information and resource allocation information, after the terminal device receives the downlink control information, a network device may determine, in the following at least two possible implementations, the indication information and the resource allocation information included in the downlink control information.

In a first possible implementation, for a terminal device in a coverage enhancement mode B, an example in which the resource allocation information includes $\left\lceil \log_2 \left\lfloor \frac{N_{RB}^{UL}}{6} \right\rfloor \right\rceil + 5$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information includes $\left\lceil \log_2 \left\lfloor \frac{N_{RB}^{UL}}{6} \right\rfloor \right\rceil$ bits, the $\left\lceil \log_2 \left\lfloor \frac{N_{RB}^{UL}}{6} \right\rfloor \right\rceil$ bits indicate a narrowband, $N_{RB}^{UL}$ represents a quantity of uplink RBs corresponding to a system bandwidth, $\lceil \ \rceil$ represents rounding up, and $\lfloor \ \rfloor$ represents rounding down. The resource allocation information further includes five bits, and the five bits have 32 bit states, where the 32 bit states include six bit states, and each of the six bit states indicates that one resource block in the narrowband is allocated to the terminal device; and/or the 32 bit states further include two bit states, and each of the two bit states indicates that two resource blocks in the narrowband are allocated to the terminal device; and/or the 32 bit states further include eight bit states, each of the eight bit states indicates that six subcarriers in a physical resource block m are allocated to the terminal device, and the physical resource block m is one of four physical resource blocks configured by using higher layer signaling; and/or the 32 bit states further include 16 bit states, each of the 16 bit states indicates that three subcarriers in a physical resource block x are allocated to the terminal device, and the physical resource block x is one of the four physical resource blocks configured by using the higher layer signaling.

Optionally, the four physical resource blocks configured by using the higher layer signaling are four physical resource blocks in the narrowband.

It can be learned that the network device indicates, by using the $\left\lceil \log_2 \left\lfloor \frac{N_{RB}^{UL}}{6} \right\rfloor \right\rceil$ bits, a location that is of the allocated resource and that is in the narrowband, and then indicates the 32 bit states by using the other five bits. The 32 bit states correspond to six states about allocating one resource block, two states about allocating two resource blocks, eight states about allocating six subcarriers, and 16 states about allocating three subcarriers.

For example, a mapping relationship between the 32 bit states and specific resource allocation may meet Table 1. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are four resource blocks that are configured by using the higher layer signaling and that are in the PRB n, the PRB n+1, the PRB n+2, the PRB n+3, the PRB n+4, and the PRB n+5.

For example, a mapping relationship between the 32 bit states and specific resource allocation may alternatively meet Table 2. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are four resource blocks that are configured by using the higher layer signaling and that are in the PRB n, the PRB n+1, the PRB n+2, the PRB n+3, the PRB n+4, and the PRB n+5.

For example, a mapping relationship between the 32 bit states and specific resource allocation may alternatively meet Table 3. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are four resource blocks that are configured by using the higher layer signaling and that are in the PRB n, the PRB n+1, the PRB n+2, the PRB n+3, the PRB n+4, and the PRB n+5.

For example, a mapping relationship between the 32 bit states and specific resource allocation may alternatively meet Table 4. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are four resource blocks that are configured by using the higher layer signaling and that are in the PRB n, the PRB n+1, the PRB n+2, the PRB n+3, the PRB n+4, and the PRB n+5.

It should be noted that Table 1 to Table 4 are merely examples for description, the six types indicate resource allocation of one PRB in the narrowband, the two types indicate resource allocation of two PRBs in the narrowband, the eight types indicate resource allocation of six subcarriers in one of four PRBs configured by using the higher layer signaling, and the 16 types indicate resource allocation of three subcarriers in one of the four PRBs configured by using the higher layer signaling. The resource allocation may be alternatively indicated based on another mapping relationship.

In a second possible implementation, for a terminal device in a coverage enhancement mode B, an example in which the resource allocation information includes $\left\lceil \log_2 \left\lfloor \dfrac{N_{\mathrm{RB}}^{\mathrm{UL}}}{6} \right\rfloor \right\rceil + 5$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information includes five bits, and the five bits have 32 bit states, where the 32 bit states include six bit states, the resource information further includes $\left\lceil \log_2 \left\lfloor \dfrac{N_{\mathrm{RB}}^{\mathrm{UL}}}{6} \right\rfloor \right\rceil$ bits, the $\left\lceil \log_2 \left\lfloor \dfrac{N_{\mathrm{RB}}^{\mathrm{UL}}}{6} \right\rfloor \right\rceil$ bits indicate a narrowband, and each of the six bit states indicates that one resource block in the narrowband is allocated to user equipment; and/or the 32 bit states further include two bit states, the resource allocation information further includes $\left\lceil \log_2 \left\lfloor \dfrac{N_{\mathrm{RB}}^{\mathrm{UL}}}{6} \right\rfloor \right\rceil$ bits, the $\left\lceil \log_2 \left\lfloor \dfrac{N_{\mathrm{RB}}^{\mathrm{UL}}}{6} \right\rfloor \right\rceil$ bits indicate a narrowband, and each of the two bit states indicates that two resource blocks in the narrowband are allocated to the user equipment; and/or the 32 bit states further include eight bit states, each of the eight bit states indicates that six subcarriers in a physical resource block m are allocated to the user equipment, the physical resource block m is one of four physical resource blocks configured by using higher layer signaling, the resource allocation information further includes $\left\lceil \log_2 \left\lfloor \dfrac{N_{\mathrm{RB}}^{\mathrm{UL}}}{6} \right\rfloor \right\rceil$ bits, and states of the $\left\lceil \log_2 \left\lfloor \dfrac{N_{\mathrm{RB}}^{\mathrm{UL}}}{6} \right\rfloor \right\rceil$ bits are set to all ones or all zeros; and/or the 32 bit states further include 16 bit states, each of the 16 bit states indicates that three subcarriers in a physical resource block x are allocated to the user equipment, the physical resource block x is one of the four physical resource blocks configured by using the higher layer signaling, the resource allocation infor-mation further includes $\left\lceil \log_2 \left\lfloor \dfrac{N_{\mathrm{RB}}^{\mathrm{UL}}}{6} \right\rfloor \right\rceil$ bits, and states of the $\left\lceil \log_2 \left\lfloor \dfrac{N_{\mathrm{RB}}^{\mathrm{UL}}}{6} \right\rfloor \right\rceil$ bits are set to all ones or all zeros. Herein, $N_{\mathrm{RB}}^{\mathrm{UL}}$ represents a quantity of uplink RBs corresponding to a system bandwidth, $\lceil \ \rceil$ represents rounding up, and $\lfloor \ \rfloor$ represents rounding down.

The four physical resource blocks configured by using the higher layer signaling are any four physical resource blocks configured in the system bandwidth.

For example, a mapping relationship between the 32 bit states and specific resource allocation may meet Table 5. A PRB n, a PRB n+1, a PRB n+2, a PRB n+3, a PRB n+4, and a PRB n+5 are six consecutive PRBs in the narrowband. A PRB m1, a PRB m2, a PRB m3, and a PRB m4 are any four resource blocks in the system bandwidth that are configured by using the higher layer signaling.

For example, a mapping relationship between the 32 bit states and specific resource allocation may alternatively meet Table 6. A PRB n, a PRB n+1, a PRB n+2, a PRB n+3, a PRB n+4, and a PRB n+5 are six consecutive PRBs in the narrowband. A PRB m 1, a PRB m2, a PRB m3, and a PRB m4 are any four resource blocks in the system bandwidth that are configured by using the higher layer signaling.

For example, a mapping relationship between the 32 bit states and specific resource allocation may alternatively meet Table 7. A PRB n, a PRB n+1, a PRB n+2, a PRB n+3, a PRB n+4, and a PRB n+5 are six consecutive PRBs in the narrowband. A PRB m 1, a PRB m2, a PRB m3, and a PRB m4 are any four resource blocks in the system bandwidth that are configured by using the higher layer signaling.

For example, a mapping relationship between the 32 bit states and specific resource allocation may alternatively meet Table 8. A PRB n, a PRB n+1, a PRB n+2, a PRB n+3, a PRB n+4, and a PRB n+5 are six consecutive PRBs in the narrowband. A PRB m 1, a PRB m2, a PRB m3, and a PRB m4 are any four resource blocks in the system bandwidth that are configured by using the higher layer signaling.

It should be noted that Table 5 to Table 8 are merely examples for description, the six types indicate resource allocation of one PRB in the narrowband, the two types indicate resource allocation of two PRBs in the narrowband, the eight types indicate resource allocation of six subcarriers in one of four PRBs configured by using the higher layer signaling, and the 16 types indicate resource allocation of three subcarriers in one of the four PRBs configured by using the higher layer signaling. The resource allocation may be alternatively indicated based on another mapping relationship.

In a third possible implementation, for a terminal device in a coverage enhancement mode B, an example in which the resource allocation information includes $\left\lceil \log_2 \left\lfloor \frac{N_{RB}^{UL}}{6} \right\rfloor \right\rceil + 6$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information includes $\left\lceil \log_2 \left\lfloor \frac{N_{RB}^{UL}}{6} \right\rfloor \right\rceil$ bits, the $\left\lceil \log_2 \left\lfloor \frac{N_{RB}^{UL}}{6} \right\rfloor \right\rceil$ bits indicate a narrowband, $N_{RB}^{UL}$ represents a quantity of uplink RBs corresponding to a system bandwidth, ⌈ ⌉ represents rounding up, and ⌊ ⌋ represents rounding down. The resource allocation information further includes six bits, and the six bits have 64 bit states, where the 64 bit states include six bit states, and each of the six bit states indicates that one resource block in the narrowband is allocated to user equipment; and/or the 64 bit states further include two bit states, and each of the two bit states indicates that two resource blocks in the narrowband are allocated to the user equipment; and/or the 64 bit states further include 12 bit states, each of the 12 bit states indicates that six subcarriers in a physical resource block k are allocated to the user equipment, and the physical resource block k is a resource block in the narrowband; and/or the 64 bit states further include 24 bit states, each of the 24 bit states indicates that three subcarriers in a physical resource block p are allocated to the user equipment, and the physical resource block p is a resource block in the narrowband.

For example, a mapping relationship between the 32 bit states and specific resource allocation may alternatively meet Table 9. A PRB n, a PRB n+1, a PRB n+2, a PRB n+3, a PRB n+4, and a PRB n+5 are six consecutive PRBs in the narrowband.

For example, a mapping relationship between the 32 bit states and specific resource allocation may alternatively meet Table 10. A PRB n, a PRB n+1, a PRB n+2, a PRB n+3, a PRB n+4, and a PRB n+5 are six consecutive PRBs in the narrowband.

For example, a mapping relationship between the 32 bit states and specific resource allocation may alternatively meet Table 11. A PRB n, a PRB n+1, a PRB n+2, a PRB n+3, a PRB n+4, and a PRB n+5 are six consecutive PRBs in the narrowband.

For example, a mapping relationship between the 32 bit states and specific resource allocation may alternatively meet Table 12. A PRB n, a PRB n+1, a PRB n+2, a PRB n+3, a PRB n+4, and a PRB n+5 are six consecutive PRBs in the narrowband.

It should be noted that Table 9 to Table 12 are merely examples for description, the six types indicate resource allocation of one PRB in the narrowband, the two types indicate resource allocation of two PRBs in the narrowband, the 12 types indicate resource allocation of six subcarriers in one of six PRBs configured by using the higher layer signaling, and the 24 types indicate resource allocation of three subcarriers in one of the six PRBs configured by using the higher layer signaling. The resource allocation may be alternatively indicated based on another mapping relationship.

In a fourth possible implementation, for a terminal device in a coverage enhancement mode B, an example in which the resource allocation information includes $\left\lceil \log_2 \left\lfloor \frac{N_{RB}^{UL}}{6} \right\rfloor \right\rceil + 6$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information further includes six bits, and the six bits have 64 bit states, where the 64 bit states include six bit states, the resource allocation information further includes $\left\lceil \log_2 \left\lfloor \frac{N_{RB}^{UL}}{6} \right\rfloor \right\rceil$ bits, the $\left\lceil \log_2 \left\lfloor \frac{N_{RB}^{UL}}{6} \right\rfloor \right\rceil$ bits indicate a narrowband, and each of the six bit states indicates that one resource block in the narrowband is allocated to user equipment; and/or the 64 bit states further include two bit states, the resource allocation information further includes $\left\lceil \log_2 \left\lfloor \frac{N_{RB}^{UL}}{6} \right\rfloor \right\rceil$ bits, the $\left\lceil \log_2 \left\lfloor \frac{N_{RB}^{UL}}{6} \right\rfloor \right\rceil$ bits indicate a narrowband, and each of the two bit states indicates that two resource blocks in the narrowband are allocated to the user equipment; and/or the 64 bit states further include 12 bit states, each of the 12 bit states indicates that six subcarriers in a physical resource block k are allocated to the user equipment, the physical resource block k is one of six physical resource blocks configured by using higher layer signaling, the resource allocation information further includes $\left\lceil \log_2 \left\lfloor \frac{N_{RB}^{UL}}{6} \right\rfloor \right\rceil$ bits, and states of the $\left\lceil \log_2 \left\lfloor \frac{N_{RB}^{UL}}{6} \right\rfloor \right\rceil$ bits are set to all ones or all zeros; and/or the 32 bit states further include 24 bit states, each of the 24 bit states indicates that three subcarriers in a physical resource block y are allocated to the user equipment, the physical resource block y is one of the six physical resource blocks configured by using the higher layer signaling, the resource allocation information further includes $\left\lceil \log_2 \left\lfloor \frac{N_{RB}^{UL}}{6} \right\rfloor \right\rceil$ bits, and states of the $\left\lceil \log_2 \left\lfloor \frac{N_{RB}^{UL}}{6} \right\rfloor \right\rceil$ bits are set to all ones or all zeros. Herein, $N_{RB}^{UL}$ represents a quantity of uplink RBs corresponding to a system bandwidth, $\lceil \ \rceil$ represents rounding up, and $\lfloor \ \rfloor$ represents rounding down.

The six physical resource blocks configured by using the higher layer signaling are any six physical resource blocks configured in the system bandwidth.

For example, a mapping relationship between the 32 bit states and specific resource allocation may alternatively meet Table 13. A PRB n, a PRB n+1, a PRB n+2, a PRB n+3, a PRB n+4, and a PRB n+5 are six consecutive PRBs in the narrowband. A PRB m1, a PRB m2, a PRB m3, a PRB m4, a PRB m5, and a PRB m6 are any six physical resource blocks in the system bandwidth that are configured by using the higher layer signaling.

For example, a mapping relationship between the 32 bit states and specific resource allocation may alternatively meet Table 14. A PRB n, a PRB n+1, a PRB n+2, a PRB n+3, a PRB n+4, and a PRB n+5 are six consecutive PRBs in the narrowband. A PRB m1, a PRB m2, a PRB m3, a PRB m4, a PRB m5, and a PRB m6 are any six physical resource blocks in the system bandwidth that are configured by using the higher layer signaling.

For example, a mapping relationship between the 32 bit states and specific resource allocation may alternatively meet Table 15. A PRB n, a PRB n+1, a PRB n+2, a PRB n+3, a PRB n+4, and a PRB n+5 are six consecutive PRBs in the narrowband. A PRB m1, a PRB m2, a PRB m3, a PRB m4, a PRB m5, and a PRB m6 are any six physical resource blocks in the system bandwidth that are configured by using the higher layer signaling.

For example, a mapping relationship between the 32 bit states and specific resource allocation may alternatively meet Table 16. A PRB n, a PRB n+1, a PRB n+2, a PRB n+3, a PRB n+4, and a PRB n+5 are six consecutive PRBs in the narrowband. A PRB m1, a PRB m2, a PRB m3, a PRB m4, a PRB m5, and a PRB m6 are any six physical resource blocks in the system bandwidth that are configured by using the higher layer signaling.

It should be noted that Table 13 to Table 16 are merely examples for description, the six types indicate resource allocation of one PRB in the narrowband, the two types indicate resource allocation of two PRBs in the narrowband, the 12 types indicate resource allocation of six subcarriers in one of six PRBs configured by using the higher layer signaling, and the 24 types indicate resource allocation of three subcarriers in one of the four PRBs configured by using the higher layer signaling. The resource allocation may be alternatively indicated based on another mapping relationship.

In a fifth possible implementation, for a terminal device in a coverage enhancement mode A, an example in which the resource allocation information includes $\left\lceil \log_2 \left\lfloor \frac{N_{RB}^{UL}}{6} \right\rfloor \right\rceil + 6$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information includes $\left\lceil \log_2 \left\lfloor \frac{N_{RB}^{UL}}{6} \right\rfloor \right\rceil$ bits, the $\left\lceil \log_2 \left\lfloor \frac{N_{RB}^{UL}}{6} \right\rfloor \right\rceil$ bits indicate a narrowband, $N_{RB}^{UL}$ represents a quantity of uplink RBs corresponding to a system bandwidth, $\lceil \ \rceil$ represents rounding up, and $\lfloor \ \rfloor$ represents rounding down. The resource allocation information further includes six bits, and the six bits have 64 bit states, where the 64 bit states include 21 bit states, and the 21 bit states indicate, to user equipment, a resource allocation granularity of one resource block and resource allocation in the narrowband; and/or the 64 bit states further include 12 bit states, each of the 12 bit states indicates that six subcarriers in a physical resource block m are allocated to the user equipment, and the physical resource block m is a resource block in the narrowband; and/or the 64 bit states further include 24 bit states, each of the 24 bit states indicates that three subcarriers in a physical resource block x are allocated to the user equipment, and the physical resource block x is a resource block in the narrowband.

For example, a mapping relationship between the 32 bit states and specific resource allocation may alternatively meet Table 17. A PRB n, a PRB n+1, a PRB n+2, a PRB n+3, a PRB n+4, and a PRB n+5 are six consecutive PRBs in the narrowband.

For example, a mapping relationship between the 32 bit states and specific resource allocation may alternatively meet Table 18. A PRB n, a PRB n+1, a PRB n+2, a PRB n+3, a PRB n+4, and a PRB n+5 are six consecutive PRBs in the narrowband.

For example, a mapping relationship between the 32 bit states and specific resource allocation may alternatively meet Table 19. A PRB n, a PRB n+1, a PRB n+2, a PRB n+3, a PRB n+4, and a PRB n+5 are six consecutive PRBs in the narrowband.

For example, a mapping relationship between the 32 bit states and specific resource allocation may alternatively meet Table 20. A PRB n, a PRB n+1, a PRB n+2, a PRB n+3, a PRB n+4, and a PRB n+5 are six consecutive PRBs in the narrowband.

It should be noted that Table 17 to Table 20 are merely examples for description, the six types indicate resource allocation of one PRB in the narrowband, the two types indicate resource allocation of two PRBs in the narrowband, the 12 types indicate resource allocation of six subcarriers in one of six PRBs configured by using the higher layer signaling, and the 24 types indicate resource allocation of three subcarriers in one of the six PRBs configured by using the higher layer signaling. The resource allocation may be alternatively indicated based on another mapping relationship.

In a sixth possible implementation, for a terminal device in a coverage enhancement mode A, an example in which the resource allocation information includes $\left\lceil \log_2 \left\lfloor \frac{N_{RB}^{UL}}{6} \right\rfloor \right\rceil + 6$ bits is used for description. The network device determines the resource allocation information in the downlink control information based on the resource allocated to the terminal device. The network device sends the determined downlink control information to the terminal device. The network device receives, on the resource allocated to the terminal device, the data sent by the terminal device.

Optionally, the resource allocation information includes six bits, and the six bits have 64 bit states, where the 64 bit states include 21 bit states, the resource allocation information further includes $\left\lceil \log_2 \left\lfloor \frac{N_{RB}^{UL}}{6} \right\rfloor \right\rceil$ bits, the $\left\lceil \log_2 \left\lfloor \frac{N_{RB}^{UL}}{6} \right\rfloor \right\rceil$ bits indicate a narrowband, and the 21 bit states indicate, to user equipment, a resource allocation granularity of one resource block and resource allocation in the narrowband; and/or the 64 bit states further include 12 bit states, each of the 12 bit states indicates that six subcarriers in a physical resource block k are allocated to the user equipment, the physical resource block k is one of six physical resource blocks configured by using higher layer signaling, the resource allocation information further includes $\left\lceil \log_2 \left\lfloor \frac{N_{RB}^{UL}}{6} \right\rfloor \right\rceil$ bits, and states of the $\left\lceil \log_2 \left\lfloor \frac{N_{RB}^{UL}}{6} \right\rfloor \right\rceil$ bits are set to all ones or all zeros; and/or the 32 bit states further include 24 bit states, each of the 24 bit states indicates that three subcarriers in a physical resource block y are allocated to the user equipment, the physical resource block y is one of the six physical resource blocks configured by using the higher layer signaling, the resource allocation information further includes $\left\lceil \log_2 \left\lfloor \frac{N_{RB}^{UL}}{6} \right\rfloor \right\rceil$ bits, and states of the $\left\lceil \log_2 \left\lfloor \frac{N_{RB}^{UL}}{6} \right\rfloor \right\rceil$ bits are set to all ones or all zeros. Herein, $N_{RB}^{UL}$ represents a quantity of uplink RBs corresponding to a system bandwidth, $\lceil \ \rceil$ represents rounding up, and $\lfloor \ \rfloor$ represents rounding down.

For example, a mapping relationship between the 32 bit states and specific resource allocation may alternatively meet Table 17 to Table 20. A PRB n, a PRB n+1, a PRB n+2, a PRB n+3, a PRB n+4, and a PRB n+5 are any six PRBs in the system bandwidth that are configured by using the higher layer signaling.

It should be noted that Table 17 to Table 20 are merely examples for description, the six types indicate resource allocation of one PRB in the narrowband, the two types indicate resource allocation of two PRBs in the narrowband, the 12 types indicate resource allocation of six subcarriers in one of six PRBs configured by using the higher layer signaling, and the 24 types indicate resource allocation of three subcarriers in one of the six PRBs configured by using the higher layer signaling. The resource allocation may be alternatively indicated based on another mapping relationship.

FIG. 4 is a schematic structural diagram of a network device according to an embodiment of this application. As shown in FIG. 4, the network device 400 includes a processor 401, a memory 402, and a communications interface 403. The processor 401, the memory 402, and the communications interface 403 are connected to each other.

The processor 401 may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. Alternatively, the processor 401 may be a combination of processors implementing a computing function, for example, a combination of one or more microprocessors, or a combination of the DSP and a microprocessor.

The communications interface 403 is configured to communicate with another network element (for example, a terminal device).

The processor 401 invokes program code stored in the memory 402, to perform the steps performed by the network device described in the foregoing method embodiments.

Based on a same inventive concept, a problem-resolving principle of the network device provided in this embodiment of this application is similar to that of the method embodiments of this application. Therefore, for implementation of each device, refer to implementation of the method. Details are not described herein again for brevity.

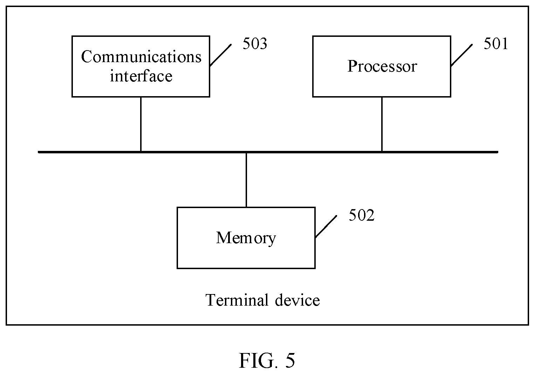

FIG. 5 is a schematic structural diagram of a terminal device according to an embodiment of this application. As shown in FIG. 5, the terminal device 500 includes a processor 501, a memory 502, and a communications interface 503. The processor 501, the memory 502, and the communications interface 503 are connected to each other.

The processor 501 may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. Alternatively, the processor 501 may be a combination of processors implementing a computing function, for example, a combination of one or more microprocessors, or a combination of the DSP and a microprocessor.

The communications interface 503 is configured to communicate with another network element (for example, a network device).

The processor 501 invokes program code stored in the memory 502, to perform the steps performed by the terminal device in the foregoing method embodiments.

Based on a same inventive concept, a problem-resolving principle of the terminal device provided in this embodiment of this application is similar to that of the method embodiments of this application. Therefore, for implementation of each device, refer to implementation of the method. Details are not described herein again for brevity.

It may be understood that when the embodiments of this application are applied to a chip of the network device, the chip of the network device implements functions of the network device in the foregoing method embodiments. The chip of the network device sends first information to another module (for example, a radio frequency module or an antenna) of the network device, and receives second information from the another module of the network device. The first information is sent to the terminal device through the another module of the network device, and the second information is sent by the terminal device to the network device. When the embodiments of this application are applied to a chip of the terminal device, the chip of the terminal device implements functions of the terminal device in the foregoing method embodiments. The chip of the terminal device receives the first information from another module (for example, a radio frequency module or an antenna) of the terminal device, and sends the second information to the another module of the terminal device. The first information is sent by the network device to the terminal device, and the second information is sent to the network device. The first information and the second information herein are not a particular type of information, but are merely used to indicate a communication mode between the chip and the another module.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instruction may be stored in a computer readable storage medium, or may be transmitted by using the computer readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

In the foregoing embodiments, the description of each embodiment has respective focuses. For a part that is not described in detail in an embodiment, refer to related descriptions in other embodiments.

**Claims**

1. A resource allocation method, comprising:

   determining (201), by a network device, downlink control information, wherein
   the downlink control information comprises resource allocation information, and the resource allocation information indicates a resource allocated to a terminal device;
   sending (202), by the network device, the downlink control information to the terminal device; and
   receiving (203), by the network device on the resource allocated to the terminal device, data sent by the terminal device; wherein

   the resource allocation information comprises $\left\lceil \log_2 \left\lfloor \frac{N_{\mathrm{RB}}^{\mathrm{UL}}}{6} \right\rfloor \right\rceil$ bits, the $\left\lceil \log_2 \left\lfloor \frac{N_{\mathrm{RB}}^{\mathrm{UL}}}{6} \right\rfloor \right\rceil$ bits indicate a narrowband, the narrowband includes six consecutive physical resource blocks, PRBs, in frequency domain, $N_{\mathrm{RB}}^{\mathrm{UL}}$ represents a quantity of uplink PRBs corresponding to a system bandwidth, $\lceil \ \rceil$ represents rounding up, and $\lfloor \ \rfloor$ represents rounding down; and

the resource allocation information further comprises five bits, and the five bits have 32 bit states, wherein the 32 bit states comprise six bit states, and each of the six bit states indicates that one PRB in the narrowband is allocated to the terminal device; and

the 32 bit states further comprise two bit states, and each of the two bit states indicates that two PRBs in the narrowband are allocated to the terminal device; and

the 32 bit states comprise eight bit states, each of the eight bit states indicates that six subcarriers in a PRB m are allocated to the terminal device, and the PRB m is one of four PRBs configured by using higher layer signaling; and

the 32 bit states comprise 16 bit states, each of the 16 bit states indicates that three subcarriers in a PRB x are allocated to the terminal device, and the PRB x is one of the four PRBs configured by using the higher layer signaling;

wherein the four PRBs configured by using the higher layer signaling are any four PRBs in the system bandwidth;

wherein indices of the six PRBs of the narrowband are n, n+1, n+2, n+3, n+4, and n+5;

wherein indices of the four PRBs configured by using the higher layer signaling are m1, m2, m3, and m4;

wherein n, m1, m2, m3, and m4 are non-negative integers; and

wherein either Table 5 or Table 6 applies;

Table 5:

| State of the five bits | Allocated resource | State of the five bits | Allocated resource |
|---|---|---|---|
| 00000 | PRB n | 10000 | Subcarriers 6, 7, and 8 in the PRB m2 |
| 00001 | PRB n+1 | 10001 | Subcarriers 9, 10, and 11 in the PRB m2 |
| 00010 | PRB n+2 | 10010 | Subcarriers 0, 1, 2, 3, 4, and 5 in the PRB m2 |
| 00011 | PRB n+3 | 10011 | Subcarriers 6, 7, 8, 9, 10, and 11 in the PRB m2 |
| 00100 | PRB n+4 | 10100 | Subcarriers 0, 1, and 2 in the PRB m3 |
| 00101 | PRB n+5 | 10101 | Subcarriers 3, 4, and 5 in the PRB m3 |
| 00110 | PRB n and PRB n+1 | 10110 | Subcarriers 6, 7, and 8 in the PRB m3 |
| 00111 | PRB n+2 and PRB n+3 | 10111 | Subcarriers 9, 10, and 11 in the PRB m3 |
| 01000 | Subcarriers 0, 1, and 2 in the PRB m1 | 11000 | Subcarriers 0, 1, 2, 3, 4, and 5 in the PRB m3 |
| 01001 | Subcarriers 3, 4, and 5 in the PRB m1 | 11001 | Subcarriers 6, 7, 8, 9, 10, and 11 in the PRB m3 |
| 01010 | Subcarriers 6, 7, and 8 in the PRB m1 | 11010 | Subcarriers 0, 1, and 2 in the PRB m4 |
| 01011 | Subcarriers 9, 10, and 11 in the PRB m1 | 11011 | Subcarriers 3, 4, and 5 in the PRB m4 |
| 01100 | Subcarriers 0, 1, 2, 3, 4, and 5 in the PRB m1 | 11100 | Subcarriers 6, 7, and 8 in the PRB m4 |
| 01101 | Subcarriers 6, 7, 8, 9, 10, and 11 in the PRB m1 | 11101 | Subcarriers 9, 10, and 11 in the PRB m4 |
| 01110 | Subcarriers 0, 1, and 2 in the PRB m2 | 11110 | Subcarriers 0, 1, 2, 3, 4, and 5 in the PRB m4 |
| 01111 | Subcarriers 3, 4, and 5 in the PRB m2 | 11111 | Subcarriers 6, 7, 8, 9, 10, and 11 in the PRB m4 |

Table 6:

| State of the five bits | Allocated resource | State of the five bits | Allocated resource |
|---|---|---|---|
| 00000 | Subcarriers 0, 1, and 2 in the PRB m1 | 10000 | Subcarriers 0, 1, 2, 3, 4, and 5 in the PRB m3 |
| 00001 | Subcarriers 3, 4, and 5 in the PRB m1 | 10001 | Subcarriers 6, 7, 8, 9, 10, and 11 in the PRB m3 |
| 00010 | Subcarriers 6, 7, and 8 in the PRB m1 | 10010 | Subcarriers 0, 1, and 2 in the PRB m4 |
| 00011 | Subcarriers 9, 10, and 11 in the PRB m1 | 10011 | Subcarriers 3, 4, and 5 in the PRB m4 |
| 00100 | Subcarriers 0, 1, 2, 3, 4, and 5 in the PRB m1 | 10100 | Subcarriers 6, 7, and 8 in the PRB m4 |
| 00101 | Subcarriers 6, 7, 8, 9, 10, and 11 in the PRB m1 | 10101 | Subcarriers 9, 10, and 11 in the PRB m4 |
| 00110 | Subcarriers 0, 1, and 2 in the PRB m2 | 10110 | Subcarriers 0, 1, 2, 3, 4, and 5 in the PRB m4 |
| 00111 | Subcarriers 3, 4, and 5 in the PRB m2 | 10111 | Subcarriers 6, 7, 8, 9, 10, and 11 in the PRB m4 |
| 01000 | Subcarriers 6, 7, and 8 in the PRB m2 | 11000 | PRB n |
| 01001 | Subcarriers 9, 10, and 11 in the PRB m2 | 11001 | PRB n+1 |
| 01010 | Subcarriers 0, 1, 2, 3, 4, and 5 in the PRB m2 | 11010 | PRB n+2 |
| 01011 | Subcarriers 6, 7, 8, 9, 10, and 11 in the PRB m2 | 11011 | PRB n+3 |
| 01100 | Subcarriers 0, 1, and 2 in the PRB m3 | 11100 | PRB n+4 |
| 01101 | Subcarriers 3, 4, and 5 in the PRB m3 | 11101 | PRB n+5 |
| 01110 | Subcarriers 6, 7, and 8 in the PRB m3 | 11110 | PRB n and PRB n+1 |
| 01111 | Subcarriers 9, 10, and 11 in the PRB m3 | 11111 | PRB n+2 and PRB n+3. |

2. The method according to claim 1, wherein

for the eight bit states, which indicate that six subcarriers in the PRB m are allocated to the terminal device,

$$\left\lceil \log_2 \left\lfloor \frac{N_{\mathrm{RB}}^{\mathrm{UL}}}{6} \right\rfloor \right\rceil$$

states of the bits are set to all ones or all zeros; and/or

for the 16 bit states, which indicate that three subcarriers in the PRB x are allocated to the terminal device,

$$\left\lceil \log_2 \left\lfloor \frac{N_{\mathrm{RB}}^{\mathrm{UL}}}{6} \right\rfloor \right\rceil$$

states of the bits are set to all ones or all zeros.

3. A resource allocation method, comprising:

determining (201), by a network device, downlink control information, wherein

the downlink control information comprises resource allocation information, and the resource allocation information indicates a resource allocated to a terminal device;

sending (202), by the network device, the downlink control information to the terminal device; and

receiving (203), by the network device on the resource allocated to the terminal device, data sent by the terminal device;

wherein the resource allocation information comprises $\left\lceil \log_2 \left\lfloor \frac{N_{RB}^{UL}}{6} \right\rfloor \right\rceil$ bits, $N_{RB}^{UL}$ represents a quantity of uplink physical resource blocks, PRBs, corresponding to a system bandwidth, $\lceil \rceil$ represents rounding up, and $\lfloor \rfloor$ represents rounding down,

wherein the $\left\lceil \log_2 \left\lfloor \frac{N_{RB}^{UL}}{6} \right\rfloor \right\rceil$ bits indicate a narrowband, the narrowband includes six consecutive PRBs in frequency domain, and

wherein the resource allocation information further comprises six bits, and the six bits have 64 bit states, and the 64 bit states comprise six bit states, each of the six bit states indicates that one PRB in the narrowband is allocated to the terminal device; and

the 64 bit states further comprise two bit states, and each of the two bit states indicates that two PRBs in the narrowband are allocated to the terminal device; and

the 64 bit states further comprise 12 bit states, each of the 12 bit states indicates that six subcarriers in a PRB k are allocated to the terminal device, the PRB k is one of six PRBs configured by using higher layer signaling, and states of the $\left\lceil \log_2 \left\lfloor \frac{N_{RB}^{UL}}{6} \right\rfloor \right\rceil$ bits are set to all ones or all zeros; and

the 64 bit states further comprise 24 bit states, each of the 24 bit states indicates that three subcarriers in a PRB y are allocated to the terminal device, the PRB y is one of the six PRBs configured by using the higher layer signaling, and states of the $\left\lceil \log_2 \left\lfloor \frac{N_{RB}^{UL}}{6} \right\rfloor \right\rceil$ bits are set to all ones or all zeros;

wherein the six PRBs configured by using the higher layer signaling are any six PRBs in the system bandwidth

wherein indices of the six PRBs of the narrowband are n, n+1, n+2, n+3, n+4, and n+5;

wherein indices of the six PRBs configured by using the higher layer signaling are m1, m2, m3, m4, m5, and m6;

wherein n, m1, m2, m3, m4, m5, and m6 are non-negative integers; and

wherein either Table 13 or Table 14 applies;

Table 13:

| State of the six bits | Allocated resource | State of the six bits | Allocated resource |
|---|---|---|---|
| 000000 | PRB n | 010110 | Subcarriers 6, 7, and 8 in the PRB n+2 |
| 000001 | PRB n+1 | 010111 | Subcarriers 9, 10, and 11 in the PRB m3 |
| 000010 | PRB n+2 | 011000 | Subcarriers 0, 1, 2, 3, 4, and 5 in the PRB m3 |
| 000011 | PRB n+3 | 011001 | Subcarriers 6, 7, 8, 9, 10, and 11 in the PRB m3 |
| 000100 | PRB n+4 | 011010 | Subcarriers 0, 1, and 2 in the PRB m4 |
| 000101 | PRB n+5 | 011011 | Subcarriers 3, 4, and 5 in the PRB m4 |
| 000110 | PRB n and PRB n+1 | 011100 | Subcarriers 6, 7, and 8 in the PRB m4 |

(continued)

| State of the six bits | Allocated resource | State of the six bits | Allocated resource |
|---|---|---|---|
| 000111 | PRB n+2 and PRB n+3 | 011101 | Subcarriers 9, 10, and 11 in the PRB m4 |
| 001000 | Subcarriers 0, 1, and 2 in the PRB m1 | 011110 | Subcarriers 0, 1, 2, 3, 4, and 5 in the PRB m4 |
| 001001 | Subcarriers 3, 4, and 5 in the PRB m1 | 011111 | Subcarriers 6, 7, 8, 9, 10, and 11 in the PRB m4 |
| 001010 | Subcarriers 6, 7, and 8 in the PRB m1 | 100000 | Subcarriers 0, 1, and 2 in the PRB m5 |
| 001011 | Subcarriers 9, 10, and 11 in the PRB m1 | 100001 | Subcarriers 3, 4, and 5 in the PRB m5 |
| 001100 | Subcarriers 0, 1, 2, 3, 4, and 5 in the PRB m1 | 100010 | Subcarriers 6, 7, and 8 in the PRB m5 |
| 001101 | Subcarriers 6, 7, 8, 9, 10, and 11 in the PRB m1 | 100011 | Subcarriers 9, 10, and 11 in the PRB m5 |
| 001110 | Subcarriers 0, 1, and 2 in the PRB m2 | 100100 | Subcarriers 0, 1, 2, 3, 4, and 5 in the PRB m5 |
| 001111 | Subcarriers 3, 4, and 5 in the PRB m2 | 100101 | Subcarriers 6, 7, 8, 9, 10, and 11 in the PRB m5 |
| 010000 | Subcarriers 6, 7, and 8 in the PRB m2 | 100110 | Subcarriers 0, 1, and 2 in the PRB m6 |
| 010001 | Subcarriers 9, 10, and 11 in the PRB m2 | 100111 | Subcarriers 3, 4, and 5 in the PRB m6 |
| 010010 | Subcarriers 0, 1, 2, 3, 4, and 5 in the PRB m2 | 101000 | Subcarriers 6, 7, and 8 in the PRB m6 |
| 010011 | Subcarriers 6, 7, 8, 9, 10, and 11 in the PRB m2 | 101001 | Subcarriers 9, 10, and 11 in the PRB m6 |
| 010100 | Subcarriers 0, 1, and 2 in the PRB m3 | 101010 | Subcarriers 0, 1, 2, 3, 4, and 5 in the PRB m6 |
| 010101 | Subcarriers 3, 4, and 5 in the PRB m3 | 101011 | Subcarriers 6, 7, 8, 9, 10, and 11 in the PRB m6 |

Table 14:

| State of the six bits | Allocated resource | State of the six bits | Allocated resource |
|---|---|---|---|
| 000000 | Subcarriers 0, 1, and 2 in the PRB m1 | 010110 | Subcarriers 0, 1, 2, 3, 4, and 5 in the PRB m4 |
| 000001 | Subcarriers 3, 4, and 5 in the PRB m1 | 010111 | Subcarriers 6, 7, 8, 9, 10, and 11 in the PRB m4 |
| 000010 | Subcarriers 6, 7, and 8 in the PRB m1 | 011000 | Subcarriers 0, 1, and 2 in the PRB m5 |
| 000011 | Subcarriers 9, 10, and 11 in the PRB m1 | 011001 | Subcarriers 3, 4, and 5 in the PRB m5 |
| 000100 | Subcarriers 0, 1, 2, 3, 4, and 5 in the PRB m1 | 011010 | Subcarriers 6, 7, and 8 in the PRB m5 |

(continued)

| State of the six bits | Allocated resource | State of the six bits | Allocated resource |
|---|---|---|---|
| 000101 | Subcarriers 6, 7, 8, 9, 10, and 11 in the PRB m1 | 011011 | Subcarriers 9, 10, and 11 in the PRB m5 |
| 000110 | Subcarriers 0, 1, and 2 in the PRB m2 | 011100 | Subcarriers 0, 1, 2, 3, 4, and 5 in the PRB m5 |
| 000111 | Subcarriers 3, 4, and 5 in the PRB m2 | 011101 | Subcarriers 6, 7, 8, 9, 10, and 11 in the PRB m5 |
| 001000 | Subcarriers 6, 7, and 8 in the PRB m2 | 011110 | Subcarriers 0, 1, and 2 in the PRB m6 |
| 001001 | Subcarriers 9, 10, and 11 in the PRB m2 | 011111 | Subcarriers 3, 4, and 5 in the PRB m6 |
| 001010 | Subcarriers 0, 1, 2, 3, 4, and 5 in the PRB m2 | 100000 | Subcarriers 6, 7, and 8 in the PRB m6 |
| 001011 | Subcarriers 6, 7, 8, 9, 10, and 11 in the PRB m2 | 100001 | Subcarriers 9, 10, and 11 in the PRB m6 |
| 001100 | Subcarriers 0, 1, and 2 in the PRB m3 | 100010 | Subcarriers 0, 1, 2, 3, 4, and 5 in the PRB m6 |
| 001101 | Subcarriers 3, 4, and 5 in the PRB m3 | 100011 | Subcarriers 6, 7, 8, 9, 10, and 11 in the PRB m6 |
| 001110 | Subcarriers 6, 7, and 8 in the PRB m3 | 100100 | PRB n |
| 001111 | Subcarriers 9, 10, and 11 in the PRB m3 | 100101 | PRB n+1 |
| 010000 | Subcarriers 0, 1, 2, 3, 4, and 5 in the PRB m3 | 100110 | PRB n+2 |
| 010001 | Subcarriers 6, 7, 8, 9, 10, and 11 in the PRB m3 | 100111 | PRB n+3 |
| 010010 | Subcarriers 0, 1, and 2 in the PRB m4 | 101000 | PRB n+4 |
| 010011 | Subcarriers 3, 4, and 5 in the PRB m4 | 101001 | PRB n+5 |
| 010100 | Subcarriers 6, 7, and 8 in the PRB m4 | 101010 | PRB n and PRB n+1 |
| 010101 | Subcarriers 9, 10, and 11 in the PRB m4 | 101011 | PRB n+2 and PRB n+3. |

**4.** A resource allocation method, comprising:

receiving (301), by a terminal device, downlink control information, wherein the downlink control information comprises resource allocation information, and the resource allocation information indicates a resource allocated to the terminal device; and
sending (302), by the terminal device, data on the resource indicated in the downlink control information; wherein

the resource allocation information comprises $\left\lceil \log_2 \left\lfloor \frac{N_{\text{RB}}^{\text{UL}}}{6} \right\rfloor \right\rceil$ bits, the $\left\lceil \log_2 \left\lfloor \frac{N_{\text{RB}}^{\text{UL}}}{6} \right\rfloor \right\rceil$ bits indicate a narrowband, the narrowband includes six consecutive physical resource blocks, PRBs, in frequency domain, $N_{\text{RB}}^{\text{UL}}$ represents a quantity of uplink PRBs corresponding to a system bandwidth, $\lceil \ \rceil$ represents rounding up, and $\lfloor \ \rfloor$ represents rounding down; and
the resource allocation information further comprises five bits, and the five bits have 32 bit states, wherein

the 32 bit states comprise six bit states, and each of the six bit states indicates that one PRB in the narrowband is allocated to the terminal device; and

the 32 bit states further comprise two bit states, and each of the two bit states indicates that two PRBs in the narrowband are allocated to the terminal device; and

the 32 bit states comprise eight bit states, each of the eight bit states indicates that six subcarriers in a PRB m are allocated to the terminal device, and the PRB m is one of four PRBs configured by using higher layer signaling; and

the 32 bit states comprise 16 bit states, each of the 16 bit states indicates that three subcarriers in a PRB x are allocated to the terminal device, and the PRB x is one of the four PRBs configured by using the higher layer signaling;

wherein the four PRBs configured by using the higher layer signaling are any four PRBs in the system bandwidth;

wherein indices of the six PRBs of the narrowband are n, n+1, n+2, n+3, n+4, and n+5;

wherein indices of the four PRBs configured by using the higher layer signaling are m1, m2, m3, and m4;

wherein n, m1, m2, m3, and m4 are non-negative integers; and

wherein either Table 5 or Table 6 of claim 1 applies.

5. The method according to claim 4, wherein

for the eight bit states, which indicate that six subcarriers in the PRB m are allocated to the terminal device,

states of the $\left\lceil \log_2 \left\lfloor \frac{N_{RB}^{UL}}{6} \right\rfloor \right\rceil$ bits are set to all ones or all zeros; and/or

for the 16 bit states, which indicate that three subcarriers in the PRB x are allocated to the terminal device,

states of the $\left\lceil \log_2 \left\lfloor \frac{N_{RB}^{UL}}{6} \right\rfloor \right\rceil$ bits are set to all ones or all zeros.

6. A resource allocation method, comprising:

receiving (301), by a terminal device, downlink control information, wherein

the downlink control information comprises resource allocation information, and the resource allocation information indicates a resource allocated to the terminal device; and

sending (302), by the terminal device, data on the resource indicated in the downlink control information; wherein

the resource allocation information comprises $\left\lceil \log_2 \left\lfloor \frac{N_{RB}^{UL}}{6} \right\rfloor \right\rceil$ bits, $N_{RB}^{UL}$ represents a quantity of uplink physical resource blocks, PRBs, corresponding to a system bandwidth, ⌈ ⌉ represents rounding up, and ⌊ ⌋

represents rounding down, and the $\left\lceil \log_2 \left\lfloor \frac{N_{RB}^{UL}}{6} \right\rfloor \right\rceil$ bits indicate a narrowband, the narrowband includes six consecutive PRBs in frequency domain, and

the resource allocation information further comprises six bits, and the six bits have 64 bit states, and the 64 bit states comprise six bit states, and each of the six bit states indicates that one PRB in the narrowband is allocated to the terminal device; and

the 64 bit states comprise two bit states, and each of the two bit states indicates that two PRBs in the narrowband are allocated to the terminal device; and

the 64 bit states comprise 12 bit states, each of the 12 bit states indicates that six subcarriers in a PRB k are allocated to the terminal device, the PRB k is one of six PRBs configured by using higher layer signaling, and

states of the $\left\lceil \log_2 \left\lfloor \frac{N_{RB}^{UL}}{6} \right\rfloor \right\rceil$ bits are set to all ones or all zeros; and

the 64 bit states comprise 24 bit states, each of the 24 bit states indicates that three subcarriers in a PRB y are allocated to the terminal device, the PRB y is one of the six PRBs configured by using the higher layer signaling,

$$\left\lceil \log_2 \left\lfloor \frac{N_{\mathrm{RB}}^{\mathrm{UL}}}{6} \right\rfloor \right\rceil$$

and states of the $\left\lceil \log_2 \left\lfloor \frac{N_{\mathrm{RB}}^{\mathrm{UL}}}{6} \right\rfloor \right\rceil$ bits are set to all ones or all zeros;

wherein the six PRBs configured by using the higher layer signaling are any six PRBs in the system bandwidth;
wherein indices of the six PRBs of the narrowband are n, n+1, n+2, n+3, n+4, and n+5;
wherein indices of the six PRBs configured by using the higher layer signaling are m1, m2, m3, m4, m5, and m6;
wherein n, m1, m2, m3, m4, m5, and m6 are non-negative integers; and
wherein either Table 13 or Table 14 of claim 3 applies.

7. A network device configured to carry out the method of any one of claims 1 to 3.

8. A terminal device configured to carry out the method of any one of claims 4 to 6.

9. A computer program comprising instructions to cause a computer of a network device to carry out the method of any one of claims 1 to 3.

10. A computer program comprising instructions to cause a computer of a terminal device to carry out the method of any one of claims 4 to 6.

11. A computer-readable storage medium having stored thereon the computer program of claim 9.

12. A computer-readable storage medium having stored thereon the computer program of claim 10.

**Patentansprüche**

1. Ressourcenzuweisungsverfahren, umfassend:

Bestimmen (201), durch eine Netzwerkvorrichtung, von Downlink-Steuerinformationen, wobei die Downlink-Steuerinformationen Ressourcenzuweisungsinformationen umfassen und die Ressourcenzuweisungsinformationen eine Ressource, die einer Endgerätvorrichtung zugewiesen ist, angeben;
Senden (202), durch die Netzwerkvorrichtung, der Downlink-Steuerinformationen an die Endgerätvorrichtung; und
Empfangen (203), durch die Netzwerkvorrichtung auf der Ressource, die der Endgerätvorrichtung zugewiesen ist, von Daten, die durch die Endgerätvorrichtung gesendet werden; wobei

die Ressourcenzuweisungsinformationen $\left\lceil \log_2 \left\lfloor \frac{N_{RB}^{UL}}{6} \right\rfloor \right\rceil$ Bits umfassen, die $\left\lceil \log_2 \left\lfloor \frac{N_{RB}^{UL}}{6} \right\rfloor \right\rceil$ Bits ein Schmalband angeben, das Schmalband sechs aufeinanderfolgende physikalische Ressourcenblöcke, PRBs, in einem Frequenzbereich beinhaltet, $N_{RB}^{UL}$ eine Anzahl von Uplink-PRBs, die einer Systembandbreite entsprechen, darstellt, $\lceil \ \rceil$ ein Aufrunden darstellt und $\lfloor \ \rfloor$ ein Abrunden darstellt; und
die Ressourcenzuweisungsinformationen ferner fünf Bits umfassen und die fünf Bits 32 Bitzustände aufweisen, wobei
die 32 Bitzustände sechs Bitzustände umfassen und jeder der sechs Bitzustände angibt, dass ein PRB in dem Schmalband der Endgerätvorrichtung zugewiesen ist; und
die 32 Bitzustände ferner zwei Bitzustände umfassen und jeder der zwei Bitzustände angibt, dass zwei PRBs in dem Schmalband der Endgerätvorrichtung zugewiesen sind; und
die 32 Bitzustände acht Bitzustände umfassen, wobei jeder der acht Bitzustände angibt, dass sechs Unterträger in einem PRB m der Endgerätvorrichtung zugewiesen sind und der PRB m einer von vier PRBs, die durch Verwenden einer Signalisierung höherer Schicht konfiguriert sind, ist; und
die 32 Bitzustände 16 Bitzustände umfassen, wobei jeder der 16 Bitzustände angibt, dass drei Unterträger in einem PRB x der Endgerätvorrichtung zugewiesen sind und der PRB x einer der vier PRBs, die durch Verwenden der Signalisierung höherer Schicht konfiguriert sind, ist;
wobei die vier PRBs, die durch Verwenden der Signalisierung höherer Schicht konfiguriert sind, beliebige vier PRBs in der Systembandbreite sind;

wobei Indizes der sechs PRBs des Schmalbandes n, n+1, n+2, n+3, n+4 und n+5 sind;

wobei Indizes der vier PRBs, die durch Verwenden der Signalisierung höherer Schicht konfiguriert sind, m1, m2, m3 und m4 sind;

wobei n, m1, m2, m3 und m4 nicht negative ganze Zahlen sind; und

wobei entweder Tabelle 5 oder Tabelle 6 gilt;

Tabelle 5:

| Zustand der fünf Bits | Zugewiesene Ressource | Zustand der fünf Bits | Zugewiesene Ressource |
|---|---|---|---|
| 00000 | PRB n | 10000 | Unterträger 6, 7 und 8 in dem PRB m2 |
| 00001 | PRB n+1 | 10001 | Unterträger 9, 10 und 11 in dem PRB m2 |
| 00010 | PRB n+2 | 10010 | Unterträger 0, 1, 2, 3, 4 und 5 in dem PRB m2 |
| 00011 | PRB n+3 | 10011 | Unterträger 6, 7, 8, 9, 10 und 11 in dem PRB m2 |
| 00100 | PRB n+4 | 10100 | Unterträger 0, 1 und 2 in dem PRB m3 |
| 00101 | PRB n+5 | 10101 | Unterträger 3, 4 und 5 in dem PRB m3 |
| 00110 | PRB n und PRB n+1 | 10110 | Unterträger 6, 7 und 8 in dem PRB m3 |
| 00111 | PRB n+2 und PRB n+3 | 10111 | Unterträger 9, 10 und 11 in dem PRB m3 |
| 01000 | Unterträger 0, 1 und 2 in dem PRB m1 | 11000 | Unterträger 0, 1, 2, 3, 4 und 5 in dem PRB m3 |
| 01001 | Unterträger 3, 4 und 5 in dem PRB m1 | 11001 | Unterträger 6, 7, 8, 9, 10 und 11 in dem PRB m3 |
| 01010 | Unterträger 6, 7 und 8 in dem PRB m1 | 11010 | Unterträger 0, 1 und 2 in dem PRB m4 |
| 01011 | Unterträger 9, 10 und 11 in dem PRB m1 | 11011 | Unterträger 3, 4 und 5 in dem PRB m4 |
| 01100 | Unterträger 0, 1, 2, 3, 4 und 5 in dem PRB m1 | 11100 | Unterträger 6, 7 und 8 in dem PRB m4 |
| 01101 | Unterträger 6, 7, 8, 9, 10 und 11 in dem PRB m1 | 11101 | Unterträger 9, 10 und 11 in dem PRB m4 |
| 01110 | Unterträger 0, 1 und 2 in dem PRB m2 | 11110 | Unterträger 0, 1, 2, 3, 4 und 5 in dem PRB m4 |
| 01111 | Unterträger 3, 4 und 5 in dem PRB m2 | 11111 | Unterträger 6, 7, 8, 9, 10 und 11 in dem PRB m4 |

Tabelle 6:

| Zustand der fünf Bits | Zugewiesene Ressource | Zustand der fünf Bits | Zugewiesene Ressource |
|---|---|---|---|
| 00000 | Unterträger 0, 1 und 2 in dem PRB m1 | 10000 | Unterträger 0, 1, 2, 3, 4 und 5 in dem PRB m3 |
| 00001 | Unterträger 3, 4 und 5 in dem PRB m1 | 10001 | Unterträger 6, 7, 8, 9, 10 und 11 in dem PRB m3 |
| 00010 | Unterträger 6, 7 und 8 in dem PRB m1 | 10010 | Unterträger 0, 1 und 2 in dem PRB m4 |

(fortgesetzt)

| Zustand der fünf Bits | Zugewiesene Ressource | Zustand der fünf Bits | Zugewiesene Ressource |
|---|---|---|---|
| 00011 | Unterträger 9, 10 und 11 in dem PRB m1 | 10011 | Unterträger 3, 4 und 5 in dem PRB m4 |
| 00100 | Unterträger 0, 1, 2, 3, 4 und 5 in dem PRB m1 | 10100 | Unterträger 6, 7 und 8 in dem PRB m4 |
| 00101 | Unterträger 6, 7, 8, 9, 10 und 11 in dem PRB m1 | 10101 | Unterträger 9, 10 und 11 in dem PRB m4 |
| 00110 | Unterträger 0, 1 und 2 in dem PRB m2 | 10110 | Unterträger 0, 1, 2, 3, 4 und 5 in dem PRB m4 |
| 00111 | Unterträger 3, 4 und 5 in dem PRB m2 | 10111 | Unterträger 6, 7, 8, 9, 10 und 11 in dem PRB m4 |
| 01000 | Unterträger 6, 7 und 8 in dem PRB m2 | 11000 | PRB n |
| 01001 | Unterträger 9, 10 und 11 in dem PRB m2 | 11001 | PRB n+1 |
| 01010 | Unterträger 0, 1, 2, 3, 4 und 5 in dem PRB m2 | 11010 | PRB n+2 |
| 01011 | Unterträger 6, 7, 8, 9, 10 und 11 in dem PRB m2 | 11011 | PRB n+3 |
| 01100 | Unterträger 0, 1 und 2 in dem PRB m3 | 11100 | PRB n+4 |
| 01101 | Unterträger 3, 4 und 5 in dem PRB m3 | 11101 | PRB n+5 |
| 01110 | Unterträger 6, 7 und 8 in dem PRB m3 | 11110 | PRB n und PRB n+1 |
| 01111 | Unterträger 9, 10 und 11 in dem PRB m3 | 11111 | PRB n+2 und PRB n+3. |

**2.** Verfahren nach Anspruch 1, wobei

für die acht Bitzustände, die angeben, dass sechs Unterträger in dem PRB m der Endgerätvorrichtung zuge-wiesen sind, Zustände der $\left\lceil \log_2 \left\lfloor \frac{N_{RB}^{UL}}{6} \right\rfloor \right\rceil$ Bits auf gesamt Einsen oder gesamt Nullen gesetzt werden; und/oder für die 16 Bitzustände, die angeben, dass drei Unterträger in dem PRB x der Endgerätvorrichtung zugewiesen sind, die Zustände der $\left\lceil \log_2 \left\lfloor \frac{N_{RB}^{UL}}{6} \right\rfloor \right\rceil$ Bits auf gesamt Einsen oder gesamt Nullen gesetzt werden.

**3.** Ressourcenzuweisungsverfahren, umfassend:

Bestimmen (201), durch eine Netzwerkvorrichtung, von Downlink-Steuerinformationen, wobei die Downlink-Steuerinformationen Ressourcenzuweisungsinformationen umfassen und die Ressourcenzuweisungsinformationen eine Ressource, die einer Endgerätvorrichtung zugewiesen ist, angeben; Senden (202), durch die Netzwerkvorrichtung, der Downlink-Steuerinformationen an die Endgerätvorrichtung; und Empfangen (203), durch die Netzwerkvorrichtung auf der Ressource, die der Endgerätvorrichtung zugewiesen ist, von Daten, die durch die Endgerätvorrichtung gesendet wurden;

wobei die Ressourcenzuweisungsinformationen $\left\lceil \log_2 \left\lfloor \frac{N_{RB}^{UL}}{6} \right\rfloor \right\rceil$ Bits umfassen, $N_{RB}^{UL}$ eine Anzahl von Uplink-Physikalischen-Ressourcenblöcken, PRBs, die einer Systembandbreite entsprechen, darstellt, ⌈ das Aufrunden darstellt und ⌊ ⌋ das Abrunden darstellt,

wobei die $\left\lceil \log_2 \left\lfloor \frac{N_{RB}^{UL}}{6} \right\rfloor \right\rceil$ Bits ein Schmalband angeben, wobei das Schmalband sechs aufeinanderfolgende PRBs in dem Frequenzbereich beinhaltet und

wobei die Ressourcenzuweisungsinformationen ferner sechs Bits umfassen und die sechs Bits 64 Bitzustände aufweisen und die 64 Bitzustände sechs Bitzustände umfassen, wobei jeder der sechs Bitzustände angibt, dass ein PRB in dem Schmalband der Endgerätvorrichtung zugewiesen ist; und

die 64 Bitzustände ferner zwei Bitzustände umfassen und jeder der zwei Bitzustände angibt, dass zwei PRBs in dem Schmalband der Endgerätvorrichtung zugewiesen sind; und

die 64 Bitzustände ferner 12 Bitzustände umfassen, wobei jeder der 12 Bitzustände angibt, dass sechs Unterträger in einem PRB k der Endgerätvorrichtung zugewiesen sind, der PRB k einer von sechs PRBs, die durch Verwenden der Signalisierung höherer Schicht konfiguriert sind, ist und Zustände der $\left\lceil \log_2 \left\lfloor \frac{N_{RB}^{UL}}{6} \right\rfloor \right\rceil$ Bits auf gesamt Einsen oder gesamt Nullen gesetzt werden; und

die 64 Bitzustände ferner 24 Bitzustände umfassen, wobei jeder der 24 Bitzustände angibt, dass drei Unterträger in einem PRB y der Endgerätvorrichtung zugewiesen sind, der PRB y einer der sechs PRBs, die durch Verwenden der Signalisierung höherer Schicht konfiguriert sind, ist und Zustände der $\left\lceil \log_2 \left\lfloor \frac{N_{RB}^{UL}}{6} \right\rfloor \right\rceil$ Bits auf gesamt Einsen oder gesamt Nullen gesetzt werden;

wobei die sechs PRBs, die durch Verwenden der Signalisierung höherer Schicht konfiguriert sind, beliebige sechs PRBs in der Systembandbreite sind

wobei Indizes der sechs PRBs des Schmalbandes n, n+1, n+2, n+3, n+4 und n+5 sind;

wobei Indizes der sechs PRBs, die durch Verwenden der Signalisierung höherer Schicht konfiguriert sind, m1, m2, m3, m4, m5 und m6 sind;

wobei n, m1, m2, m3, m4, m5 und m6 nicht negative ganze Zahlen sind; und

wobei entweder Tabelle 13 oder Tabelle 14 gilt;

Tabelle 13:

| Zustand der sechs Bits | Zugewiesene Ressource | Zustand der sechs Bits | Zugewiesene Ressource |
|---|---|---|---|
| 000000 | PRB n | 010110 | Unterträger 6, 7 und 8 in dem PRB n+2 |
| 000001 | PRB n+1 | 010111 | Unterträger 9, 10 und 11 in dem PRB m3 |
| 000010 | PRB n+2 | 011000 | Unterträger 0, 1, 2, 3, 4 und 5 in dem PRB m3 |
| 000011 | PRB n+3 | 011001 | Unterträger 6, 7, 8, 9, 10 und 11 in dem PRB m3 |
| 000100 | PRB n+4 | 011010 | Unterträger 0, 1 und 2 in dem PRB m4 |
| 000101 | PRB n+5 | 011011 | Unterträger 3, 4 und 5 in dem PRB m4 |
| 000110 | PRB n und PRB n+1 | 011100 | Unterträger 6, 7 und 8 in dem PRB m4 |
| 000111 | PRB n+2 und PRB n+3 | 011101 | Unterträger 9, 10 und 11 in dem PRB m4 |
| 001000 | Unterträger 0, 1 und 2 in dem PRB m1 | 011110 | Unterträger 0, 1, 2, 3, 4 und 5 in dem PRB m4 |
| 001001 | Unterträger 3, 4 und 5 in dem PRB m1 | 011111 | Unterträger 6, 7, 8, 9, 10 und 11 in dem PRB m4 |
| 001010 | Unterträger 6, 7 und 8 in dem PRB m1 | 100000 | Unterträger 0, 1 und 2 in dem PRB m5 |
| 001011 | Unterträger 9, 10 und 11 in dem PRB m1 | 100001 | Unterträger 3, 4 und 5 in dem PRB m5 |

(fortgesetzt)

| Zustand der sechs Bits | Zugewiesene Ressource | Zustand der sechs Bits | Zugewiesene Ressource |
|---|---|---|---|
| 001100 | Unterträger 0, 1, 2, 3, 4 und 5 in dem PRB m1 | 100010 | Unterträger 6, 7 und 8 in dem PRB m5 |
| 001101 | Unterträger 6, 7, 8, 9, 10 und 11 in dem PRB m1 | 100011 | Unterträger 9, 10 und 11 in dem PRB m5 |
| 001110 | Unterträger 0, 1 und 2 in dem PRB m2 | 100100 | Unterträger 0, 1, 2, 3, 4 und 5 in dem PRB m5 |
| 001111 | Unterträger 3, 4 und 5 in dem PRB m2 | 100101 | Unterträger 6, 7, 8, 9, 10 und 11 in dem PRB m5 |
| 010000 | Unterträger 6, 7 und 8 in dem PRB m2 | 100110 | Unterträger 0, 1 und 2 in dem PRB m6 |
| 010001 | Unterträger 9, 10 und 11 in dem PRB m2 | 100111 | Unterträger 3, 4 und 5 in dem PRB m6 |
| 010010 | Unterträger 0, 1, 2, 3, 4 und 5 in dem PRB m2 | 101000 | Unterträger 6, 7 und 8 in dem PRB m6 |
| 010011 | Unterträger 6, 7, 8, 9, 10 und 11 in dem PRB m2 | 101001 | Unterträger 9, 10 und 11 in dem PRB m6 |
| 010100 | Unterträger 0, 1 und 2 in dem PRB m3 | 101010 | Unterträger 0, 1, 2, 3, 4 und 5 in dem PRB m6 |
| 010101 | Unterträger 3, 4 und 5 in dem PRB m3 | 101011 | Unterträger 6, 7, 8, 9, 10 und 11 in dem PRB m6 |

Tabelle 14:

| Zustand der sechs Bits | Zugewiesene Ressource | Zustand der sechs Bits | Zugewiesene Ressource |
|---|---|---|---|
| 000000 | Unterträger 0, 1 und 2 in dem PRB m1 | 010110 | Unterträger 0, 1, 2, 3, 4 und 5 in dem PRB m4 |
| 000001 | Unterträger 3, 4 und 5 in dem PRB m1 | 010111 | Unterträger 6, 7, 8, 9, 10 und 11 in dem PRB m4 |
| 000010 | Unterträger 6, 7 und 8 in dem PRB m1 | 011000 | Unterträger 0, 1 und 2 in dem PRB m5 |
| 000011 | Unterträger 9, 10 und 11 in dem PRB m1 | 011001 | Unterträger 3, 4 und 5 in dem PRB m5 |
| 000100 | Unterträger 0, 1, 2, 3, 4 und 5 in dem PRB m1 | 011010 | Unterträger 6, 7 und 8 in dem PRB m5 |
| 000101 | Unterträger 6, 7, 8, 9, 10 und 11 in dem PRB m1 | 011011 | Unterträger 9, 10 und 11 in dem PRB m5 |
| 000110 | Unterträger 0, 1 und 2 in dem PRB m2 | 011100 | Unterträger 0, 1, 2, 3, 4 und 5 in dem PRB m5 |
| 000111 | Unterträger 3, 4 und 5 in dem PRB m2 | 011101 | Unterträger 6, 7, 8, 9, 10 und 11 in dem PRB m5 |
| 001000 | Unterträger 6, 7 und 8 in dem PRB m2 | 011110 | Unterträger 0, 1 und 2 in dem PRB m6 |
| 001001 | Unterträger 9, 10 und 11 in dem PRB m2 | 011111 | Unterträger 3, 4 und 5 in dem PRB m6 |

(fortgesetzt)

| Zustand der sechs Bits | Zugewiesene Ressource | Zustand der sechs Bits | Zugewiesene Ressource |
|---|---|---|---|
| 001010 | Unterträger 0, 1, 2, 3, 4 und 5 in dem PRB m2 | 100000 | Unterträger 6, 7 und 8 in dem PRB m6 |
| 001011 | Unterträger 6, 7, 8, 9, 10 und 11 in dem PRB m2 | 100001 | Unterträger 9, 10 und 11 in dem PRB m6 |
| 001100 | Unterträger 0, 1 und 2 in dem PRB m3 | 100010 | Unterträger 0, 1, 2, 3, 4 und 5 in dem PRB m6 |
| 001101 | Unterträger 3, 4 und 5 in dem PRB m3 | 100011 | Unterträger 6, 7, 8, 9, 10 und 11 in dem PRB m6 |
| 001110 | Unterträger 6, 7 und 8 in dem PRB m3 | 100100 | PRB n |
| 001111 | Unterträger 9, 10 und 11 in dem PRB m3 | 100101 | PRB n+1 |
| 010000 | Unterträger 0, 1, 2, 3, 4 und 5 in dem PRB m3 | 100110 | PRB n+2 |
| 010001 | Unterträger 6, 7, 8, 9, 10 und 11 in dem PRB m3 | 100111 | PRB n+3 |
| 010010 | Unterträger 0, 1 und 2 in dem PRB m4 | 101000 | PRB n+4 |
| 010011 | Unterträger 3, 4 und 5 in dem PRB m4 | 101001 | PRB n+5 |
| 010100 | Unterträger 6, 7 und 8 in dem PRB m4 | 101010 | PRB n und PRB n+1 |
| 010101 | Unterträger 9, 10 und 11 in dem PRB m4 | 101011 | PRB n+2 und PRB n+3. |

4. Ressourcenzuweisungsverfahren, umfassend:

Empfangen (301), durch eine Endgerätvorrichtung, von Downlink-Steuerinformationen, wobei die Downlink-Steuerinformationen Ressourcenzuweisungsinformationen umfassen und die Ressourcenzuweisungsinformationen eine Ressource, die der Endgerätvorrichtung zugewiesen ist, angeben; und
Senden (302) durch die Endgerätvorrichtung, von Daten auf der Ressource, die in den Downlink-Steuerinformationen angegeben ist; wobei

die Ressourcenzuweisungsinformationen $\left\lceil \log_2 \left\lfloor \frac{N_{RB}^{UL}}{6} \right\rfloor \right\rceil$ Bits umfassen, die $\left\lceil \log_2 \left\lfloor \frac{N_{RB}^{UL}}{6} \right\rfloor \right\rceil$ Bits ein Schmalband angeben, das Schmalband sechs aufeinanderfolgende physikalische Ressourcenblöcke, PRBs, in dem Frequenzbereich beinhaltet, $N_{RB}^{UL}$ eine Anzahl von Uplink-PRBs, die einer Systembandbreite entsprechen, darstellt, ⌈ ⌉ das Aufrunden darstellt und ⌊ ⌋ das Abrunden darstellt; und
die Ressourcenzuweisungsinformationen ferner fünf Bits umfassen und die fünf Bits 32 Bitzustände aufweisen, wobei
die 32 Bitzustände sechs Bitzustände umfassen und jeder der sechs Bitzustände angibt, dass ein PRB in dem Schmalband der Endgerätvorrichtung zugewiesen ist; und
die 32 Bitzustände ferner zwei Bitzustände umfassen und jeder der zwei Bitzustände angibt, dass zwei PRBs in dem Schmalband der Endgerätvorrichtung zugewiesen sind; und
die 32 Bitzustände acht Bitzustände umfassen, wobei jeder der acht Bitzustände angibt, dass sechs Unterträger in einem PRB m der Endgerätvorrichtung zugewiesen sind und der PRB m einer von vier PRBs, die durch Verwenden einer Signalisierung höherer Schicht konfiguriert sind, ist; und
die 32 Bitzustände 16 Bitzustände umfassen, wobei jeder der 16 Bitzustände angibt, dass drei Unterträger in einem PRB x der Endgerätvorrichtung zugewiesen sind und der PRB x einer der vier PRBs, die durch Verwenden der Signalisierung höherer Schicht konfiguriert sind, ist;
wobei die vier PRBs, die durch Verwenden der Signalisierung höherer Schicht konfiguriert sind, beliebige vier PRBs in der Systembandbreite sind;
wobei Indizes der sechs PRBs des Schmalbandes n, n+1, n+2, n+3, n+4 und n+5 sind;
wobei Indizes der vier PRBs, die durch Verwenden der Signalisierung höherer Schicht konfiguriert sind, m1, m2, m3 und m4 sind;
wobei n, m1, m2, m3 und m4 nicht negative ganze Zahlen sind; und
wobei entweder Tabelle 5 oder Tabelle 6 von Anspruch 1 gilt.

5. Verfahren nach Anspruch 4, wobei

für die acht Bitzustände, die angeben, dass sechs Unterträger in dem PRB m der Endgerätvorrichtung zuge-wiesen sind, Zustände der $\left\lceil \log_2 \left\lfloor \frac{N_{RB}^{UL}}{6} \right\rfloor \right\rceil$ Bits auf gesamt Einsen oder gesamt Nullen gesetzt werden; und/oder

für die 16 Bitzustände, die angeben, dass drei Unterträger in dem PRB x der Endgerätvorrichtung zugewiesen sind, die Zustände der $\left\lceil \log_2 \left\lfloor \frac{N_{RB}^{UL}}{6} \right\rfloor \right\rceil$ Bits auf gesamt Einsen oder gesamt Nullen gesetzt werden.

6. Ressourcenzuweisungsinformationen, umfassend:

Empfangen (301), durch eine Endgerätvorrichtung, von Downlink-Steuerinformationen, wobei
die Downlink-Steuerinformationen Ressourcenzuweisungsinformationen umfassen und die Ressourcenzuweisungsinformationen eine Ressource, die der Endgerätvorrichtung zugewiesen ist, angeben; und
Senden (302) durch die Endgerätvorrichtung, von Daten auf der Ressource, die in den Downlink-Steuerinformationen angegeben ist; wobei

die Ressourcenzuweisungsinformationen $\left\lceil \log_2 \left\lfloor \frac{N_{RB}^{UL}}{6} \right\rfloor \right\rceil$ Bits umfassen, $N_{RB}^{UL}$ eine Anzahl von Uplink-Physikalischen-Ressourcenblöcken, PRBs, die einer Systembandbreite entsprechen, ⌈ das Aufrunden darstellt und

⌊⌋ das Abrunden darstellt und die $\left\lceil \log_2 \left\lfloor \frac{N_{RB}^{UL}}{6} \right\rfloor \right\rceil$ Bits ein Schmalband angeben, wobei das Schmalband sechs aufeinanderfolgende PRBs in dem Frequenzbereich beinhaltet und
die Ressourcenzuweisungsinformationen ferner sechs Bits umfassen und die sechs Bits 64 Bitzustände aufweisen und die 64 Bitzustände sechs Bitzustände umfassen und jeder der sechs Bitzustände angibt, dass ein PRB in dem Schmalband der Endgerätvorrichtung zugewiesen ist; und
die 64 Bitzustände zwei Bitzustände umfassen und jeder der zwei Bitzustände angibt, dass zwei PRBs in dem Schmalband der Endgerätvorrichtung zugewiesen sind; und
die 64 Bitzustände 12 Bitzustände umfassen, wobei jeder der 12 Bitzustände angibt, dass sechs Unterträger in einem PRB k der Endgerätvorrichtung zugewiesen sind, der PRB k einer von sechs PRBs, die durch Verwenden der Signalisierung höherer Schicht konfiguriert sind, ist und Zustände der $\left\lceil \log_2 \left\lfloor \frac{N_{RB}^{UL}}{6} \right\rfloor \right\rceil$ Bits auf gesamt Einsen oder gesamt Nullen gesetzt werden; und
die 64 Bitzustände 24 Bitzustände umfassen, wobei jeder der 24 Bitzustände angibt, dass drei Unterträger in einem PRB y der Endgerätvorrichtung zugewiesen sind, der PRB y einer der sechs PRBs, die durch Verwenden der Signalisierung höherer Schicht konfiguriert sind, ist und Zustände von den $\left\lceil \log_2 \left\lfloor \frac{N_{RB}^{UL}}{6} \right\rfloor \right\rceil$ Bits auf gesamt Einsen oder gesamt Nullen gesetzt werden;
wobei die sechs PRBs, die durch Verwenden der Signalisierung höherer Schicht konfiguriert sind, beliebige sechs PRBs in der Systembandbreite sind;
wobei Indizes der sechs PRBs des Schmalbandes n, n+1, n+2, n+3, n+4 und n+5 sind;
wobei Indizes der sechs PRBs, die durch Verwenden der Signalisierung höherer Schicht konfiguriert sind, m1, m2, m3, m4, m5 und m6 sind;
wobei n, m1, m2, m3, m4, m5 und m6 nicht negative ganze Zahlen sind; und
wobei entweder Tabelle 13 oder Tabelle 14 von Anspruch 3 gilt.

**7.** Netzwerkvorrichtung, die konfiguriert ist, um das Verfahren nach einem der Ansprüche 1 bis 3 auszuführen.

**8.** Endgerätvorrichtung, die konfiguriert ist, um das Verfahren nach einem der Ansprüche 4 bis 6 auszuführen.

**9.** Computerprogramm, umfassend Anweisungen, um einen Computer einer Netzwerkvorrichtung zu veranlassen, das Verfahren nach einem der Ansprüche 1 bis 3 auszuführen.

**10.** Computerprogramm, umfassend Anweisungen, um einen Computer einer Endgerätvorrichtung zu veranlassen, das Verfahren nach einem der Ansprüche 4 bis 6 auszuführen.

**11.** Computerlesbares Speichermedium, das darauf gespeichert das Computerprogramm nach Anspruch 9 aufweist.

**12.** Computerlesbares Speichermedium, das darauf gespeichert das Computerprogramm nach Anspruch 10 aufweist.

**Revendications**

**1.** Procédé d'attribution de ressources, comprenant :

la détermination (201), par un dispositif réseau, d'informations de commande de liaison descendante, dans lequel les informations de commande de liaison descendante comprennent des informations d'attribution de ressources, et les informations d'attribution de ressources indiquent une ressource attribuée à un dispositif terminal ;
l'envoi (202), par le dispositif réseau, des informations de commande de liaison descendante au dispositif terminal ; et
la réception (203), par le dispositif réseau sur la ressource attribuée au dispositif terminal, de données envoyées par le dispositif terminal ; dans lequel

les informations d'attribution de ressources comprennent $\left\lceil \log_2 \left\lfloor \frac{N_{RB}^{UL}}{6} \right\rfloor \right\rceil$ bits, les $\left\lceil \log_2 \left\lfloor \frac{N_{RB}^{UL}}{6} \right\rfloor \right\rceil$ bits indiquent une bande étroite, la bande étroite comporte six blocs de ressources physiques, PRB, consécutifs dans le domaine fréquentiel, $N_{RB}^{UL}$ représente une quantité de PRB de liaison montante correspondant à une bande passante de système, $\lceil \ \rceil$ représente un arrondissement vers le haut, et $\lfloor \ \rfloor$ représente un arrondissement vers le bas ; et
les informations d'attribution de ressources comprennent en outre cinq bits, et les cinq bits ont des états de 32 bits, dans lequel
les états de 32 bits comprennent des états de six bits, et chacun des états de six bits indique qu'un PRB dans la bande étroite est attribué au dispositif terminal ; et
les états de 32 bits comprennent en outre des états de deux bits, et chacun des états de deux bits indique que deux PRB dans la bande étroite sont attribués au dispositif terminal ; et
les états de 32 bits comprennent des états de huit bits, chacun des états de huit bits indique que six sous-porteuses dans un PRB m sont attribuées au dispositif terminal, et le PRB m est l'un des quatre PRB conçus à l'aide d'une signalisation de couche supérieure ; et
les états de 32 bits comprennent des états de 16 bits, chacun des états de 16 bits indique que trois sous-porteuses dans un PRB x sont attribuées au dispositif terminal, et le PRB x est l'un des quatre PRB conçus à l'aide de la signalisation de couche supérieure ;
dans lequel les quatre PRB conçus à l'aide de la signalisation de couche supérieure sont quatre PRB quelconques dans la largeur de bande de système ;
dans lequel les indices des six PRB de la bande étroite sont n, n + 1, n + 2, n + 3, n + 4 et n + 5 ;
dans lequel les indices des quatre PRB conçus à l'aide de la signalisation de couche supérieure sont m1, m2, m3 et m4 ;
dans lequel n, m1, m2, m3 et m4 sont des entiers non négatifs ; et
dans lequel le tableau 5 ou le tableau 6 s'applique ;

Tableau 5 :

| État des cinq bits | Ressource attribuée | État des cinq bits | Ressource attribuée |
|---|---|---|---|
| 00000 | PRB n | 10000 | Sous-porteuses 6, 7 et 8 dans le PRB m2 |
| 00001 | PRB n + 1 | 10001 | Sous-porteuses 9, 10 et 11 dans le PRB m2 |
| 00010 | PRB n + 2 | 10010 | Sous-porteuses 0, 1, 2, 3, 4 et 5 dans le PRB m2 |
| 00011 | PRB n + 3 | 10011 | Sous-porteuses 6, 7, 8, 9, 10 et 11 dans le PRB m2 |
| 00100 | PRB n + 4 | 10100 | Sous-porteuses 0, 1 et 2 dans le PRB m3 |
| 00101 | PRB n + 5 | 10101 | Sous-porteuses 3, 4 et 5 dans le PRB m3 |
| 00110 | PRB n et PRB n + 1 | 10110 | Sous-porteuses 6, 7 et 8 dans le PRB m3 |
| 00111 | PRB n + 2 et PRB n + 3 | 10111 | Sous-porteuses 9, 10 et 11 dans le PRB m3 |
| 01000 | Sous-porteuses 0, 1 et 2 dans le PRB m1 | 11000 | Sous-porteuses 0, 1, 2, 3, 4 et 5 dans le PRB m3 |
| 01001 | Sous-porteuses 3, 4 et 5 dans le PRB m1 | 11001 | Sous-porteuses 6, 7, 8, 9, 10 et 11 dans le PRB m3 |
| 01010 | Sous-porteuses 6, 7 et 8 dans le PRB m1 | 11010 | Sous-porteuses 0, 1 et 2 dans le PRB m4 |
| 01011 | Sous-porteuses 9, 10 et 11 dans le PRB m1 | 11011 | Sous-porteuses 3, 4 et 5 dans le PRB m4 |
| 01100 | Sous-porteuses 0, 1, 2, 3, 4 et 5 dans le PRB m1 | 11100 | Sous-porteuses 6, 7 et 8 dans le PRB m4 |
| 01101 | Sous-porteuses 6, 7, 8, 9, 10 et 11 dans le PRB m1 | 11101 | Sous-porteuses 9, 10 et 11 dans le PRB m4 |
| 01110 | Sous-porteuses 0, 1 et 2 dans le PRB m2 | 11110 | Sous-porteuses 0, 1, 2, 3, 4 et 5 dans le PRB m4 |
| 01111 | Sous-porteuses 3, 4 et 5 dans le PRB m2 | 11111 | Sous-porteuses 6, 7, 8, 9, 10 et 11 dans le PRB m4 |

Tableau 6 :

| État des cinq bits | Ressource attribuée | État des cinq bits | Ressource attribuée |
|---|---|---|---|
| 00000 | Sous-porteuses 0, 1 et 2 dans le PRB m1 | 10000 | Sous-porteuses 0, 1, 2, 3, 4 et 5 dans le PRB m3 |
| 00001 | Sous-porteuses 3, 4 et 5 dans le PRB m1 | 10001 | Sous-porteuses 6, 7, 8, 9, 10 et 11 dans le PRB m3 |
| 00010 | Sous-porteuses 6, 7 et 8 dans le PRB m1 | 10010 | Sous-porteuses 0, 1 et 2 dans le PRB m4 |

(suite)

| État des cinq bits | Ressource attribuée | État des cinq bits | Ressource attribuée |
|---|---|---|---|
| 00011 | Sous-porteuses 9, 10 et 11 dans le PRB m1 | 10011 | Sous-porteuses 3, 4 et 5 dans le PRB m4 |
| 00100 | Sous-porteuses 0, 1, 2, 3, 4 et 5 dans le PRB m1 | 10100 | Sous-porteuses 6, 7 et 8 dans le PRB m4 |
| 00101 | Sous-porteuses 6, 7, 8, 9, 10 et 11 dans le PRB m1 | 10101 | Sous-porteuses 9, 10 et 11 dans le PRB m4 |
| 00110 | Sous-porteuses 0, 1 et 2 dans le PRB m2 | 10110 | Sous-porteuses 0, 1, 2, 3, 4 et 5 dans le PRB m4 |
| 00111 | Sous-porteuses 3, 4 et 5 dans le PRB m2 | 10111 | Sous-porteuses 6, 7, 8, 9, 10 et 11 dans le PRB m4 |
| 01000 | Sous-porteuses 6, 7 et 8 dans le PRB m2 | 11000 | PRB n |
| 01001 | Sous-porteuses 9, 10 et 11 dans le PRB m2 | 11001 | PRB n + 1 |
| 01010 | Sous-porteuses 0, 1, 2, 3, 4 et 5 dans le PRB m2 | 11010 | PRB n + 2 |
| 01011 | Sous-porteuses 6, 7, 8, 9, 10 et 11 dans le PRB m2 | 11011 | PRB n + 3 |
| 01100 | Sous-porteuses 0, 1 et 2 dans le PRB m3 | 11100 | PRB n + 4 |
| 01101 | Sous-porteuses 3, 4 et 5 dans le PRB m3 | 11101 | PRB n + 5 |
| 01110 | Sous-porteuses 6, 7 et 8 dans le PRB m3 | 11110 | PRB n et PRB n + 1 |
| 01111 | Sous-porteuses 9, 10 et 11 dans le PRB m3 | 11111 | PRB n + 2 et PRB n + 3. |

**2.** Procédé selon la revendication 1, dans lequel

pour les états de huit bits, qui indiquent que six sous-porteuses dans le PRB m sont attribuées au dispositif terminal, des états des $\left\lceil \log_2 \left\lfloor \frac{N_{RB}^{UL}}{6} \right\rfloor \right\rceil$ bits sont définis tous à un ou tous à zéro ; et/ou
pour les états de 16 bits, qui indiquent que trois sous-porteuses dans le PRB x sont attribuées au dispositif terminal, des états des $\left\lceil \log_2 \left\lfloor \frac{N_{RB}^{UL}}{6} \right\rfloor \right\rceil$ bits sont définis tous à un ou tous à zéro.

**3.** Procédé d'attribution de ressources, comprenant :

la détermination (201), par un dispositif réseau, d'informations de commande de liaison descendante, dans lequel les informations de commande de liaison descendante comprennent des informations d'attribution de ressources, et les informations d'attribution de ressources indiquent une ressource attribuée à un dispositif terminal ;
l'envoi (202), par le dispositif réseau, des informations de commande de liaison descendante au dispositif terminal ; et
la réception (203), par le dispositif réseau sur la ressource attribuée au dispositif terminal, de données envoyées par le dispositif terminal ;

dans lequel les informations d'attribution de ressources comprennent $\left\lceil \log_2 \left\lfloor \frac{N_{RB}^{UL}}{6} \right\rfloor \right\rceil$ bits, $N_{RB}^{UL}$ représente une quantité de blocs de ressources physiques, PRB, de liaison montante correspondant à une bande passante de système, $\lceil \ \rceil$ représente un arrondissement vers le haut, et $\lfloor \ \rfloor$ représente un arrondissement vers le bas,

dans lequel les $\left\lceil \log_2 \left\lfloor \frac{N_{RB}^{UL}}{6} \right\rfloor \right\rceil$ bits indiquent une bande étroite, la bande étroite comporte six PRB consécutifs dans le domaine fréquentiel, et

dans lequel les informations d'attribution de ressources comprennent en outre six bits, et les six bits ont des états de 64 bits, et les états de 64 bits comprennent des états de six bits, chacun des états de six bits indique qu'un PRB dans la bande étroite est attribué au dispositif terminal ; et

les états de 64 bits comprennent en outre des états de deux bits, et chacun des états de deux bits indique que deux PRB dans la bande étroite sont attribués au dispositif terminal ; et

les états de 64 bits comprennent en outre des états de 12 bits, chacun des états de 12 bits indique que six sous-porteuses dans un PRB k sont attribuées au dispositif terminal, le PRB k est l'un des six PRB conçus à l'aide de la signalisation de couche supérieure, et des états des $\left\lceil \log_2 \left\lfloor \frac{N_{RB}^{UL}}{6} \right\rfloor \right\rceil$ bits sont définis tous à un ou tous à zéro ; et

les états de 64 bits comprennent en outre des états de 24 bits, chacun des états de 24 bits indique que trois sous-porteuses dans un PRB y sont attribuées au dispositif terminal, le PRB y est l'un des six PRB conçus à l'aide de la signalisation de couche supérieure, et des états des $\left\lceil \log_2 \left\lfloor \frac{N_{RB}^{UL}}{6} \right\rfloor \right\rceil$ bits sont définis tous à un ou tous à zéro ;

dans lequel les six PRB conçus à l'aide de la signalisation de couche supérieure sont six PRB quelconques dans la bande passante de système

dans lequel les indices des six PRB de la bande étroite sont n, n + 1, n + 2, n + 3, n + 4 et n + 5 ;

dans lequel les indices des six PRB conçus à l'aide de la signalisation de couche supérieure sont m1, m2, m3, m4, m5 et m6 ;

dans lequel n, m1, m2, m3, m4, m5 et m6 sont des entiers non négatifs ; et

dans lequel le tableau 13 ou le tableau 14 s'applique ;

Tableau 13 :

| État des six bits | Ressource attribuée | État des six bits | Ressource attribuée |
|---|---|---|---|
| 000000 | PRB n | 010110 | Sous-porteuses 6, 7 et 8 dans le PRB n + 2 |
| 000001 | PRB n + 1 | 010111 | Sous-porteuses 9, 10 et 11 dans le PRB m3 |
| 000010 | PRB n + 2 | 011000 | Sous-porteuses 0, 1, 2, 3, 4 et 5 dans le PRB m3 |
| 000011 | PRB n + 3 | 011001 | Sous-porteuses 6, 7, 8, 9, 10 et 11 dans le PRB m3 |
| 000100 | PRB n + 4 | 011010 | Sous-porteuses 0, 1 et 2 dans le PRB m4 |
| 000101 | PRB n + 5 | 011011 | Sous-porteuses 3, 4 et 5 dans le PRB m4 |
| 000110 | PRB n et PRB n + 1 | 011100 | Sous-porteuses 6, 7 et 8 dans le PRB m4 |
| 000111 | PRB n + 2 et PRB n + 3 | 011101 | Sous-porteuses 9, 10 et 11 dans le PRB m4 |
| 001000 | Sous-porteuses 0, 1 et 2 dans le PRB m1 | 011110 | Sous-porteuses 0, 1, 2, 3, 4 et 5 dans le PRB m4 |

(suite)

| État des six bits | Ressource attribuée | État des six bits | Ressource attribuée |
|---|---|---|---|
| 001001 | Sous-porteuses 3, 4 et 5 dans le PRB m1 | 011111 | Sous-porteuses 6, 7, 8, 9, 10 et 11 dans le PRB m4 |
| 001010 | Sous-porteuses 6, 7 et 8 dans le PRB m1 | 100000 | Sous-porteuses 0, 1 et 2 dans le PRB m5 |
| 001011 | Sous-porteuses 9, 10 et 11 dans le PRB m1 | 100001 | Sous-porteuses 3, 4 et 5 dans le PRB m5 |
| 001100 | Sous-porteuses 0, 1, 2, 3, 4 et 5 dans le PRB m1 | 100010 | Sous-porteuses 6, 7 et 8 dans le PRB m5 |
| 001101 | Sous-porteuses 6, 7, 8, 9, 10 et 11 dans le PRB m1 | 100011 | Sous-porteuses 9, 10 et 11 dans le PRB m5 |
| 001110 | Sous-porteuses 0, 1 et 2 dans le PRB m2 | 100100 | Sous-porteuses 0, 1, 2, 3, 4 et 5 dans le PRB m5 |
| 001111 | Sous-porteuses 3, 4 et 5 dans le PRB m2 | 100101 | Sous-porteuses 6, 7, 8, 9, 10 et 11 dans le PRB m5 |
| 010000 | Sous-porteuses 6, 7 et 8 dans le PRB m2 | 100110 | Sous-porteuses 0, 1 et 2 dans le PRB m6 |
| 010001 | Sous-porteuses 9, 10 et 11 dans le PRB m2 | 100111 | Sous-porteuses 3, 4 et 5 dans le PRB m6 |
| 010010 | Sous-porteuses 0, 1, 2, 3, 4 et 5 dans le PRB m2 | 101000 | Sous-porteuses 6, 7 et 8 dans le PRB m6 |
| 010011 | Sous-porteuses 6, 7, 8, 9, 10 et 11 dans le PRB m2 | 101001 | Sous-porteuses 9, 10 et 11 dans le PRB m6 |
| 010100 | Sous-porteuses 0, 1 et 2 dans le PRB m3 | 101010 | Sous-porteuses 0, 1, 2, 3, 4 et 5 dans le PRB m6 |
| 010101 | Sous-porteuses 3, 4 et 5 dans le PRB m3 | 101011 | Sous-porteuses 6, 7, 8, 9, 10 et 11 dans le PRB m6 |

Tableau 14 :

| État des six bits | Ressource attribuée | État des six bits | Ressource attribuée |
|---|---|---|---|
| 000000 | Sous-porteuses 0, 1 et 2 dans le PRB m1 | 010110 | Sous-porteuses 0, 1, 2, 3, 4 et 5 dans le PRB m4 |
| 000001 | Sous-porteuses 3, 4 et 5 dans le PRB m1 | 010111 | Sous-porteuses 6, 7, 8, 9, 10 et 11 dans le PRB m4 |
| 000010 | Sous-porteuses 6, 7 et 8 dans le PRB m1 | 011000 | Sous-porteuses 0, 1 et 2 dans le PRB m5 |
| 000011 | Sous-porteuses 9, 10 et 11 dans le PRB m1 | 011001 | Sous-porteuses 3, 4 et 5 dans le PRB m5 |
| 000100 | Sous-porteuses 0, 1, 2, 3, 4 et 5 dans le PRB m1 | 011010 | Sous-porteuses 6, 7 et 8 dans le PRB m5 |
| 000101 | Sous-porteuses 6, 7, 8, 9, 10 et 11 dans le PRB m1 | 011011 | Sous-porteuses 9, 10 et 11 dans le PRB m5 |
| 000110 | Sous-porteuses 0, 1 et 2 dans le PRB m2 | 011100 | Sous-porteuses 0, 1, 2, 3, 4 et 5 dans le PRB m5 |

(suite)

| État des six bits | Ressource attribuée | État des six bits | Ressource attribuée |
|---|---|---|---|
| 000111 | Sous-porteuses 3, 4 et 5 dans le PRB m2 | 011101 | Sous-porteuses 6, 7, 8, 9, 10 et 11 dans le PRB m5 |
| 001000 | Sous-porteuses 6, 7 et 8 dans le PRB m2 | 011110 | Sous-porteuses 0, 1 et 2 dans le PRB m6 |
| 001001 | Sous-porteuses 9, 10 et 11 dans le PRB m2 | 011111 | Sous-porteuses 3, 4 et 5 dans le PRB m6 |
| 001010 | Sous-porteuses 0, 1, 2, 3, 4 et 5 dans le PRB m2 | 100000 | Sous-porteuses 6, 7 et 8 dans le PRB m6 |
| 001011 | Sous-porteuses 6, 7, 8, 9, 10 et 11 dans le PRB m2 | 100001 | Sous-porteuses 9, 10 et 11 dans le PRB m6 |
| 001100 | Sous-porteuses 0, 1 et 2 dans le PRB m3 | 100010 | Sous-porteuses 0, 1, 2, 3, 4 et 5 dans le PRB m6 |
| 001101 | Sous-porteuses 3, 4 et 5 dans le PRB m3 | 100011 | Sous-porteuses 6, 7, 8, 9, 10 et 11 dans le PRB m6 |
| 001110 | Sous-porteuses 6, 7 et 8 dans le PRB m3 | 100100 | PRB n |
| 001111 | Sous-porteuses 9, 10 et 11 dans le PRB m3 | 100101 | PRB n + 1 |
| 010000 | Sous-porteuses 0, 1, 2, 3, 4 et 5 dans le PRB m3 | 100110 | PRB n + 2 |
| 010001 | Sous-porteuses 6, 7, 8, 9, 10 et 11 dans le PRB m3 | 100111 | PRB n + 3 |
| 010010 | Sous-porteuses 0, 1 et 2 dans le PRB m4 | 101000 | PRB n + 4 |
| 010011 | Sous-porteuses 3, 4 et 5 dans le PRB m4 | 101001 | PRB n + 5 |
| 010100 | Sous-porteuses 6, 7 et 8 dans le PRB m4 | 101010 | PRB n et PRB n + 1 |
| 010101 | Sous-porteuses 9, 10 et 11 dans le PRB m4 | 101011 | PRB n + 2 et PRB n + 3. |

**4.** Procédé d'attribution de ressources, comprenant :

la réception (301), par un dispositif terminal, d'informations de commande de liaison descendante, dans lequel les informations de commande de liaison descendante comprennent des informations d'attribution de ressources, et les informations d'attribution de ressources indiquent une ressource attribuée au dispositif terminal ; et l'envoi (302), par le dispositif terminal, de données sur la ressource indiquée dans les informations de commande de liaison descendante ; dans lequel

les informations d'attribution de ressources comprennent $\left\lceil \log_2 \left\lfloor \frac{N_{RB}^{UL}}{6} \right\rfloor \right\rceil$ bits, les $\left\lceil \log_2 \left\lfloor \frac{N_{RB}^{UL}}{6} \right\rfloor \right\rceil$ bits indiquent une bande étroite, la bande étroite comporte six blocs de ressources physiques, PRB, consécutifs dans le domaine fréquentiel, $N_{RB}^{UL}$ représente une quantité de PRB de liaison montante correspondant à une bande passante de système, $\lceil \rceil$ représente un arrondissement vers le haut, et $\lfloor \rfloor$ représente un arrondissement vers le bas ; et

les informations d'attribution de ressources comprennent en outre cinq bits, et les cinq bits ont des états de 32 bits, dans lequel

les états de 32 bits comprennent des états de six bits, et chacun des états de six bits indique qu'un PRB dans la bande étroite est attribué au dispositif terminal ; et

les états de 32 bits comprennent en outre des états de deux bits, et chacun des états de deux bits indique que deux PRB dans la bande étroite sont attribués au dispositif terminal ; et

les états de 32 bits comprennent des états de huit bits, chacun des états de huit bits indique que six sous-porteuses dans un PRB m sont attribuées au dispositif terminal, et le PRB m est l'un des quatre PRB conçus à l'aide d'une signalisation de couche supérieure ; et

les états de 32 bits comprennent des états de 16 bits, chacun des états de 16 bits indique que trois sous-porteuses dans un PRB x sont attribuées au dispositif terminal, et le PRB x est l'un des quatre PRB conçus à l'aide de la signalisation de couche supérieure ;

dans lequel les quatre PRB conçus à l'aide de la signalisation de couche supérieure sont quatre PRB quelconques dans la largeur de bande de système ;

dans lequel les indices des six PRB de la bande étroite sont n, n + 1, n + 2, n + 3, n + 4 et n + 5 ;

dans lequel les indices des quatre PRB conçus à l'aide de la signalisation de couche supérieure sont m1, m2, m3 et m4 ;

dans lequel n, m1, m2, m3 et m4 sont des entiers non négatifs ; et

dans lequel le tableau 5 ou le tableau 6 selon la revendication 1 s'applique.

**5.** Procédé selon la revendication 4, dans lequel

pour les états de huit bits, qui indiquent que six sous-porteuses dans le PRB m sont attribuées au dispositif terminal, des états des $\left\lceil \log_2 \left\lfloor \frac{N_{RB}^{UL}}{6} \right\rfloor \right\rceil$ bits sont définis tous à un ou tous à zéro ; et/ou

pour les états de 16 bits, qui indiquent que trois sous-porteuses dans le PRB x sont attribuées au dispositif terminal, les états des $\left\lceil \log_2 \left\lfloor \frac{N_{RB}^{UL}}{6} \right\rfloor \right\rceil$ bits sont définis tous à un ou tous à zéro.

**6.** Procédé d'attribution de ressources, comprenant :

la réception (301), par un dispositif terminal, d'informations de commande de liaison descendante, dans lequel les informations de commande de liaison descendante comprennent des informations d'attribution de ressources, et les informations d'attribution de ressources indiquent une ressource attribuée au dispositif terminal ; et l'envoi (302), par le dispositif terminal, de données sur la ressource indiquée dans les informations de commande de liaison descendante ; dans lequel

les informations d'attribution de ressources comprennent $\left\lceil \log_2 \left\lfloor \frac{N_{RB}^{UL}}{6} \right\rfloor \right\rceil$ bits, $N_{RB}^{UL}$ représente une quantité de blocs de ressources physiques, PRB, de liaison montante correspondant à une bande passante de système, $\lceil \ \rceil$ représente un arrondissement vers le haut, et $\lfloor \ \rfloor$ représente un arrondissement vers le bas, et les $\left\lceil \log_2 \left\lfloor \frac{N_{RB}^{UL}}{6} \right\rfloor \right\rceil$ bits indiquent une bande étroite, la bande étroite comporte six PRB consécutifs dans le domaine fréquentiel, et

les informations d'attribution de ressources comprennent en outre six bits, et les six bits ont des états de 64 bits, et les états de 64 bits comprennent des états de six bits, et chacun des états de six bits indique qu'un PRB dans la bande étroite est attribué au dispositif terminal ; et

les états de 64 bits comprennent des états de deux bits, et chacun des états de deux bits indique que deux PRB dans la bande étroite sont attribués au dispositif terminal ; et

les états de 64 bits comprennent des états de 12 bits, chacun des états de 12 bits indique que six sous-porteuses dans un PRB k sont attribuées au dispositif terminal, le PRB k est l'un des six PRB conçus à l'aide de la signalisation de couche supérieure, et les états des $\left\lceil \log_2 \left\lfloor \frac{N_{RB}^{UL}}{6} \right\rfloor \right\rceil$ bits sont définis tous à un ou tous à zéro ; et

les états de 64 bits comprennent des états de 24 bits, chacun des états de 24 bits indique que trois sous-porteuses dans un PRB y sont attribuées au dispositif terminal, le PRB y est l'un des six PRB conçus à l'aide de la signalisation de couche supérieure, et les états des $\left\lceil \log_2 \left\lfloor \frac{N_{RB}^{UL}}{6} \right\rfloor \right\rceil$ bits sont définis tous à un ou tous à zéro ;

dans lequel les six PRB conçus à l'aide de la signalisation de couche supérieure sont six PRB quelconques dans la largeur de bande de système ;

dans lequel les indices des six PRB de la bande étroite sont n, n + 1, n + 2, n + 3, n + 4 et n + 5 ;

dans lequel les indices des six PRB conçus à l'aide de la signalisation de couche supérieure sont m1, m2, m3, m4, m5 et m6 ;

dans lequel n, m1, m2, m3, m4, m5 et m6 sont des entiers non négatifs ; et

dans lequel le tableau 13 ou le tableau 14 selon la revendication 3 s'applique.

7. Dispositif réseau configuré pour exécuter le procédé selon l'une quelconque des revendications 1 à 3.

8. Dispositif terminal configuré pour exécuter le procédé selon l'une quelconque des revendications 4 à 6.

9. Programme informatique comprenant des instructions pour amener un ordinateur d'un dispositif réseau à exécuter le procédé selon l'une quelconque des revendications 1 à 3.

10. Programme informatique comprenant des instructions pour amener un ordinateur d'un dispositif terminal à exécuter le procédé selon l'une quelconque des revendications 4 à 6.

11. Support de stockage lisible par ordinateur sur lequel est stocké le programme informatique selon la revendication 9.

12. Support de stockage lisible par ordinateur sur lequel est stocké le programme informatique selon la revendication 10.

FIG. 1

FIG. 2

Terminal
device

Terminal
device

301: Receive downlink control information

302: The terminal device sends data on a resource
indicated in the downlink control information

FIG. 3

Communications
interface / 403

Processor / 401

Memory / 402

Communications device

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QUALCOMM INC.** Increased PUSCH spectral efficiency. *3GPP draft R1-1720420,* 18 November 2017
- Evolved Universal Terrestrial Radio Access (E-UTRA); Multiplexing and channel coding (Release 15). *TS 36.212 of the Technical Specification Group Radio Access Network,* 16 January 2018, vol. RAN WG1 (V15.0.1

- **QUALCOMM INC.** Increased PUSCH spectral efficiency. *3GPP draft R1-1718138,* 08 October 2017
- **SAMSUNG.** Discussion on sub-PRB allocation for eFeMTC. *3GPP draft R1-1720263,* 18 November 2017